(19) **Europäisches Patentamt / European Patent Office / Office européen des brevets**

(11) **EP 4 176 723 B1**

(12) **EUROPEAN PATENT SPECIFICATION**

(45) Date of publication and mention of the grant of the patent:
**11.02.2026 Bulletin 2026/07**

(21) Application number: **21915330.1**

(22) Date of filing: **28.12.2021**

(51) International Patent Classification (IPC):
*A21D 2/18* (2006.01)    *A21D 2/36* (2006.01)
*A23L 5/00* (2016.01)    *A23L 19/00* (2016.01)
*A23L 5/30* (2016.01)    *A23L 7/10* (2016.01)
*A23L 11/00* (2025.01)    *A23L 29/212* (2016.01)

(52) Cooperative Patent Classification (CPC):
**A23L 5/32; A21D 2/18; A21D 2/36; A23L 7/10; A23L 11/00; A23L 11/05; A23L 29/212;** A23L 19/00

(86) International application number:
**PCT/JP2021/048965**

(87) International publication number:
**WO 2022/145472 (07.07.2022 Gazette 2022/27)**

(54) **SWOLLEN COMPOSITION CONTAINING STARCH AND METHOD FOR PRODUCING SAME**

GESCHWOLLENE ZUSAMMENSETZUNG MIT STÄRKE UND VERFAHREN ZUR HERSTELLUNG DAVON

COMPOSITION GONFLÉE CONTENANT DE L'AMIDON ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2020 JP 2020218541**

(43) Date of publication of application:
**10.05.2023 Bulletin 2023/19**

(73) Proprietor: **Mizkan Holdings Co., Ltd.**
**Handa-shi, Aichi 475-8585 (JP)**

(72) Inventors:
- **YAMAMOTO, Eisuke**
  **Handa-shi, Aichi 475-8585 (JP)**
- **MIZUTA, Erika**
  **Handa-shi, Aichi 475-8585 (JP)**

- **TOMITA, Takahiko**
  **Handa-shi, Aichi 475-8585 (JP)**
- **IHARA, Junichiro**
  **Handa-shi, Aichi 475-8585 (JP)**
- **HIBI, Naruhiro**
  **Handa-shi, Aichi 475-8585 (JP)**

(74) Representative: **Hasegawa, Kan**
**Patentanwaltskanzlei Hasegawa**
**Untere Hauptstraße 56**
**85354 Freising (DE)**

(56) References cited:
**WO-A1-2020/045051**    **WO-A1-2020/130062**
**CA-A1- 3 110 151**    **JP-A- 2004 305 054**
**JP-A- 2018 061 480**    **US-A- 5 989 620**

## Description

### TECHNICAL FIELD

The present invention relates to a starch-containing swollen composition and a method for producing the same.

### BACKGROUND ART

When relatively low molecular weight starch is used as the main ingredient in a conventional swollen food, the resulting composition can swell easily and its unique texture can be felt easily, but cannot maintain its swollen state and tends to welt rapidly after heat treatment, resulting in the loss of its texture. On the other hand, if a relatively high molecular weight starch is added to a conventional swollen food, the resulting composition can maintain its swollen state easily, but tends to become so hard that the texture characteristic of a swollen food cannot be fully felt.

As a technology related to such swollen food, Patent Literature 1 (JP2008-061480 A) discloses that when bean flour and rice flour are added to bread at specific ratios instead of wheat-derived gluten, the resulting bread swells sufficiently even without gluten and also exhibits excellent palatability. Patent Literature 2 (JP2008-099096 A) discloses that when a specific cellulose preparation is added to wheat-based swollen food products, the resulting wheat swollen food prevent that are light and soft in texture while having a voluminous feel, while deterioration of the flavor is prevented.

### LIST OF CITATIONS

#### Patent Literature

[Patent Literature 1] JP2018-061480 A
[Patent Literature 2] JP2018-099096 A

### SUMMARY OF INVENTION

### PROBLEM TO BE SOLVED BY THE INVENTION

However, the invention described in Patent Literature 1 involves a problem in that relatively high molecular weight starch contained in rice is hardened by heat treatment, preventing the texture characteristic of swollen food products from being fully felt. The invention described in the Patent Literature 2 is a technique for reinforcing the network structure of wheat-derived gluten in a wheat-based composition with a cellulose preparation, and is not applicable to a starch-based composition, which has a completely different structure.

The present invention has been made in view of the above problems. An objective of this invention is to provide a starch-based swollen composition that maintains its swollen state even after heat treatment and has a unique swollen-food texture.

### MEANS TO SOLVE THE PROBLEM

Through intensive efforts in view of these circumstances, the inventors have found that a starch-based swollen composition is modified by adjusting the dry mass basis moisture content, the degree of gelatinization of starch, and the dietary fiber content to their respective predetermined limits or more, adjusting the ratio of the area under the curve in an interval with molecular weight logarithms 3.5 or more but less than 6.5 to the area under the entire curve (AUC1) on the molecular weight distribution curve ($MWDC_{3.5-8.0}$) of the product obtained by treating the composition in accordance with [Procedure a] to a predetermined limit or more, and adjusting the particle diameter $d_{50}$ of the composition subjected to starch and protein digestion treatment followed by ultrasonication to a predetermined limit or more. The inventors have further found that the thus-obtained starch-based swollen composition maintains its swollen state even after heat treatment and has a unique swollen-food texture, whereby the above-mentioned problem can be solved. Based on these findings, the inventors have completed the following inventions.

The present invention is defined by the claims. Only aspects falling within the scope of the claims are considered as part of the present invention.

[Aspect 1]

A composition comprising pulse and/or cereal except for rice, wheat and barley and satisfying the requirements (1) to (6) and (A) below:

(1) The composition has a starch content of 15 mass % or more in terms of dry mass basis.
(2) The composition has a dry mass basis moisture content of less than 150 mass %, wherein the dry mass basis moisture content is measured by the method described in the description.
(3) The degree of gelatinization of starch in the composition is 50 mass % or more. (4) The composition has a dietary fiber content of 3.0 mass % or more in terms of dry mass basis.
(5) When the composition is subjected to [Procedure a] below and the resulting product is subjected to measurement under [Condition A] below to obtain a molecular weight distribution curve in an interval with molecular weight logarithms of 3.5 or more but less than 8.0 (hereinafter referred to as "MWDC3.s-s.o"), the ratio of the area under the curve in an interval with molecular weight logarithms of 3.5 or more but less than 6.5 to the area under the entire curve (hereinafter referred to as "AUC1") is more than 60%.

[Procedure a] The composition is crushed, and an ethanol-insoluble and dimethyl sulfoxide-soluble component is obtained.
[Condition A] The treated product from the [Procedure a] above is dissolved into 1M aqueous solution of sodium hydroxide at a concentration of 0.30 mass % and allowed to stand at 37 °C for 30 minutes, then combined with an equal volume of water and an equal volume of eluent and subjected to filtration with a 5-um filter, and 5mL of the filtrate is then subjected to gel filtration chromatography, to thereby obtain a molecular weight distribution.

(6) When the composition is subjected to starch and protein digestion treatment defined in [Procedure b] below followed by ultrasonication, and then subjected to measurement for particle diameter distribution, the particle diameter d50 is less than 450[tm.

[Procedure b] 6 mass % aqueous suspension of the composition is treated with 0.4 volume % of protease and 0.02 mass % of $\alpha$-amylase at 20 °C for 3 days.
(A) The composition has a density of less than 1.0 g/cm3.
Wherein the composition is obtainable by a method comprising the steps of:

(i) preparing a dough composition comprising pulse and/or cereal, the dough composition having (1) a starch content of 8.0 mass % or more in terms of wet mass basis, (2) a dry mass basis moisture content of more than 40 mass %, (3) a dietary fiber content of 2.0 mass % or more in terms of wet mass basis, (4) a starch digestion enzyme activity of 0.2 U/g or more in terms of dry mass basis, and (5) according to a particle diameter distribution obtained by subjecting the dough composition to the starch and protein digestion treatment defined in the [Procedure b] above followed by ultrasonication, a particle diameter d50 of less than 450$\mu$m; and
(ii) swelling the dough composition from step (i) via heating treatment, wherein the AUC1 value of the composition increases by 5% or more and the dry mass basis moisture content of the composition increases by 5 mass % or more during the heating treatment.

[Aspect 2]

The composition according to Aspect 1, wherein in the molecular weight distribution curve (MWDC$_{3.5-8.0}$), the ratio of the area under the curve in an interval with molecular weight logarithms of 6.5 or more but less than 8.0 to the area under the entire curve (hereinafter referred to as "AUC2") is 40% or less, or 35% or less, or less than 35%, or less than 30%, or less than 25%, or less than 20%, or less than 15%, or less than 10%, and although the lower limit is not restricted, for example 0% or more, or 3% or more, or 5% or more.

[Aspect 3]

The composition according to Aspect 1 or 2, wherein in the molecular weight distribution curve (MWDC$_{3.5-8.0}$), the ratio of the ratio of the area under the curve in an interval with molecular weight logarithms 3.5 or more but less than 6.5 to the area under the entire curve (AUC1) to the ratio of the area under the curve in an interval with molecular weight logarithms of 6.5 or more but less than 8.0 to the area under the entire curve (AUC2) (hereinafter referred to as "[AUC2]/[AUC1] ratio") is less than 0.68, or less than 0.0, or less than 0.0, or less than 0.0, or less than 0.0, or less than 0.0, or less than 0.0, or less than 0.0, or less than 0.0, or less than 0.0, or less than 0.0, or less than 0.0, or less than 0.0, and although the lower limit is not restricted, for example 0.00 or more, or 0.03 or more, or 0.05 or more.

[Aspect 4]

The composition according to any one of Aspects 1 to 3, wherein when the composition is subjected to the [Procedure a] above and the resulting product is subjected to measurement under the [Condition A] above to obtain a molecular weight distribution curve in an interval with molecular weight logarithms of 6.5 or more but less than 9.5 (hereinafter referred to as "$MWDC_{6.5-9.5}$"), the ratio of the area under the curve in an interval with molecular weight logarithms of 6.5 or more but less than 8.0 to the area under the entire curve (hereinafter referred to as "AUC3") is 30% or more, or 40% or more, or 50% or more, or 60% or more, or 70% or more, or 80% or more, or 90% or more, and although the upper limit is not restricted, for example 100% or less.

[Aspect 5]

The composition according to any one of Aspects 1 to 4, wherein when the composition is subjected to the [Procedure a] above and the resulting product is subjected to measurement under the [Condition A] above to obtain a molecular weight distribution curve in an interval with molecular weight logarithms of 3.5 or more but less than 6.5 (hereinafter referred to as "$MWDC_{3.5-6.5}$"), the ratio of the area under the curve in an interval with molecular weight logarithms 3.5 or more but less than 5.0 to the area under the entire curve (hereinafter referred to as "AUC4") is 8% or more, or 10% or more, or 15% or more, or 20% or more, or 25% or more, or 30% or more, or 35% or more, or 40% or more, or 45% or more, or 50% or more, and although the upper limit is not restricted, for example 100% or less, or 80% or less, or 60% or less.

[Aspect 6]

The composition according to any one of Aspects 1 to 5, wherein when the composition is subjected to the [Procedure a] above and the resulting product is subjected to measurement under the [Condition A] above, the mass average molecular weight logarithm is less than 7.5, or less than 7.7, or less than 6.5, or less than 6.5, and although the lower limit is not restricted, for example more than 5.0, or more than 5.5.

[Aspect 7]

The composition according to any one of Aspects 1 to 6, wherein the composition is subjected to the [Procedure a] above and the resulting product is subjected to separation under the [Condition A] above, and a sample is prepared from a separated fraction with molecular weight logarithms of 5.0 or more but less than 6.5 by adjusting the pH of the fraction to 7.0 and staining one mass part of the fraction with 9 mass parts of iodine solution (0.25mM), the absorbance of the stained product at 660 nm ($ABS_{5.0-6.5}$) is 0.10 or more, or 0.15 or more, or 0.20 or more, or 0.25 or more, or 0.30 or more, or 0.35 or more, or 0.40 or more, or 0.45 or more, or 0.50 or more, or 0.55 or more, or 0.60 or more, or 0.65 or more, or 0.70 or more, or 0.75 or more, or 0.80 or more, and although the upper limit is not restricted, for example 3.00 or less, or 2.50 or less, or 2.00 or less.

[Aspect 8]

The composition according to any one of Aspects 1 to 7, wherein the swollen composition has a total porosity of more than 1%, or more than 2%, or more than 3%, or more than 4%, or more than 5%, or more than 6%, or more than 7%, or more than 8%, or more than 9%, or more than 10%, or more than 11%, or more than 12%, or more than 13%, or more than 14%, or more than 15%, or more than 20%, particularly more than 30%, and although the upper limit is not restricted, for example 90% or less, or 80% or less.

[Aspect 9]

The composition according to any one of Aspects 1 to 8, wherein when the composition is frozen at -25 °C and cut along a cut plane C into a frozen section C with a thickness of 30μm, and the section C is subjected to calcofluor white (CFW) staining and then observed under fluorescence microscope, the average of the longest diameters of CFW-stained sites is less than 450μm, or 400 μm or less, or 350 μm or less, or 300 μm or less, or 250 μm or less, or 200 μm or less, or 150 μm or less, or 100 μm or less, or 80 μm or less, or 60 μm or less, or 50 μm or less, and although the lower limit is not restricted, for example 1 μm or more, or 3 μm or more.

[Aspect 10]

The composition according to Aspect 9, wherein the CFW-stained sites are embedded in iodine-stained sites.

[Aspect 11]

The composition according to any one of Aspects 1 to 10, wherein when the composition is frozen at -25 °C and cut along a cut plane C into a frozen section C with a thickness of $30\mu m$, and the frozen section C is measured under [Condition C] below, at least one of the requirements (c1) to (c3) below is satisfied.

[Condition C] The frozen section of the composition is subjected to imaging mass spectrometry using NANO-PALDI MS (nanoparticle-assisted laser desorption ionization mass spectrometry), using iron oxide nanoparticles coated with $\gamma$-aminopropyl triethoxysilane as an ionization assisting agent.
(c1) A product of an average luminance calculated from a signal intensity at m/z 66.88278 (hereinafter referred to as "$AV_{66.88278}$") and an average luminance calculated from a signal intensity at m/z 80.79346 (hereinafter referred to as "$AV_{80.79346}$") ($AV_{66.88278}$ x $AV_{80.79346}$) is 120 or more, or 150 or more, or 180 or more, or 200 or more, or 220 or more, or 250 or more, or 270 or more, or 300 or more, or 350 or more, or 400 or more, or 450 or more, and although the upper limit is not restricted, for example 3000 or less, or 2000 or less.
(c2) A standard deviation of luminance in a signal intensity dispersion at m/z 66.88278 (hereinafter referred to as "$SD_{66.88278}$") is 16.0 or more, or 18.0 or more, or 19.0 or more, or 20.0 or more, or 22.0 or more, or 24.0 or more, and although the upper limit is not restricted, for example 100 or less, or 80 or less, or 60 or less, or 50 or less.
(c3) A standard deviation of luminance in a signal intensity dispersion at m/z 80.79346 (hereinafter referred to as "$SD_{80.79346}$") is 4.0 or more, or 4.5 or more, or 5.0 or more, or 5.5 or more, or 6.0 or more, or 6.5 or more, or 7.0 or more, or 7.5 or more, or 8.0 or more, or 8.5 or more, or 9.0 or more, and although the upper limit is not restricted, for example 80 or less, or 70 or less, or 60 or less, or 50 or less, or 40 or less.

[Aspect 12]

The composition according to any one of Aspects 1 to 11, wherein when the weighted average perimeter of the pores in the composition is $\alpha$ and the weighted average area of the pores in the composition is $\beta$, the ratio $\alpha/\beta$ is 1.5% or less, or 1.4% or less, or 1.3% or less, or 1.2% or less, or 1.1% or less, or 1.0% or less, or 0.9% or less, or 0.8% or less, or 0.7% or less, or 0.6% or less, or 0.5% or less, and although the lower limit is not restricted, for example 0.00% or more, or 0.005% or more, or 0.01% or more, or 0.02% or more, or 0.03% or more, or 0.04% or more, or 0.05% or more, or 0.10% or more, or 0.15% or more.

[Aspect 13]

The composition according to any one of Aspects 1 to 12, wherein the composition has a density of less than 1.0g/cm$^3$, or less than 0.90g/cm$^3$, or less than 0.80g/cm$^3$, or less than 0.70g/cm$^3$, or less than 0.60g/cm$^3$, and although the lower limit is not restricted, for example more than 0.10g/cm$^3$, or more than 0.15g/cm$^3$, or more than 0.20g/cm$^3$, or more than 0.25g/cm$^3$, or more than 0.30g/cm$^3$.

[Aspect 14]

The composition according to any one of Aspects 1 to 13, wherein the composition satisfies the requirement (7) below.
(7) The requirement(s) (a) and/or (b) below is satisfied.

(a) When 6% suspension of a crushed product of the composition is observed, the number of starch grain structures observed is 300/mm$^2$ or less.
(b) When 14 mass % aqueous slurry of a crushed product of the composition is measured using rapid visco-analyzer with elevating the temperature from 50 °C to 140 °C at a rate of 12.5°C/min, the peak temperature of gelatinization is 95 °C or lower, or 90 °C or lower, or 85 °C or lower, or 80 °C or lower. and although the lower limit is not restricted, for example 50 °C, or more than more than 55 °C, or more than 60 °C.

[Aspect 15]

The composition according to any one of Aspects 1 to 14, wherein the composition has a protein content of 3.0 mass % or more, or 4.0 mass % or more, or 5.0 mass % or more, or 6.0 mass % or more, or 7.0 mass % or more, or 8.0 mass % or more, or 9.0 mass % or more, or 10 mass % or more, or 11 mass % or more, or 12 mass % or more, or 13 mass % or more, or 14 mass % or more, or 15 mass % or more, or 16 mass % or more, or 17 mass % or more, or 18 mass % or more, and although the upper limit is not restricted, for example 40 mass % or less, or 30 mass % or less, or 25 mass % or less, or 20 mass % or less in terms of dry mass basis.

[Aspect 16]

The composition according to any one of Aspects 1 to 15, wherein the composition has a total oil and fat content of 2.0 mass % or more, or 3.0 mass % or more, or 4.0 mass % or more, or 5.0 mass % or more, or 6.0 mass % or more, or 7.0 mass % or more, or 8.0 mass % or more, or 9.0 mass % or more, or 10.0 mass % or more, and although the upper limit is not restricted, for example 70 mass % or less, or 65 mass % or less, or 60 mass % or less, or 55 mass % or less, or 50 mass % or less, or 45 mass % or less, or 40 mass % or less, or 35 mass % or less, or 30 mass % or less in terms of dry mass basis.

[Aspect 17]

The composition according to any one of Aspects 1 to 16, wherein the ratio of the liquid oil and fat content to the total oil and fat content is 20 mass % or more, or 30 mass % or more, or 40 mass % or more, or 50 mass % or more, or 60 mass % or more, or 70 mass % or more, or 80 mass % or more, or 90 mass % or more, and although the upper limit is not restricted, for example 100 mass %, or 100 mass % or less.

[Aspect 18]

The composition according to any one of Aspects 1 to 17, wherein the composition comprises pulse and/or cereal.

[Aspect 19]

The composition according to Aspect 18, wherein the pulse and/or cereal has a dry mass basis moisture content of less than 15 mass %, or less than 13 mass %, or less than 11 mass %, or less than 10 mass %, and although the lower limit is not restricted, for example 0 mass % or more, or 0.01 mass % or more.

[Aspect 20]

The composition according to Aspect 18 or 19, wherein the pulse is matured pulse.

[Aspect 21]

The composition according to any one of Aspects 18 to 20, wherein the pulse is one or more species of pulse selected from Pisum. Phaseolus, Cajanus, Vigna, Vicia, Cicer, Glycine and Lens species.

[Aspect 22]

The composition according to any one of Aspects 18 to 21, wherein the cereal is one or more species of cereal selected from awa (foxtail millet), hie (Japanese millet), kibi (common millet), sorghum, rye, oat, hatomugi (job's tear), corn, buckwheat, amaranthus, and quinoa.

[Aspect 23]

The composition according to any one of Aspects 18 to 22, wherein the pulse and/or cereal is in the form of powder with a particle diameter $d_{90}$ of less than 500 $\mu$m, or 450 $\mu$m or less, or 400 $\mu$m or less, or 350 $\mu$m or less, or 300 $\mu$m or less, or 275 $\mu$m or less, or 250 $\mu$m or less, or 225 $\mu$m or less, or 200 $\mu$m or less, or 175 $\mu$m or less, or 150 $\mu$m or less, or 125 $\mu$m or less, or 100 $\mu$m or less, or 90 $\mu$m or less, or 80 $\mu$m or less, or 70 $\mu$m or less, or 60 $\mu$m or less, or 50 $\mu$m or less, and although the lower limit is not restricted, for example 0.3 $\mu$m or more, or 1 $\mu$m or more, or 5 $\mu$m or more, or 8 $\mu$m or more, or 10 $\mu$m or more, or 15 $\mu$m or more after ultrasonication.

[Aspect 24]

The composition according to any one of Aspects 18 to 23, wherein the total content of pulse and/or cereal is 10 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, or 95 mass % or more, and although the upper limit is not restricted, for example 100 mass %, or 100 mass % or less or more in terms of dry mass basis.

[Aspect 25]

The composition according to any one of Aspects 18 to 24, wherein the ratio of the starch content contained in pulse and/or cereal to the total starch content of the composition is 30 mass % or more, or 40 mass % or more, or 50 mass % or more, or 60 mass % or more, or 70 mass % or more, or 80 mass % or more, or 90 mass % or more, and although the upper limit is not restricted, for example 100 mass %, or 100 mass % or less.

[Aspect 26]

The composition according to any one of Aspects 18 to 25, wherein the ratio of the protein content contained in pulse and/or cereal to the total protein content of the composition is 10 mass % or more, or 20 mass % or more, or 30 mass % or more, or 40 mass % or more, or 50 mass % or more, or 60 mass % or more, or 70 mass % or more, or 80 mass % or more, or 90 mass % or more, and although the upper limit is not restricted, for example 100 mass %, or 100 mass % or less.

[Aspect 27]

The composition according to any one of Aspects 1 to 26, wherein the composition has a wheat content of 50 mass % or less, or 40 mass % or less, or 30 mass % or less, or 20 mass % or less, or 10 mass % or less, or substantially absent, or absent, and although the lower limit is not restricted, for example 0 mass %, or 0 mass % or more in terms of dry mass basis.

[Aspect 28]

The composition according to any one of Aspects 1 to 27, wherein the ratio of the protein content derived from wheat to the total protein content of the composition is 50 mass % or less, or 40 mass % or less, or 30 mass % or less, or 20 mass % or less, or 10 mass % or less, or substantially absent, or absent, and although the lower limit is not restricted, for example 0 mass %, or 0 mass % or more.

[Aspect 29]

The composition according to any one of Aspects 1 to 28, wherein the composition is substantially free of gluten.

[Aspect 30]

The composition according to any one of Aspects 1 to 29, wherein the composition contains dietary fiber-localized part of edible plant.

[Aspect 31]

The composition according to Aspect 30, wherein the dietary fiber-localized part contains seed skin of pulse.

[Aspect 32]

The composition according to any one of Aspects 1 to 31, wherein the total content of edible part of pulse and/or cereal and dietary fiber-localized part of edible plant is 10 mass % or more, or 15 mass % or more, or 20 mass % or more, or 25 mass % or more, or 30 mass % or more, or 35 mass % or more, or 40 mass % or more, or 50 mass % or more, and although the upper limit is not restricted, for example 100 mass % or less, or 97 mass % or less, or 95 mass % or less, or 93 mass % or less, or 90 mass % or less in terms of dry mass basis.

[Aspect 33]

The composition according to any one of Aspects 1 to 32, wherein the composition contains both edible part of pulse and dietary fiber-localized part of pulse.

[Aspect 34]

The composition according to any one of Aspects 30 to 33, wherein the dietary fiber-localized part of edible plant includes dietary fiber-localized part of psyllium.

[Aspect 35]

The composition according to any one of Aspects 30 to 34, wherein the dietary fiber-localized part of edible plant includes dietary fiber-localized part having undergone enzyme treatment.

[Aspect 36]

The composition according to Aspect 35, wherein the enzyme treatment is xylanase and/or pectinase treatment.

[Aspect 37]

The composition according to any one of Aspects 30 to 36, wherein the composition is a non-fermented swollen composition or a fermented swollen composition.

[Aspect 38]

A method for producing a composition according to any one of claims 1 to 6, comprising the steps of:

(i) preparing a dough composition comprising pulse and/or cereal except for rice, wheat and barley, the dough composition having

(1) a starch content of 8.0 mass % or more in terms of wet mass basis,
(2) a dry mass basis moisture content of more than 40 mass %,
(3) a dietary fiber content of 2.0 mass % or more in terms of wet mass basis,
(4) a starch digestion enzyme activity of 0.2 U/g or more in terms of dry mass basis, and
(5) according to a particle diameter distribution obtained by subjecting the dough composition to the starch and protein digestion treatment defined in the [Procedure b] above followed by ultrasonication, a particle diameter d50 of less than 450[tm; and

(ii) swelling the dough composition from step (i) via heating treatment, wherein the AUCl value of the composition increases by 5% or more and the dry mass basis moisture content of the composition increases by 5 mass % or more during the heating treatment, wherein

optionally the dough composition at step (i) further satisfies the requirement (6-1) and/or (6-2) below.
(6-1) The requirement(s) (c-1) and/or (d-1) is satisfied.
(c-1) When 6% suspension of a crushed product of the dough composition is observed, the number of starch grain structures is 40/mm2 or more.
(d-1) When 14 mass % aqueous slurry of a crushed product of the dough composition is subjected to measurement using rapid visco-analyzer with elevating the temperature from 50°C to 140 °C at a rate of 12.5°C/min, the peak temperature of gelatinization is higher than 95 °C.
(6-2) The requirement(s) (c-2) and/or (d-2) is satisfied.
(c-2) When 6% suspension of a crushed product of the composition is observed, the number of starch grain structures decreases by 10/mm2 or more during step (ii).
(d-2) When 14 mass % aqueous slurry of a crushed product of the composition is subjected to measurement using rapid visco-analyzer with elevating the temperature from 50°C to 140 °C at a rate of 12.5°C/min, the peak temperature of gelatinization decreases by 5% or more during step (ii).

[Aspect 39]

The method according to Aspect 38, wherein the dough composition at step (i) further satisfies the requirement (6-1) below.

(6-1) The requirement(s) (c-1) and/or (d-1) is satisfied.

(c-1) When 6% suspension of a crushed product of the dough composition is observed, the number of starch grain structures is 40/mm$^2$ or more, or 60/mm$^2$ or more, or 80/mm$^2$ or more, or 100/mm$^2$ or more, or 150/mm$^2$ or more, or 200/mm$^2$ or more, or 250/mm$^2$ or more, or 300/mm$^2$ more than, and although the upper limit is not restricted, for example 100000/mm$^2$ or less, or 50000/mm$^2$ or less, or 10000/mm$^2$ or less.

(d-1) When 14 mass % aqueous slurry of a crushed product of the dough composition is subjected to measurement using rapid visco-analyzer with elevating the temperature from 50 °C to 140 °C at a rate of 12.5°C/min, the peak temperature of gelatinization is more than 95 °C, or more than 100 °C, or more than 105 °C, or more than 110 °C, and although the upper limit is not restricted, for example 140 °C or lower, or 135 °C or lower, or 130 °C or lower.

[Aspect 40]

The method according to Aspect 38 or 39, wherein the dough composition at step (i) further satisfies the requirement (6-2) below.

(6-2) The requirement(s) (c-2) and/or (d-2) is satisfied.

(c-2) When 6% suspension of a crushed product of the composition is observed, the number of starch grain structures decreases by 10/mm$^2$ or more, or 20/mm$^2$ or more, or 30/mm$^2$ or more, or 40/mm$^2$ or more, or 50/mm$^2$ or more, or 100/mm$^2$ or more, or 150/mm$^2$, or 200/mm$^2$ or more, or 250/mm$^2$ or more, or 300/mm$^2$ or more, and although the upper limit is not restricted, for example 100000/mm$^2$ or less, or 50000/mm$^2$ or less, or 10000/mm$^2$ or less during step (ii).

(d-2) When 14 mass % aqueous slurry of a crushed product of the composition is subjected to measurement using rapid visco-analyzer with elevating the temperature from 50°C to 140 °C at a rate of 12.5°C/min, the peak temperature of gelatinization decreases by 5% or more, or 10% or more, or 15% or more, or 20% or more, and although the upper limit is not restricted, for example 100% or less (i.e., no peak is detected), or 60% or less, or 50% or less, or 45% or less, or 40% or less during step (ii).

[Aspect 41]

The method according to any one of Aspects 38 to 40, wherein the dough composition at step (i) comprises pulse and/or cereal.

[Aspect 42]

The method according to Aspect 41, wherein the pulse and/or cereal have undergone warming treatment in such a manner that the decremental difference of the peak temperature of gelatinization before and after the warming treatment is 50 °C or lower, or 45 °C or lower, or 40 °C or lower, or 35 °C or lower, or 30 °C or lower, and although the lower limit is not restricted, for example more than 0 °C, particularly more than 1 °C, or more than 2 °C, or more than 3 °C, or more than 4 °C, or more than 5 °C.

[Aspect 43]

The method according to Aspect 41 or 42, wherein the pulse and/or cereal used in the dough composition at step (i) is in the form of powder with a particle diameter d$_{90}$ of less than 500 μm, or 450 μm or less, or 400 μm or less, or 350 μm or less, or 300 μm or less, or 250 μm or less, or 200 μm or less, or 150 μm or less, or 100 μm or less, and although the lower limit is not restricted, for example 1 μm or more, particularly 5 μm or more, or 7 μm or more, or 10 μm or more after ultrasonication.

[Aspect 44]

The method according to any one of Aspects 41 to 43, wherein 30% or more, or 40% or more, or 50% or more, or 60% or more, or 70% or more, or 80% or more, or 90% or more, and although the upper limit is not restricted, for example 100% or less of the starch digestion enzyme activity of the dough composition at step (i) is derived from pulse and/or cereal.

[Aspect 45]

The method according to any one of Aspects 38 to 44, wherein the AUC3 value of the dough composition at step (i) is 30% or more, or 35% or more, or 40% or more, or 45% or more, or 50% or more, or 55% or more, or 60% or more, or 65% or more, or 70% or more, or 80% or more, or 90% or more, and although the upper limit is not restricted, for example 100% or less, or 98% or less.

[Aspect 46]

The method according to any one of Aspects 38 to 45, wherein the AUC2 value of the composition decreases by 5% or more, or 10% or more, or 15% or more, or 20% or more, or 25% or more, or 30% or more, or 35% or more, or 40% or more, and although the upper limit is not restricted, for example 100% or less, or 90% or less through the heating treatment of step (ii).

[Aspect 47]

The method according to any one of Aspects 38 to 46, wherein the [AUC2]/[AUC1] ratio decreases by 10% or more, or 15% or more, or 20% or more, or 25% or more, or 30% or more, or 35% or more, or 40% or more, and although the upper limit is not restricted, for example 100% or less, or 90% or less, or 80% or less through the heating treatment of step (ii).

[Aspect 48]

The method according to any one of Aspects 38 to 47, wherein the total porosity increases by 1% or more, or 2% or more, or 3% or more, or 4% or more, or 5% or more, or 6% or more, or 7% or more, or 8% or more, or 9% or more, or 10% or more, or 15% or more, or 20% or more, or 30% or more, or 40% or more, or 50% or more, and although the upper limit is not restricted, for example 10000% or less, or 8000% or less, or 6000% or less, or 4000% or less, or 2000% or less, or 1000% or less, or 500% or less, or 300% or less, or 200% or less, or 150% or less through the heating treatment of step (ii).

[Aspect 49]

The method according to any one of Aspects 38 to 48, wherein the absorbance at 660 nm ($ABS_{5.0-6.5}$) increases by 0.03 or more, or 0.04 or more, or 0.05 or more, or 0.10 or more, or 0.15 or more, or 0.20 or more, or 0.25 or more, or 0.30 or more, or 0.35 or more, or 0.40 or more, and although the upper limit is not restricted, for example 3.00 or less, or 2.50 or less, or 2.00 or less, or 1.50 or less, or 1.00 or less, or 0.90 or less, or 0.80 or less, or 0.70 or less through the heating treatment of step (ii).

[Aspect 50]

The method according to any one of Aspects 38 to 49, wherein at least one of the requirements (c1) to (c3) below is satisfied through the heating treatment of step (ii).

(c1) The product $AV_{66.88278} \times AV_{80.79346}$ increases by 30% or more, or 40% or more, or 50% or more, or 60% or more, or 70% or more, or 80% or more, or 90% or more, or 100% or more, and although the upper limit is not restricted, for example 1000% or less, or 700% or less, or 400% or less.
(c2) The standard deviation $SD_{66.88278}$ increases by 5% or more, or 10% or more, or 15% or more, or 20% or more, or 25% or more, or 30% or more, or 35% or more, or 40% or more, and although the upper limit is not restricted, for example 500% or less, or 400% or less, or 350% or less, or 300% or less, or 200% or less.
(c3) The standard deviation $SD_{80.79346}$ increases by 5% or more, or 10% or more, or 15% or more, or 20% or more, or 25% or more, or 30% or more, or 35% or more, or 40% or more, or 50% or more, or 60% or more, or 70% or more, or 80% or more, or 100% or more, or 200% or more, or 300% or more, and although the upper limit is not restricted, for example 1000% or less, or 800% or less, or 600% or less.

[Aspect 51]

The method according to any one of Aspects 38 to 50, wherein the dough composition prepared at step (i) comprises dietary fiber-localized part of edible plant.

[Aspect 52]

The method according to Aspect 51, wherein the content of the dietary fiber-localized part of edible plant in the dough composition prepared at step (i) is 0.1 mass % or more, 0.2 mass % or more, or 0.3 mass % or more, or 0.4 mass % or more, or 0.5 mass % or more, or 1.0 mass % or more, or 1.5 mass % or more, and although the upper limit is not restricted, for example 20 mass % or less, or 15 mass % or less, or 10 mass % or less, or 7.5 mass % or less, or 5.0 mass % or less in terms of wet mass basis.

[Aspect 53]

The method according to Aspect 51 or 52, wherein the dietary fiber-localized part of edible plant comprises seed skin of pulse.

[Aspect 54]

The method according to any one of Aspects 51 to 53, wherein the dough composition at step (i) comprises both edible part of pulse and dietary fiber-localized part of pulse.

[Aspect 55]

The method according to any one of Aspects 51 to 54, wherein the dietary fiber-localized part of edible plant comprises seed skin of psyllium.

[Aspect 56]

The method according to any one of Aspects 51 to 55, further including subjecting the dietary fiber-localized part of edible plant to enzyme treatment.

[Aspect 57]

The method according to Aspect 56, wherein the enzyme treatment is xylanase and/or pectinase treatment.

[Aspect 58]

The method according to Aspect 56 or 57, further including carrying out the enzyme treatment at step (i) and/or step (ii).

[Aspect 59]

The method according to Aspect 58, wherein step (ii) includes:

(ii-a) yeast-fermenting the dough composition from step (i); and
(ii-b) baking the yeast-fermented composition from step (ii-a).

[Aspect 60]

The method according to any one of Aspects 38 to 59, wherein step (ii) includes:

(ii-1a) kneading the dough composition from step (i) under pressurized conditions with heating at a temperature of more than 100 °C 1; and
(ii-1b) subjecting the kneaded composition from step (ii-1a) to normal pressure at a temperature of more than 100 °C.

[Aspect 61]

The method according to any one of Aspects 38 to 59, wherein step (ii) includes:

(ii-2a) mixing the dough composition from step (i) with air bubbles and/or expansion agent; and
(ii-2b) heating the mixed composition from step (ii-2a) at a certain temperature.

[Aspect 62]

Pulse and/or cereal for use in step (i) of the method according to any one of Aspects 38 to 61, which satisfies the requirement(s) (c-3) and/or (d-3).

(c-3) When 6% suspension of a crushed product of the dough composition is observed, the number of starch grain structures is 40/mm$^2$ or more, or 60/mm$^2$ or more, or 80/mm$^2$ or more, or 100/mm$^2$ or more, or 150/mm$^2$ or more, or 200/mm$^2$ or more, or 250/mm$^2$ or more, or 300/mm$^2$ more than, and although the upper limit is not restricted, for example 100000/mm$^2$ or less, or 50000/mm$^2$ or less, or 10000/mm$^2$ or less.

(d-3) When 14 mass % aqueous slurry of a crushed product of the dough composition is measured using rapid visco-analyzer with elevating the temperature from 50 °C to 140 °C at a rate of 12.5°C/min, the peak temperature of gelatinization is more than 95 °C, or more than more than 100 °C, or more than 105 °C, or more than 110 °C, and although the upper limit is not restricted, for example 140 °C or lower, or 135 °C or lower, or 130 °C or lower.

[Aspect 63]

The pulse and/or cereal according to Aspect 62, which have undergone warming treatment gelatinization in such a manner that the decrease in the peak temperature of gelatinization is 50 °C or lower, or 45 °C or lower, or 40 °C or lower, or 35 °C or lower, or 30 °C or lower, and although the lower limit is not restricted, for example more than 0 °C, particularly more than 1 °C, or more than 2 °C, or more than 3 °C, or more than 4 °C, or more than 5 °C.

[Aspect 64]

An enzyme-treated product of psyllium husk for use in step (i) of the method according to any one of Aspects 38 to 61.

[Aspect 65]

The enzyme-treated product of psyllium husk according to Aspect 64, wherein the enzyme treatment is xylanase treatment and/or pectinase treatment.

**EFFECT OF THE INVENTION**

The present invention provides a starch-based swollen composition that maintains its swollen state even after heat treatment and has a unique swollen-food texture.

**DESCRIPTION OF EMBODIMENTS**

The present invention will now be described based on specific embodiments. These embodiments should not be construed to limit the scope of the present invention.
It should be noted that when a plurality of upper limits and/or a plurality of lower limits are indicated for any numerical range herein, the subject matter intended for the present invention includes at least the combination of the maximal value of the upper limits and the minimal value of the lower limits, as well as all numerical ranges obtained by combining any value of the upper limits and any value of the upper limits, regardless of they are explicitly indicated. For example, the statement about the numerical ranges of AUC1 below, i.e., "typically more than 60%, ... particularly more than 63%, or more than 65%, or more than 67%, particularly more than 70%" and "typically 100% or less, or 90% or less, or 80% or less," means that the subject matter intended for the present invention includes all numerical ranges obtained by combining any value of the upper limits and any value of the upper limits, i.e., more than 60% but 100% or less, more than 60% but 90% or less, more than 60% but 80% or less, more than 63% but 100% or less, more than 63% but 90% or less, more than 63% but 80% or less, more than 65% but 100% or less, more than 65% but 90% or less, more than 65% but 80% or less, more than 67% but 100% or less, more than 67% but 90% or less, more than 67% but 80% or less, more than 70% but 100% or less, more than 70% but 90% or less, and more than 70% but 80% or less.

[Starch-containing swollen composition]

An aspect of the present invention relates to a swollen composition containing starch (hereinafter also referred to as "the starch-containing swollen composition of the present invention," "the swollen composition of the present invention," or simply "the composition of the present invention"). The term "swollen composition" herein refers to a compositions with pores of a certain size or larger inside the composition. A swollen compositions can typically be produced by increasing the volume of pores in a dough composition by expanding the liquid or gas inside the dough composition, followed by curing with cooling the composition. Specific examples of swollen compositions include cereal puffs made by applying pressure to raw materials containing dried edible plants and then releasing them at once under normal pressure to cause the water in the materials to expand and evaporate, resulting in puffiness, and cereal puffs produced by adding water to dried edible plant powder and kneading it under heat and pressure to form a dough composition, then rapidly reducing the pressure of the dough composition to rapidly vaporize the water inside the composition to increase its pore volume, causing the composition to expand while cooling and hardening the dough composition by the heat of vaporization. Specific examples of swollen compositions also include bread or similar food products such as waffles (sometimes referred to as bread-like food products), which are mass-like swollen composition produced by expanding the gas using an expander (typically baking powder, sodium bicarbonate (baking soda), or ammonium bicarbonate that produces gas when heated) or yeast fermentation inside a dough composition via heat treatment to increase its pore volume, followed by cooling to cure the dough composition. Examples of swollen food compositions also include cereal puffs or bread food products prepared by forming swollen compositions into desired shapes. The swollen food compositions of the present invention include fermented swollen compositions, which are produced by a method including a fermentation process (especially a yeast fermentation process), as well as non-fermented swollen compositions (such as puffs, chips, crisps, etc.), which are produced by a method that does not include such a fermentation process.

[Dry mass basis moisture content]

The swollen composition of the present invention may preferably be characterized in that the dry mass basis moisture content of the composition is within a predetermined range. Specifically, the dry mass basis moisture content of the swollen composition of the present invention may be within a range of 0 mass % or more but less than 150 mass %. More specifically, the upper limit of the dry mass basis moisture content of the swollen composition of the present invention may be typically less than 150 mass %, particularly less than 140 mass %, or less than 130 mass %, or less than 120 mass %, or less than 110 mass %, or less than 100 mass %, or less than 90 mass %, or less than 80 mass %, or less than 70 mass %, or less than 60 mass %, or less than 50 mass %, or less than 40 mass %, or less than 30 mass %, particularly less than 26 mass %, or less than 21 mass %, or less than 16 mass %, or less than 10 mass %. On the other hand, the lower limit of the dry mass basis moisture content of the composition of the present invention may be, although not limited to, 0 mass % or more, or 0.5 mass % or more, or 1 mass % or more, or 2 mass % or more, or 5 mass % or more, from the viewpoint of industrial production efficiency. The dry mass basis moisture content of the composition of the present invention may be either derived from various ingredients of the composition or derived from further added water. If the dry mass basis moisture content in the dough composition before processing is high, a process such as drying can be employed to adjust the dry mass basis moisture content to within the aforementioned range.

For fermented swollen compositions (e.g., bread or bread-like food products) produced by a production method that includes a fermentation step (especially a fermentation step with yeast), the dry mass basis moisture content of the composition may preferably be relatively high. Specifically, the dry mass basis moisture content in the fermented swollen composition may preferably be within the range of 50 mass % or more but less than 150 mass %. More specifically, the upper limit may be typically less than 150 mass %, particularly less than 125 mass %, or less than 110 mass %. On the other hand, the lower limit may be, although not limited to, from the viewpoint of industrial production efficiency, for example 50 mass % or more, or 60 mass % or more, or 70 mass % or more, or 80 mass % or more.

For non-fermented swollen compositions (e.g., puff, chips, and crisp) produced by a production method that does not include a fermented step (particularly a fermented step with yeast), the dry mass basis moisture content of the composition may preferably be relatively low. Specifically, the dry mass basis moisture content of the non-fermented swollen composition may be within the range of 0.5 mass % or more but less than 30 mass %. More specifically, the upper limit may be typically less than 30 mass %, particularly less than 26 mass %, or less than 21 mass %, or less than 16 mass %, or less than 10 mass %. On the other hand, the lower limit may be, although not limited to, from the viewpoint of industrial production efficiency, for example 0.5 mass % or more, or 1 mass % or more, or 2 mass % or more, or 5 mass % or more.

The "dry mass basis water content" herein refers to the ratio of the total amount of water in the composition of the present invention which either originates from the raw materials or was added externally to the total amount of solids in the solid paste composition of the present invention. The value can be measured by a method, for example, according to the Japan Standard Tables for Food Composition 2015 (7th revised edition), by heating to 90°C using the decompression heating and drying method. Specifically, an appropriate amount of sample ($W_1$) is put in a pre-weighed weighing vessel ($W_0$) and weighed, the weighing vessel with the lid removed or opened is placed in a reduced pressure electric constant temperature dryer adjusted to a predetermined temperature (more specifically, 90°C) at normal pressure, the door is closed, and the vacuum pump is operated to dry the sample at a predetermined reduced pressure for a predetermined period of time. The vacuum pump is then stopped, dry air is sent to bring the pressure back to normal, the weighing vessel is removed, the lid is put on, the vessel is left to cool in a desiccator, and the mass is then weighed. The method of drying, cooling, and weighing ($W_2$) is repeated until a constant amount is reached, and the water content (water content based on dry weight) (mass %) is determined using the following formula.

[Formula 1]

$$\text{Dry basis water content (g/100g)} = (W_1 - W_2) / (W_2 - W_0) \times 100$$

In the formula, $W_0$ is the mass (g) of the pre-weighed weighing vessel, $W_1$ is the mass (g) of **the weighing** vessel with the sample before drying, and $W_2$ is the mass (g) of the weighing vessel with the sample after drying.

[Dietary fiber content]

The swollen composition of the present invention may preferably be characterized in that the dietary fiber content (particularly, although not restricted, preferably insoluble dietary fiber content) in the composition is within a predetermined range. Specifically, the dietary fiber content in the swollen composition of the present invention may be within the range of 3.0 mass % or more but less than 40 mass %, in terms of dry mass basis. More specifically, the lower limit may be typically 3.0 mass % or more, preferably 3.5 mass % or more, or 4.0 mass % or more, or 4.5 mass % or more, or 5.0 mass % or more, or 6.0 mass % or more, or 7.0 mass % or more, or 8.0 mass % or more, or 9.0 mass % or more, particularly 10.0 mass % or more, in terms of dry mass basis. On the other hand, the upper limit may be, although not particularly limited to, typically 40 mass % or less, or 35 mass % or less, or 30 mass % or less in terms of dry mass basis. The "dietary fiber content" (i.e., "total dietary fiber content," which is a sum of the soluble dietary fiber content and the insoluble dietary fiber content), "soluble dietary fiber content," and "insoluble dietary fiber content" are measured in accordance with the Japan Standard Tables for Food Composition 2015 (7th revised edition) using the Prosky variant method. The "dry mass" used herein refers to a mass obtained by calculating the moisture content from the aforementioned "moisture content (dry mass basis moisture content)" and subtracting the calculated moisture content from the overall mass of the composition, etc. The "dry mass basis" used herein refers to a content ratio of each component calculated with the dry mass of the composition as the denominator and the content of each component as the numerator

The origin of the dietary fiber contained in the composition of the present invention is not particularly limited, and may be either those derived from various naturally-occurring materials (such as edible plants) containing dietary fiber or those synthesized. When those derived from naturally-occurring materials are used, dietary fiber contained in various materials may be isolated, purified, and used, or alternatively, such materials containing dietary fiber may be used as such. Among these, dietary fibers contained in various materials (particularly pulse and/or cereal) are preferred. Examples of dietary fibers that can be used include those derived from general cereals (particularly from specific cereals), those derived from pulse (beans), those derived from potatoes, those derived from vegetables, those derived from nuts, and those derived from fruits. Preferable among them are those derived from cereals and those derived from pulse (beans) from the viewpoint of the texture of the composition, more preferably those derived from pulse (beans), even more preferably those derived from pea, most preferably those derived from yellow pea. Specifically, the ratio of the total content of pulse-derived dietary fiber and/or cereal-derived dietary fiber (preferably the pulse dietary fiber content) to the total dietary fiber content in the whole composition may be within the range of 5 mass % or more but 100 mass % or less. More specifically, the lower limit of the ratio may preferably be typically 5 mass % or more, particularly 10 mass % or more, or 15 mass % or more, or 20 mass % or more, or 25 mass % or more, or 30 mass % or more, or 40 mass % or more, or 50 mass % or more, or 60 mass % or more, or 70 mass % or more, or 80 mass % or more, or 90 mass % or more. On the other hand, the upper limit of the ratio may be, although not particularly limited to, typically 100 mass %, or 100 mass % or less. When pulse containing dietary fiber is used, it may be used either with or without its seed skin, but pulse with seed skin may preferably be used since it has a higher content of dietary fiber. When cereal containing dietary fiber is used, it may be used either with or without its bran, but cereal with bran may preferably be used since it has a higher content of dietary fiber.

The composition of the present invention (for example, the fermented swollen composition) may preferably contain dietary fiber derived from psyllium husk (psyllium seed skin) at a predetermined ratio or more. Specifically, the ratio of the dietary fiber content derived from psyllium husk to the total dietary fiber content in the whole composition may be within the range of 5 mass % or more but 100 mass % or less. More specifically, the lower limit of the ratio may preferably be typically 5 mass % or more, particularly 10 mass % or more, or 15 mass % or more, or 20 mass % or more, or 25 mass % or more, or 30 mass % or more, or 40 mass % or more, or 50 mass % or more, or 60 mass % or more, or 70 mass % or more, or 80 mass % or more, or 90 mass % or more. The upper limit of the ratio may be, although not particularly limited to, typically 100 mass % or less, or 90 mass % or less, or 80 mass % or less. When pulse containing dietary fiber is used, it may be used either with or without its seed skin, but pulse with seed skin may preferably be used since it has a higher content of dietary fiber. When cereal containing dietary fiber is used, it may be used either with or without its bran, but cereal with bran may preferably be used since it has a higher content of dietary fiber.

The dietary fiber (preferably, although not limited to, the insoluble dietary fiber) in the composition of the present invention may be either in the form of an isolated pure product or, more preferably, in the form of being contained in pulse and/or cereal. Specifically, the ratio of the dietary fiber content contained in pulse and/or cereal (preferably pulse) to the total dietary fiber content in the whole composition may be within the range of 10 mass % or more but 100 mass % or less. More specifically, the lower limit of the ratio may preferably be typically 10 mass % or more, particularly 20 mass % or more, or 30 mass % or more, or 40 mass % or more, or 50 mass % or more, or 60 mass % or more, or 70 mass % or more, or 80 mass % or more, or 90 mass % or more. The upper limit of the ratio may be, although not particularly limited to, typically 100 mass %, or 100 mass % or less. The ratio of the dietary fiber content contained in pulse and/or cereal (preferably pulse) to the total dietary fiber content in the whole composition may preferably satisfy the ranges mentioned above, and the insoluble dietary fiber content may more preferably satisfy the ranges mentioned above. The constitution of the dietary fiber contained in the composition of the present invention is not particularly restricted. However, the ratio of lignin (especially acid-soluble lignin) to the total dietary fiber content (especially to the total insoluble dietary fiber) may preferably satisfy the aforementioned limits or more, since this will make it easier to obtain a more pronounced texture improvement effect. Specifically, the ratio of the lignin content (especially the acid-soluble lignin content) to the total dietary fiber content to the total dietary fiber content may preferably be typically 5 mass % or more, particularly 10 mass % or more, or 30 mass % or more, in terms of dry mass basis.

[Starch content]

The swollen composition of the present invention may preferably be characterized in that the starch content in the whole composition is within a predetermined range. Specifically, the starch content in the whole swollen composition of the present invention may be within the range of 15 mass % or more but 100 mass % or less in terms of dry mass basis. More specifically, the lower limit of the ratio may preferably be typically 15 mass % or more, particularly 20 mass % or more, or 25 mass % or more, or 30 mass % or more, or 35 mass % or more, or 40 mass % or more, or 45 mass % or more, in terms of dry mass basis. On the other hand, the upper limit of the ratio may be, although not particularly limited to, typically 100 mass % or less, or 90 mass % or less, or 80 mass % or less, or 70 mass % or less, or 65 mass % or less in terms of dry mass basis.

The origin of the starch contained in the composition of the present invention is not particularly restricted. Examples include those derived from plant and those derived from animal, of which pulse-derived starch and/or cereal-derived starch are preferred. Specifically, the ratio of the total content of pulse-derived starch and/or cereal-derived starch (preferably the content of pulse-derived starch) to the total starch content in the whole composition may preferably be within the range of 30 mass % or more but 100 mass % or less. More specifically, the lower limit of the ratio may preferably be typically 30 mass % or more, particularly 40 mass % or more, or 50 mass % or more, or 60 mass % or more, or 70 mass % or more, or 80 mass % or more, or 90 mass % or more. On the other hand, the upper limit of the ratio may be, although not particularly limited to, typically 100 mass %, or 100 mass % or less. The pulse-derived starch may preferably be pea-derived starch, most preferably yellow pea-derived starch. The cereal-derived starch may preferably be oat-derived starch. The pulse will be explained later. The starch may preferably be contained in pulse and/or cereal.

The starch contained in the composition of the present invention may be either in the form of an isolated pure product or, more preferably, in the form of being contained in pulse and/or cereal. Specifically, the ratio of the total content of starch contained in pulse and/or cereal (preferably the total content of starch contained in pulse) the total starch content in the whole composition may be within the range of 30 mass % or more but 100 mass % or less. More specifically, the lower limit of the ratio may preferably be typically 30 mass % or more, particularly 40 mass % or more, or 50 mass % or more, or 60 mass % or more, or 70 mass % or more, or 80 mass % or more, or 90 mass % or more. On the other hand, the upper limit of the ratio may be, although not particularly limited to, typically 100 mass %, or 100 mass % or less.

In the present invention, the starch content in a composition is determined according to the Japan Standard Tables for Food Composition 2015 (7th revised edition) and using the method of AOAC 996.11, by a method in which soluble carbohydrates (glucose, maltose, maltodextrin, etc.) that affect the measured value are removed via extraction treatment with 80% ethanol.

[Degree of gelatinization of starch]

The swollen composition of the present invention may preferably be characterized in that the degree of gelatinization of starch in the composition is within a predetermined range. Specifically, the degree of gelatinization of starch in the swollen composition of the present invention may be within the range of 50 mass % or more but 100 mass % or less. More specifically, the lower limit may preferably be typically 50 mass % or more, particularly 55 mass % or more, or 60 mass % or more, or 65 mass % or more, or 70 mass % or more, or 75 mass % or more, or 80 mass % or more, or 85 mass % or more, or 90 mass % or more. On the other hand, the upper limit may be, although not particularly limited to, typically 100 mass % or less, or 99 mass % or less. In the present invention, the degree of gelatinization of a composition is measured as the ratio of the gelatinized starch content to the total starch content using the glucoamylase second method, which is a partial modification of the Central Analytical Laboratory of Customs (following the method by Japan Food Research Laboratories: https://www.jfrl.or.jp/storage/file/221.pdf).

[Characteristics relating to molecular weight distribution curve MWDC$_{3.5-8.0}$]

The swollen composition of the present invention may preferably be characterized in that when the composition is subjected to the [Procedure a] below and the resulting product is analyzed under the [Condition A] below, then the resulting molecular weight distribution curve in an interval with molecular weight logarithms of 3.5 or more but less than 8.0 (MWDC$_{3.5-8.0}$) satisfies the following features.

[Procedure a] The composition is crushed, and an ethanol-insoluble and dimethyl sulfoxide-soluble component is obtained.

[Condition A] The treated product from the [Procedure a] above is dissolved into 1M aqueous solution of sodium hydroxide at a concentration of 0.30 mass % and allowed to stand at 37 °C for 30 minutes, then combined with an equal volume of water and an equal volume of eluent and subjected to filtration with a 5-$\mu$m filter, and 5mL of the filtrate is then subjected to gel filtration chromatography, to thereby obtain a molecular weight distribution.

Specifically, the composition of the present invention may preferably be characterized in that when the composition is subjected to the [Procedure a] above and ingredient and the resulting product is analyzed under the [Condition A] below to determine a molecular weight distribution curve, then the logarithm of the mass average molecular weight (also referred to as "weight average molecular weight") obtained from the molecular weight distribution curve, as well as the area under the curve in an interval with molecular weight logarithms of 3.5 or more but less than 6.5 the ratio of (also referred to as "AUC1") and the area under the curve in an interval with molecular weight logarithms of 6.5 or more but less than 8.0 the ratio of (also referred to as "AUC2") with respect to the area under the entire molecular weight distribution curve (the area under the molecular weight distribution curve in an interval with molecular weight logarithms of 3.5 or more but less than 8.0) satisfy the predetermined conditions.

The terms "molecular weight distribution" or "molecular weight distribution curve" used herein refers to a distribution diagram obtained by plotting the logarithms of molecular weights on the horizontal axis (x-axis) and the percentage (%) of the measured value at each logarithm of molecular weight against the total RI detector measured values over the entire measurement range on the vertical axis (y-axis). In addition, when the composition is subjected to the [Procedure a] above and ingredient and the resulting product is analyzed under the [Condition A] below to determine a molecular weight distribution curve, the area under the curve is calculated from the molecular weight distribution curve as follows. That is, after numerically correcting the entire curve so that the lowest value in the measurement range is 0, the area under the curve is calculated by plotting the logarithms of molecular weights on the horizontal axis (X-axis) with even intervals. This allows proper evaluation of the low molecular weight fraction (the fraction around AUC1), which has a large quality effect but is underestimated in molecular weight conversion. Furthermore, using the property that the molecular weight logarithm is proportional to the elution time, each elution time is converted to a mass molecular weight logarithmic value (also referred to as the molecular weight logarithm or the mass molecular weight logarithm). Conversion of the elution time (more specifically, the elution time obtained by analysis at an oven temperature of 40°C, at a flow rate of 1 mL/min, and with a unit time of 0.5 seconds) to the molecular weight logarithm in this manner allows for measurement data in which the molecular weight logarithms are distributed at even intervals.

*[Procedure a]:

[Procedure a] is a procedure in which the composition is subjected to pulverization (or pulverization and degreasing treatment), and then an ethanol-insoluble and dimethyl sulfoxide-soluble ingredient is obtained. The technical significance of the [Procedure a] is to prevent column blockage during gel filtration chromatography and improve the accuracy and reproducibility of the analysis by obtaining a component that has been purified using the ethanol-insoluble and dimethyl sulfoxide-soluble properties of starch and has an increased starch concentration (also referred to as "the product from the treatment of [Procedure a] above").

The method for crushing the composition after the thermostatic treatment in this [Procedure a] may be any method that can sufficiently homogenize the composition, an example of which is to crush the composition at 25,000 rpm for 30 seconds using a homogenizer NS52 (Microtech Nichion, Inc.).

When a composition with a particularly high lipid content (e.g., a composition with a total oil content of at least 10 mass % or more in terms of dry mass, particularly at least 15 mass % or more, particularly at least 20 mass % or more in terms of dry mass) is subjected to this [Procedure a], it may optionally be preferable to carry out degreasing treatment with hexane from the viewpoint of preventing column blockage. Such treatment may be performed, e.g., by (i) treating the pulverized composition with 20 times the volume of hexane (CAS 110-54-3, FUJIFILM Wako Pure Chemicals Co.) followed by mixing, and then (ii) centrifuging the mixture (at 4300 rpm for 3 min: with a swing rotor) to remove the supernatant. It is preferable to perform the above steps (i) to (ii) twice from the viewpoint of not leaving residual fats and oils.

The extraction of ethanol-insoluble and dimethyl sulfoxide-soluble components from the pulverized composition (or pulverized defatted composition) in this [Procedure a] is not limited, but may be carried out, for example, as follows. (i) After having undergone pulverizing and optional degreasing treatment, the composition is mixed with 32 times the volume of dimethyl sulfoxide (CAS 67-68-5, FUJIFILM Wako Pure Chemicals Co.) based on the initial volume of the crushed composition. The mixture is dissolved by isothermal treatment at 90°C for 15 minutes with stirring, and the dissolved solution after isothermal treatment is centrifuged (at 12,000 rpm for 3 minutes using an angle rotor). The resulting supernatant (Dimethyl sulfoxide solution in which the dimethyl sulfoxide soluble component in the composition is dissolved; hereinafter also referred to as "dimethyl sulfoxide solution") is collected to obtain dimethyl sulfoxide solution. Next, (ii) the resulting dimethyl sulfoxide solution is mixed with three times the volume of 99.5% ethanol, and the mixture is centrifuged (at 4300 rpm for 3 minutes using a swinging rotor). The precipitate fraction is collected as the ethanol-insoluble component. Then, (iii) the above (ii) is repeated three times, and the final precipitate obtained is dried under reduced pressure, whereby the ethanol-insoluble and dimethyl sulfoxide-soluble component can be obtained from the crushed composition (or crushed and degreased composition).

*[Condition A]:

The [Condition A] means a procedure in which the product from the treatment of [Procedure a] above is dissolved into 1M aqueous solution of sodium hydroxide at a concentration of 0.30 mass %, allowed to stand at 37 °C for 30 minutes, mixed with an equal volume of water and an equal volume of eluent (e.g., 0.05M NaOH/0.2% NaCl), and then subjected to filtration with a 5-$\mu$m filter. 5mL of the filtrate is then subjected to gel filtration chromatography, and a molecular weight distribution in an interval with molecular weight logarithms of 3.5 or more but less than 8.0 is measured.

The technical significance of this [Condition A] is to prevent column blockage during gel filtration chromatography by removing insoluble coarse foreign matter from starch dissolved in water under alkaline conditions by filtration, thereby improving the accuracy and reproducibility of the analysis.

*[Gel filtration chromatography]:

According to the present invention, the composition is subjected to isothermal treatment at 90 °C in 40-fold volume of water for 15 minutes, and then treated in accordance with the [Procedure a] above. The resulting filtrate is then subjected to gel filtration chromatography, and a molecular weight distribution in an in an interval with molecular weight logarithms of 3.5 or more but less than 8.0 is determined. The thus-obtained molecular weight distribution curve is then analyzed after correcting the data so that the lowest value is zero, to thereby calculate the mass average molecular weight logarithm, AUC1 (the ratio of the area under the curve in an interval with molecular weight logarithms of 3.5 or more but less than 6.5 to the total area under to the entire curve obtained from the molecular weight distribution curve), and AUC2 (the ratio of the area under the curve in an interval with molecular weight logarithms of 6.5 or more but less than 8.0 to the total area under to the entire curve obtained from the molecular weight distribution curve). Gel filtration chromatography conditions may preferably be set appropriately such that these values can be obtained. Specifically, the signal intensity ratio for each molecular weight logarithm range was calculated using the total signal intensity (RI detector measurement) of the entire molecular weight distribution curve in the interval with interval with molecular weight logarithms of 3.5 or more but less than 8.0 as the denominator, and the mass-averaged molecular weight was calculated by multiplying the molecular weights converted from the molecular weight logarithms over the entire interval by the signal intensity percentage and then summing the multiplied values.

For this reason, in the present invention, it is preferable to use the combination of a gel filtration column having a molecular exclusion limit (Da) logarithm on the relatively high molecular weight side (molecular weight logarithm of 6.5 or more but less than 8.0) and a molecular exclusion limit (Da) logarithm on the relatively low molecular weight side (molecular weight logarithm of 3.5 or more but less than 6.5) as gel filtration columns for gel filtration chromatography. It is more preferable to adopt a column configuration in which these plural gel filtration columns with different molecular exclusion limits within the aforementioned ranges are connected in series (in tandem) from the one with the highest molecular exclusion limit to the one with the lowest, in order from the upstream of analysis. Such a column configuration allows for the starch with molecular weight logarithms corresponding to AUC2 (i.e., 6.5 or more but less than 8.0) to be separated from the starch with molecular weight logarithms corresponding to the smaller AUC1 (i.e., 3.5 or more but less than 6.5), and for each parameter to be measured appropriately.

A specific example of such a combination of gel filtration columns is the following combination of four columns connected in tandem.

\*TOYOPEARL HW-75S (made by Tosoh Co., exclusion limit molecular weight (logarithm):7.7Da, average pore diameter 100 nm or more, $\Phi$2cm x 30cm): two columns.

\*TOYOPEARL HW-65S (made by Tosoh Co., exclusion limit molecular weight (logarithm):6.6Da, average pore diameter 100 nm, $\Phi$2cm x 30cm): one column.

\*TOYOPEARL HW-55S (made by Tosoh Co., exclusion limit molecular weight (logarithm):5.8Da, average pore diameter 50 nm, $\Phi$2cm x 30cm): one column.

The eluting agent for gel filtration chromatography may be, although not restricted, 0.05M NaOH/0.2% NaCl.

The conditions for gel filtration chromatography may be, although not restricted, such that the analysis can be carried out at an oven temperature of 40°C, at a flow rate of 1 mL/min, and with a unit time of 0.5 seconds.

The detection equipment for gel filtration chromatography may be, although not restricted, an RI detector (RI-8021 manufactured by Tosoh Co., Ltd.).

Data analysis methods for gel filtration chromatography are not limited, but specific examples include the following. Measurement values obtained from the detection instrument within the molecular weight logarithmic range to be measured (i.e., 3.5 or more but less than 8.0) are corrected so that the lowest value within the measurement range is zero. A calibration curve is prepared from the peal top elution times of two linear standard pullulan markers for size exclusion chromatography with a peak top molecular weight of 1660000 and a peak top molecular weight of 380000 (e.g., P400 (DP2200, MW380000) and P1600 (DP9650, MW1660000), both manufactured by Showa Denko Co.). Using the property that the molecular weight logarithm is proportional to the elution time, each elution time is converted to a mass molecular weight logarithmic value (also referred to as the molecular weight logarithm or the mass molecular weight logarithm). Conversion of the elution time (more specifically, the elution time obtained by analysis at an oven temperature of 40°C, at a flow rate of 1 mL/min, and with a unit time of 0.5 seconds) to the molecular weight logarithm in this manner allows for measurement data in which the molecular weight logarithms are distributed at even intervals. In addition, the sum of the measurement values obtained at all elution times within a given molecular weight logarithmic range (e.g., 3.5 or more but less than 8.0) of the measurement target is set at 100, and the measured value at each elution time (molecular weight log) is expressed as a percentage. This allows for the molecular weight distribution of the measured sample (X-axis: molecular weight logarithm, Y-axis: percentage (%) of the measured value at each molecular weight logarithm to the total of the measurement values from the RI detector over the entire measurement range) to be calculated, and for a molecular weight distribution curve to be created.

\*AUC1 (the ratio of the area under the curve in an interval with molecular weight logarithms of 3.5 or more but less than 6.5 to the area under the entire curve $MWDC_{3.5-8.0}$):

The swollen composition of the present invention may preferably be characterized in that the ratio of the area under the curve in an interval with molecular weight logarithms of 3.5 or more but less than 6.5 to the area under the entire molecular weight distribution curve $MWDC_{3.5-8.0}$ (hereinafter also referred to as AUC1) is within a predetermined range. Specifically, the AUC1 of the swollen composition of the present invention may be within the range of more than 60% but 100% or less. More specifically, the lower limit may preferably be typically more than 60%, particularly more than 63%, or more than 65%, or more than 67%, particularly more than 70%. On the other hand, the upper limit may be, although not particularly limited to, typically 100% or less, or 90% or less, or 80% or less.

In addition, the AUC1 of the swollen composition of the present invention may more preferably be the ratio of the area under the curve in an interval with molecular weight logarithms of 5.0 or more but less than 6.5 to the area under the entire molecular weight distribution curve $MWDC_{5.0-8.0}$. In other words, the swollen composition of the present invention may more preferably be characterized in that the ratio of the area under the curve in an interval with molecular weight logarithms of 5.0 or more but less than 6.5 to the area under the entire molecular weight distribution curve $MWDC_{5.0-8.0}$ is within a predetermined range. Specifically, this ratio of the swollen composition of the present invention may be within the range of more than 60% but 100% or less. More specifically, the lower limit may preferably be typically more than 60%, particularly more than 63%, or more than 65%, or more than 67%, particularly more than 70%. On the other hand, the upper limit may be, although not particularly limited to, typically 100% or less, or 90% or less, or 80% or less.

\*AUC2 (the ratio of the area under the curve in an interval with molecular weight logarithms of 6.5 or more but less than 8.0 to the area under the entire curve $MWDC_{3.5-8.0}$):

The swollen composition of the present invention may preferably be characterized in that the ratio of the area under the curve in an interval with molecular weight logarithms of 6.5 or more but less than 8.0 to the area under the entire molecular weight distribution curve $MWDC_{3.5-8.0}$ (hereinafter AUC2) is within a predetermined range. Specifically, the AUC2 of the swollen composition of the present invention may be within the range of 0% or more but 40% or less. More specifically, the upper limit may preferably be typically 40% or less, particularly 35% or less, or less than 35%, or less than 30%, or less than 25%, or less than 20%, or less than 15%, or less than 10%. On the other hand, the lower limit may be, although not particularly limited to, for example typically 0% or more, or 3% or more, or 5% or more.

In addition, the AUC2 of the swollen composition of the present invention may more preferably be the ratio of the area under the curve in an interval with molecular weight logarithms of 6.5 or more but less than 8.0 to the area under the entire molecular weight distribution curve $MWDC_{5.0-8.0}$. In other words, the swollen composition of the present invention may more preferably be characterized in that the ratio of the area under the curve in an interval with molecular weight logarithms of 6.5 or more but less than 8.0 to the area under the entire molecular weight distribution curve $MWDC_{5.0-8.0}$ is within a predetermined range. Specifically, this ratio of the swollen composition of the present invention may be within the range of 0% or more but 40% or less. More specifically, the upper limit may preferably be typically 40% or less, particularly 35% or less, or less than 35%, or less than 30%, or less than 25%, or less than 20%, or less than 15%, or less than 10%. On the other hand, the lower limit may be, although not particularly limited to, for example typically 0% or more, or 3% or more, or 5% or more.

*Ratio of AUC2 to AUC1:

The swollen composition of the present invention may preferably be characterized in that the ratio of AUC2 to AUC1 ([AUC2]/[AUC1]) is within a predetermined range. Specifically, the ratio [AUC2]/[AUC1] of the swollen composition of the present invention may be within the range of 0.00 or more but less than 0.0. More specifically, the upper limit may preferably be typically less than 0.68, particularly less than 0.67, or less than 0.0, or less than 0.0, or less than 0.0, or less than 0.0, or less than 0.0, or less than 0.0, or less than 0.0, or less than 0.0, or less than 0.0, or less than 0.0, or less than 0.0. On the other hand, the lower limit may be, although not particularly limited to, for example typically 0.00 or more, or 0.03 or more, or 0.05 or more.

[Characteristics relating to molecular weight distribution curve $MWDC_{6.5-9.5}$]

The swollen composition of the present invention may preferably be characterized in that when the composition is subjected to [Procedure a] and the resulting product is subjected to measurement under [Condition A] to obtain a molecular weight distribution curve in an interval with molecular weight logarithms of 6.5 or more but less than 9.5, the following features are satisfied.

*AUC3 (the ratio of the area under the curve in an interval with molecular weight logarithms of 6.5 or more but less than 8.0 to the area under the entire curve $MWDC_{6.5-9.5}$):

The swollen composition of the present invention may preferably be characterized in that the ratio of the area under the curve in an interval with molecular weight logarithms of 6.5 or more but less than 8.0 to the area under the entire curve $MWDC_{6.5-9.5}$ (hereinafter referred to as AUC3) is within a predetermined range. Specifically, the AUC3 of the swollen composition of the present invention may be within the range of 30% or more but 100% or less. More specifically, the lower limit may preferably be typically 30% or more, particularly 40% or more, or 50% or more, or 60% or more, or 70% or more, or 80% or more, or 90% or more. On the other hand, the upper limit may be, although not particularly limited to, typically 100% or less. Although the reason for this is not known, it is estimated that the ratio of the amylopectin with a relatively low molecular weight ratio to the total starch content in starch (thought to be contained in the fraction with molecular weight logarithms of 6.5 or more but less than 9.5) is greater than the predetermined value, resulting a desirable composition with a unique swollen-food texture to be easily felt. In addition, it is estimated that the relatively low molecular weight amylopectin derived from pulse and/or cereal tends to increase the ratio to higher than the predetermined value, resulting in a more desirable quality. Furthermore, a higher percentage of cereals containing relatively high molecular weight amylopectin, such as rice, tends to result in a lower AUC3 value.

*AUC4 (the ratio of the area under the curve in an interval with molecular weight logarithms of 3.5 or more but less than 5.5 to the area under the entire curve $MWDC_{3.5-6.5}$):

The swollen composition of the present invention may preferably be characterized in that the ratio of the area under the curve in an interval with molecular weight logarithms of 3.5 or more but less than 5.0 to the area under the entire curve $MWDC_{3.5-6.5}$ (hereinafter referred to as AUC4) is within a predetermined range. Specifically, the AUC4 of the swollen composition of the present invention may be within the range of 8% or more but 100% or less. More specifically, the lower limit may preferably be typically 8% or more, particularly 10% or more, or 15% or more, or 20% or more, or 25% or more, or 30% or more, or 35% or more, or 40% or more, or 45% or more, or 50% or more. On the other hand, the upper limit may be, although not particularly limited to, typically 100% or less, or 80% or less, or 60% or less. Although the reason for this is not known, it is estimated that some or all of the amylose contained in the starch (thought to be contained in a fraction with molecular weight logarithms of 5.0 or more but less than 6.5) is decomposed into dextrin with a lower molecular weight (thought to be contained in a fraction with molecular weight logarithms of 3.5 or more but less than 5.0), and that this decomposition ratio tends to be larger than a predetermined value, resulting a desirable composition with a more desirable quality and a unique swollen-food texture to be easily felt.

[Starch grain structure]

The swollen composition of the present invention may preferably be characterized in that the starch grain structures are broken down, since the resulting composition may exhibit smooth texture. Specifically, the swollen composition of the present invention may preferably satisfy the requirement(s) (a) and/or (b) below, more preferably both the requirements (a) and (b).

(a) When 6% suspension of a crushed product of the composition is observed, the number of starch grain structures observed is 40/mm$^2$ or less.
(b) When 14 mass % aqueous slurry of a crushed product of the composition is subjected to measurement with a rapid visco-analyzer with elevating the temperature from 50 °C to 140 °C at a rate of 12.5°C/min, the peak temperature of gelatinization obtained is 95 °C or lower.

*(a) Number of starch grain structures of the swollen composition:

Specifically, the swollen composition of the present invention may preferably be characterized in that the number of starch grain structures observed under these conditions is within the range of 0/mm$^2$ or more but 300/mm$^2$ or less. More specifically, the upper limit may preferably be typically 300/mm$^2$ or less, particularly 250/mm$^2$ or less, or 200/mm$^2$ or less, or 150/mm$^2$ or less, or 100/mm$^2$ or less, or 50/mm$^2$ or less, or 40/mm$^2$ or less, or 30/mm$^2$ or less, or 20/mm$^2$ or less, or 10/mm$^2$ or less, or 5/mm$^2$ or less. On the other hand, the lower limit may be, although not particularly limited to, typically 0/mm$^2$ or more.
The starch grain structures recited in (a) above are iodine-stained structures with circular shapes of about 1 to 50 $\mu$m in diameter in a planar image, and can be observed, for example, by preparing 6% aqueous suspension of crushed product of the composition and observing the suspension under magnified view. Specifically, 6% suspension of the composition powder is prepared by sieving crushed product of the composition through a sieve with 150 $\mu$m apertures, and 3 mg of the 150-$\mu$m pass composition powder is suspended in 50 $\mu$L of water. This suspension is then placed on a slide to obtain a prepared slide, which is observed under a phase contrast microscope with polarized light or under an optical microscope with iodine staining. The magnification factor is not restricted, but may be 100 times or 200 times. When the distribution of starch grain structures on the prepared slide is uniform, the percentage of starch grain structures in the entire prepared slide can be estimated by observing a representative field of view. On the other hand, when the distribution of starch grain structures on the prepared slide is found to be biased, a finite number of fields of view (e.g., two or more, e.g., five or ten) can be observed, and the observation results can be added together to obtain a measurement for the entire preparation. The reason for this is not clear, but it is estimated that the starch grains are destroyed when the pores in the dough composition expands under highly hydrated conditions (e.g., with a dry mass basis moisture content of 40 mass % or more, or 50 mass % or more, or 60 mass % or more, and 250 mass % or less, or 200 mass % or less).

*(b) RVA peak temperature of gelatinization of the swollen composition:

The swollen composition of the present invention may preferably be characterized in that the degree of gelatinization of starch in the composition as measured under conditions explained below may be within the range of more than 50 °C but 95 °C or lower. More specifically, the upper limit may preferably be typically 95 °C or lower, particularly 90 °C or lower, or 85 °C or lower, or 80 °C or lower. However, even in compositions where the starch grains have been destroyed, constituents may swell due to added water and exhibit pseudo temperature of gelatinization. Accordingly, the lower limit may be, although not particularly limited to, typically 50 °C, or more than more than 55 °C, or more than 60 °C.
The rapid viscometer analyzer (RVA) recited in in (b) above may be any device that can raise the temperature of the object to be measured up to 140°C, an example of which is the RVA4800 manufactured by Perten. The peak temperature of gelatinization measured with RVA at a temperature increase rate of 12.5°C/min can specifically be measured by the following procedure. A composition sample of 3.5 g dry mass is crushed such that the resulting crushed product has a size of, e.g., 100-mesh pass (150 $\mu$m mesh aperture) and 120-mesh on (125 $\mu$m mesh aperture). The resulting crushed material is then weighed into an aluminum cup for RVA measurement, and distilled water is added to make a total volume of 28.5 g to prepare 14 mass % sample aqueous slurry (this may be referred to simply as "composition crushed product aqueous slurry" or "sample aqueous slurry"), which is used for the RVA viscosity measurement in [Procedure a] above. The measurement is started at 50°C. The rotation speed is set at 960 rpm from the start of measurement for 10 seconds, and then changed to 160 rpm and maintained until the end of measurement. After held at 50°C for one minute, the temperature is increased at a rate of 12.5°C/minute from 50°C to 140°C, while the peak sizing temperature (°C) is measured.

The composition according to the present invention with less starch grain structures tends to have a relatively low peak temperature of gelatinization because no viscosity increase associated with swelling of starch grain structures due to addition of water occurs or, if any, the increase is slight. Accordingly, the peak temperature of gelatinization thus-measured tends to be lower than a predetermined limit, whereby a favorable effect is achieved. Specifically その temperature the temperature may preferably be within the range of more than 95 °C but 140 °C or lower. More specifically, the lower limit may preferably be 95 °C more than, particularly more than 100 °C, or more than 105 °C, or more than 110 °C. However, even in compositions where the starch grains have been destroyed, constituents may swell due to added water and exhibit pseudo temperature of gelatinization. Accordingly, the upper limit may be, although not particularly limited to, typically 140 °C or lower, or 135 °C or lower, or 130 °C or lower.

The term "peak temperature of gelatinization" used herein represents the temperature (°C) at which the viscosity shows the highest value (cP) within a given temperature range and then turns to a decreasing trend during the RVA temperature raising process, and is an index reflecting the heat resistance of starch grains. For example, if a composition has the highest viscosity at the 50°C holding stage immediately after the start of measurement and then decreases in viscosity, then the peak temperature of gelatinization is 50°C, and the viscosity at any temperature T°C (50≤T≤140°C) during the temperature increase stage from 50°C to 140°C is the highest. If the viscosity of a composition decreases during the temperature increase stage after T°C, the peak temperature of gelatinization is T°C. If the viscosity of a composition shows the highest value during the 140°C holding stage, then the peak temperature of gelatinization is 140°C.

[Characteristics relating to mass average molecular weight logarithm]

The swollen composition of the present invention may preferably be characterized in that when the composition is treated in accordance with the [Procedure a] above and the resulting product is analyzed under the [Condition A] above, the obtained mass average molecular weight logarithm is within a predetermined range. Specifically, the mass average molecular weight logarithm of the swollen composition of the present invention may be within the range of more than 5.0 but less than 7.5. More specifically, the upper limit may preferably be typically less than 7.5, particularly less than 7.0, or less than 6.5, or less than 6.5. The swollen compositions of the present invention is more likely to exhibit a unique swollen-food texture when the logarithm of their mass average molecular weight is less than the aforementioned upper limit. On the other hand, the lower limit may be, although not particularly limited to, for example typically more than 5.0, or more than 5.5.

[Absorbance with iodine staining]

The swollen composition of the present invention may preferably be characterized by the following feature. The composition is subjected to the [Procedure a] above and the resulting product is subjected to separation under the [Condition A] above. A sample is then prepared from a separated fraction with molecular weight logarithms of 5.0 or more but less than 6.5 by adjusting the pH of the fraction to 7.0 and staining one mass part of the fraction with 9 mass parts of iodine solution (0.25mM). The resulting sample is then measured for an absorbance at 660 nm, and the measured value is then calibrated by subtracting it from the absorbance at 660 nm of a blank 0.25 mM iodine solution (which contains no sample), the resulting value (also referred to as "$ABS_{5.0-6.5}$") may preferably be within a predetermined range. Specifically, the $ABS_{5.0-6.5}$ of the swollen composition of the present invention may be within the range of 0.10 or more but 3.50 or less. More specifically, the lower limit may preferably be typically 0.10 or more, particularly 0.15 or more, or 0.20 or more, or 0.25 or more, or 0.30 or more, or 0.35 or more, or 0.40 or more, or 0.45 or more, or 0.50 or more, or 0.55 or more, or 0.60 or more, or 0.65 or more, or 0.70 or more, or 0.75 or more, or 0.80 or more. On the other hand, the upper limit may be, although not particularly limited to, typically 3.50 or less, or 3.00 or less, or 2.50 or less.

The detailed measurement method for the aforementioned $ABS_{5.0-6.5}$ values is as follows. The composition is put into 40 times the volume of water, and then immediately (i.e., without carrying out isothermal treatment at 90°C for 15 minutes) treated according to the [Procedure a] above to obtain a purified and starch-concentrated ingredient. The purified and starch-concentrated ingredient is then separated under the [Condition A] above, and a separated fraction with molecular weight logarithms of 5.0 or more but less than 6.5 is collected. The details of the [Procedure a] and [Condition A] above have been described in detail above. The resulting separated fraction is then adjusted to pH 7.0 to prepare a sample, and one mass of the sample is put into 9 parts of 0.25 mM iodine solution at room temperature (20°C) for 3 minutes, and then subjected to absorbance measurement, which is performed as follows. Both an iodine solution before addition of the sample (control) and an iodine solution after addition of the sample are each measured for an absorbance (660 nm) with a conventional spectrophotometer (e.g., UV-1800 manufactured by Shimadzu Corp.) using a square cell with a 10 mm optical path length. The absorbance difference (i.e., {absorbance of iodine solution after addition of sample} minus {absorbance of iodine solution before addition of the sample}) is calculated and determined as $ABS_{5.0-6.5}$.

The composition of the present invention may preferably be characterized in that the separated fraction with molecular weight logarithms of 5.0 or more but less than 6.5 mentioned above has high iodine stainability compared to a separated fraction with molecular weight logarithms of 6.5 or more but less than 8.0, which has relatively higher molecular weights. Specifically, the composition is put into 40 times the volume of water, and then immediately (i.e., without carrying out isothermal treatment at 90°C for 15 minutes) treated according to the [Procedure a] above to obtain purified starch. The purified starch is then separated under the [Condition A] above, and a separated fraction with molecular weight logarithms of 6.5 or more but less than 8.0 is obtained. The resulting separated fraction is then adjusted to pH 7.0 to prepare a sample, and one mass of the sample is put into 9 parts of 0.25 mM iodine solution for staining. The resulting sample is then measured for an absorbance at 660nm, and the measured value is then calibrated by subtracting it from the absorbance at 660 nm of a blank 0.25 mM iodine solution (which contains no sample) to thereby obtain a calibrated value (also referred to as "$ABS_{6.5-8.0}$"). The ratio of the $ABS_{6.5-8.0}$ to the $ABS_{5.0-6.5}$ ($ABS_{6.5-8.0}/ABS_{5.0-6.5}$) may preferably be a predetermined value or more.

The composition of the present invention may preferably be characterized in that the $ABS_{6.5-8.0}/ABS_{5.0-6.5}$ value obtained in accordance with the procedure mentioned above is within the range of more than 1.0 but 10.0 or less. More specifically, the lower limit may preferably be typically more than 1.0, particularly more than 1.1, or more than 1.2, or more than 1.3, or more than 1.4, or more than 1.5, or more than 1.6, or more than 1.7, or more than 1.8, or more than 1.9, particularly more than 2.0. On the other hand, the upper limit of this parameter may be, although not particularly limited to, typically 10.0 or less, or 8.0 or less. The principle is unknown, but it is estimated that the ratio of the content of starch thermally decomposed becomes relatively large compared to the starch before decomposition, thereby increasing the ratio and finally resulting in a composition of good quality.

The details of the measurement method for $ABS_{6.5-8.0}$ are the same as those for $ABS_{5.0-6.5}$ described above, except that the separation fraction with molecular weight logarithms of 6.5 or more but less than 8.0 is used.

The term "iodine solution" used herein refers to a dilute solution of potassium iodide solution containing 0.05 mol/L of iodine (also simply referred to as "0.05 mol/L iodine solution" or "0.05 mol/L iodine solution). Unless otherwise specified, a mixed potassium iodide solution containing 93.7 mass % water, 0.24 mol/L (4.0% by mass) potassium iodide, and 0.05 mol/L (1.3% by mass) iodine (0.05 mol/L iodine solution (product code 091-00475) manufactured by FUJIFILM Wako Pure Chemicals Co.) is used after dilution. The "0.05 mol/L iodine solution" can be diluted 200 times with water to obtain a "0.25 mM iodine solution."

[Particle diameter $d_{50}$ after starch and protein digestion treatment followed by ultrasonication]

The swollen composition of the present invention may preferably be characterized in that when the composition is subjected to starch and protein digestion treatment defined in [Procedure b] below followed by ultrasonication, and then subjected to measurement for particle diameter distribution, the features below are satisfied.
[Procedure b] 6 mass % aqueous suspension of the composition is treated with 0.4 volume % of protease and 0.02 mass % of α-amylase at 20 °C for 3 days.

Specifically, the swollen composition of the present invention may preferably be characterized in that when the composition is subjected to starch and protein digestion treatment defined in [Procedure b], and then subjected to measurement for particle diameter distribution, the resulting particle diameter $d_{50}$ is within a predetermined range. This feature may preferably result in a composition that retains its swollen state after heat treatment while exhibiting a unique swollen-food texture. Although the principle behind this is unknown, it is estimated that these components reinforce the starch-based support structure of the composition of the present invention, resulting in a composition that exhibits a unique swollen-food texture. On the other hand, these components may preferably have a certain size or less, since it is estimated that if these components have more than a certain size, they will penetrate the starch-based support structure and will not retain their swollen state after heat treatment. Specifically, the swollen composition of the present invention may preferably be characterized in that the particle diameter $d_{50}$ on the particle diameter distribution is within the range of 1 μm or more but less than 450μm. More specifically, the upper limit may more preferably be typically less than 450μm, particularly 410 μm or less, or 350 μm or less, or 300 μm or less, or 260 μm or less, or 200 μm or less, or 150 μm or less, or 100 μm or less, or 80 μm or less, or 60 μm or less, particularly 50 μm or less. On the other hand, the lower limit of the particle diameter $d_{50}$ may preferably be, although not particularly limited to, typically 1 μm or more, more preferably 3 μm or more, or 5 μm or more.

Such particle size distribution is considered to reflect the particle size distribution of non-amylase-degradable and non-protease-degradable components, such as insoluble dietary fiber and polysaccharides (mainly cellulose, xylan, and pectin) in the composition. Therefore, in order to adjust said particle size in the composition, it is preferable to use insoluble dietary fiber or polysaccharide size in the raw material beforehand. Specifically, it is preferable to use raw materials containing these components that have been adjusted to be within a specified range, by physical crushing treatment or enzymatic treatment such as cellulase or pectinase. When raw materials treated with enzymes such as cellulase, pectinase or xylanase, any one of these enzymes may be used singly, but it is preferable to use at least pectinase and/or xylanase for treatment. In addition, when pectinase is used for the treatment, it is preferable to use pectinase in combination with cellulase.

Specifically, any enzyme that has cellulolytic enzyme activity can be used as a cellulase. Examples of cellulases that can be used include Cellulase T "Amano" 4 ("Cel-1" in Table 2) made by Amano Enzyme Inc., Cellulase A "Amano" 3 ("Cel-2" in Table 2 below) made by Amano Enzyme Inc. Any enzyme that has pectinolytic enzyme activity can be used as a pectinase. Examples of pectinases that can be used include Pectinase G "Amano" ("Pec" in Table 2 below) manufactured by Amano Enzyme Inc. Any enzyme that has xylan degradative enzyme activity can be used as xylanase, for example, hemicellulase "Amano" 90 (xylanase) ("xyl" in Table 2 below) made by Amano Enzyme Inc. However, cellulase, pectinase, and xylanase are not limited to these specific examples, and any other enzymes with desired substrate degradation characteristics can be used. When degrading two or more substrates, a mixture of two or more enzymes with activity to degrade each of those substrates may be used, or an enzyme with activity to degrade two or more of those substrates may be used.

In fermented and swollen compositions (e.g., breads or bread-like foods) that undergo microbial fermentation (especially yeast fermentation), enzyme treatment may be performed in parallel with the fermentation process by adding enzymes such as cellulase, pectinase or xylanase to the dough before fermentation, or dietary fiber-containing materials (especially materials containing insoluble dietary fiber) that have been previously enzyme treated may be used as ingredients. In particular, it is preferable to use an enzyme-treated product of the seed coat of edible wild plant psyllium (also referred to as psyllium husk or psyllium seed coat), which is a dietary fiber-localized part of psyllium, since this makes it possible to obtain a good swollen product. It is also preferred because, as described below, when the weighted average perimeter of the pores inside the composition is $\alpha$ and the weighted average area of the pores is $\beta$, the value of $\alpha/\beta$ of the resulting composition is adjusted into a predetermined range. In addition to the enzyme-treated seed coat of psyllium, it is preferable to use one or more of the dietary fiber-localized parts of pulse (more specifically, the seed coat of pulse, especially the seed coat of pea) or the fiber-localized parts of cereal (e.g., oats, more specifically the bran, especially the bran of oats), since the texture of the resulting swollen composition is improved. Furthermore, it is even more desirable to include both the enzyme-treated seed coat of psyllium and the enzyme-treated, dietary fiber-localized portion of cereal (more specifically, the bran **portion,** especially the bran portion in the enzyme-treated state described above), since this will result in a fermented swollen composition which exhibit the desired effects of the present invention. Enzymatic treatment of the seed coat of psyllium and the fiber-localized portion of pulse or cereal may be carried out either at different steps separately or at one step simultaneously. For example, the enzyme treatment may be carried out simultaneously at step (i) and/or at step (ii), or mainly at step (ii), by adding the enzyme in the dough composition.

The composition of the present invention may preferably contain a part of edible plant in which dietary fibers (i.e., both soluble and insoluble fibers) are localized. Specifically, the ratio of the dietary fiber-localized part to the total mass of the composition may preferably be within the range of 0.1 mass % or more but 20 mass % or less, in terms of dry mass basis. More specifically, the ratio the lower limit may preferably be 0.1 mass % or more, more preferably 0.2 mass % or more, furthermore 0.3 mass % or more, or 0.4 mass % or more, or 0.5 mass % or more, or 1.0 mass % or more, or 1.5 mass % or more, in terms of dry mass basis. On the other hand, the upper limit may be, although not typically restricted, preferably 20 mass % or less, more preferably 15 mass % or less, furthermore 10 mass % or less, or 7.5 mass % or less, or 5.0 mass % or less, in terms of dry mass basis. In addition, the ratio of psyllium husk (dietary fiber-localized part) may preferably be within the range of 0.1 mass % or more but 20 mass % or less in terms of dry mass basis. More specifically, the lower limit may preferably be 0.1 mass % or more, more preferably 0.2 mass % or more, furthermore 0.3 mass % or more, or 0.4 mass % or more, or 0.5 mass % or more, or 1.0 mass % or more, or 1.5 mass % or more. On the other hand, the upper limit may preferably be, although not typically restricted, 20 mass % or less, more preferably 15 mass % or less, furthermore 10 mass % or less, or 7.5 mass % or less, or 5.0 mass % or less.

The composition of the present invention may also preferably contain the seed skin of pulse as the dietary fiber-localized part (more specifically, insoluble dietary fiber-localized part) at the ratio mentioned above, since this makes it possible to obtain a good swollen product (e.g., puff, chips, and crisp). It is also preferred because, as described below, when the weighted average perimeter of the pores inside the composition is $\alpha$ and the weighted average area of the pores is $\beta$, the value of $\alpha/\beta$ of the resulting composition is adjusted into a predetermined range.

The swollen food composition according to the present invention may also preferably contain a part of edible plant in which dietary fibers (i.e., both soluble and insoluble fibers) are localized. Specifically, the total content of the edible part of pulse and/or cereal and the dietary fiber-localized part of edible plant, preferably the total content of the edible part of pulse and the dietary fiber-localized part of edible plant, more preferably the total content of the edible part of pulse and the dietary fiber-localized part of pulse and/or cereal, in the swollen food composition of the present invention may preferably be within the range of 10 mass % or more but 100 mass % or less, in terms of dry mass basis. More specifically, the lower limit may preferably be 10 mass % or more preferably, particularly 15 mass % or more, or 20 mass % or more, or 25 mass % or more, or 30 mass % or more, or 35 mass % or more, or 40 mass % or more, particularly 50 mass % or more. On the other hand, the upper limit of the content rate may be, although not particularly limited to, typically 100 mass % or less, or 97 mass % or less, or 95 mass % or less, or 93 mass % or less, or 90 mass % or less. In particular, it is preferable to use an edible part and a fiber-localized part of the same pulse (e.g., peas or other pulse with seed coat may be used as they are, or the edible part and the seed coat of such pulse may be separated, processed, and mixed again), or to use an edible part and a fiber-localized part of the same cereal (e.g., oats or other cereal with bran may be used as they are, or the edible part and the bran part of such cereal may be separated, processed, and mixed again).

The composition of the present invention may also preferably contain one or more of the seed coat part of pulse, the husk part of psyllium, or the bran part of cereal as the fiber-localized part of edible plant, together with the edible part and the fiber-localized part of food of the same category at predetermined ratios, also may more preferably contain both the edible part and the fiber localized part of the same food category (i.e., both the edible part of pulse and the seed coat (fiber-localized part) of pulse, or both the edible part of cereal and the bran (fiber-localized part) of cereal). The dietary fiber-localized part of pulse and/or cereal may be incorporated into the composition either by using the pulse and/or cereal containing the dietary fiber-localized part as they are or by using the dietary fiber-localized part separated from pulse and/or cereal. The dietary fiber-localized part may be an insoluble dietary fiber-localized part. In this case, the total content of the edible part of pulse and/or cereal and the insoluble dietary fiber-localized part of edible plant may preferably satisfy the ratios mentioned above. Specifically, the total content may preferably be within the range of 10 mass % or more but 100 mass % or less in terms of dry mass basis. More specifically, the lower limit may preferably be 10 mass % or more preferably, particularly 15 mass % or more, or 20 mass % or more, or 25 mass % or more, or 30 mass % or more, or 35 mass % or more, or 40 mass % or more, particularly 50 mass % or more. On the other hand, the upper limit may be, although not particularly limited to, typically 100 mass % or less, or 97 mass % or less, or 95 mass % or less, or 93 mass % or less, preferably 90 mass % or less.

The total content of the edible part of pulse and the dietary fiber-localized part of pulse may preferably be within the range of 10 mass % or more but 100 mass % or less in terms of dry mass basis. More specifically, the lower limit may preferably be 10 mass % or more, particularly 15 mass % or more, or 20 mass % or more, or 25 mass % or more, or 30 mass % or more, or 35 mass % or more, or 40 mass % or more, particularly 50 mass % or more. On the other hand, the upper limit of the content rate may be, although not particularly limited to, typically 100 mass % or less, or 97 mass % or less, or 95 mass % or less, or 93 mass % or less, or 90 mass % or less.

The total content of the edible part of cereal and the dietary fiber-localized part of cereal may preferably be within the range of 10 mass % or more but 100 mass % or less, in terms of dry mass basis. More specifically, the lower limit may preferably be 10 mass % or more, particularly 15 mass % or more, or 20 mass % or more, or 25 mass % or more, or 30 mass % or more, or 35 mass % or more, or 40 mass % or more, particularly 50 mass % or more. On the other hand, the upper limit of the content rate may be, although not particularly limited to, typically 100 mass % or less, or 97 mass % or less, or 95 mass % or less, or 93 mass % or less, or 90 mass % or less.

The composition of the present invention may more preferably contain pulverized pulse (which are prepared by pulverizing the edible part and the fiber localized part of pulse, e.g., by pulverizing peas or other pulse with seed coat as they are, or separating the edible part and the seed coat part of pulse, pulverizing them, and then mixing them again, or separating the pulverized edible part of pulse and the pulverized seed coat part of pulse, processing them, and mixing them again) and/or pulverized cereal (which are prepared by pulverizing the edible part and the fiber localized part of cereal, e.g., by pulverizing oats or other cereal with bran as they are, or separating the edible part and the bran part of cereal, pulverizing them, and then mixing them again, or separating the pulverized edible part of pulse and the pulverized bran part of cereal, processing them, and mixing them again).

The composition of the present invention may also preferably contain the seed coat of wild plant psyllium usually used for food (psyllium seed coat or psyllium husk) as a dietary fiber-localized part (more preferably, as a soluble dietary fiber and insoluble dietary fiber-localized part) at the ratio mentioned above, since this makes it possible to obtain a good swollen product (e.g., bread or bread-like food) with desired effects. It is also preferred because, as described below, when the weighted average perimeter of the pores inside the composition is $\alpha$ and the weighted average area of the pores is $\beta$, the value of $\alpha/\beta$ of the resulting composition is adjusted into a predetermined range. In addition, the composition of the present invention may also preferably contain psyllium husk that has undergone the enzyme treatment mentioned above (preferably treated with cellulase and/or pectinase and/or xylanase, more preferably treated with at least pectinase and/or xylanase) at the ratio mentioned above. The composition of the present invention may also preferably contain both the seed skin part of pulse and the psyllium husk (preferably enzyme-treated psyllium husk), and it may be more preferable that the total content is within the ratio mentioned above. The composition may preferably contain, in addition to the seed skin part of psyllium, one or more of the dietary fiber-localized part of pulse (more preferably, the seed skin part of pulse, particularly the seed skin part of peas) and the dietary fiber-localized part (more preferably, the bran part, particularly the enzyme-treated bran part) of cereal (for example, oats), since this will improve the food texture of the resulting swollen composition. The composition may more preferably contain both the seed skin part of psyllium and the dietary fiber-localized part (more specifically bran part, particularly the enzyme-treated bran part) of cereal, since the resulting composition (particularly fermented swollen composition) exhibits the desired effects of the present invention.

A more specific procedure for measuring the particle size distribution of insoluble dietary fiber, polysaccharides, etc., in a composition is as follows. 300 mg of the composition is placed in a plastic tube with 5 mL of water, allowed to swell at 20°C for about 1 hour, and then processed using a small Hiscotron (Microtech Nichion homogenizer NS-310E3) until a porridge-like consistency is obtained (about 15 seconds at 1000 rpm) to prepare a 6 mass % water suspension of the composition. 2.5 mL of the treated sample is then divided and combined with 10 $\mu$L of protease (Proteinase K, Takara Bio) and 0.5 mg of $\alpha$-amylase ($\alpha$-Amylase from Bacillus subtilis, Sigma), and allowed to react at 20°C for 3 days. After the reaction, the resulting protease- and amylase-treated composition is subjected to sonication, and then to measurement for particle size distribution.

The measurement of particle size distribution of a protease- and amylase-treated composition after ultrasonic treatment shall be performed using a laser diffraction particle size analyzer according to the following conditions. Ethanol is used as the solvent for the measurement, which has little effect on the structure of the composition. The laser diffraction particle size analyzer used for the measurement is not limited to any particular type, an example being Microtrac MT3300 EXII system marketed by Microtrac Bell Inc. The measurement application software used for the measurement is not limited, an example being DMS2 (Data Management System version 2, Microtrac Bell Inc.). When the device and the application software mentioned above are used, the measurement can be carried out by: carrying out cleaning by pressing the Wash button of the software; carrying out calibration by pressing the Set Zero button of the software; and directly loading the sample via the Sample Loading feature until the sample concentration is within the proper range. After the sample is loaded, the measurement sample is subjected to ultrasonic treatment by the measurement device, followed by measurement. Specifically, a sample that has not been subjected to ultrasonic treatment is put into the measurement solvent (ethanol) circulating in the measurement system, the concentration is adjusted to within the appropriate range using the Sample Loading feature, and then the ultrasonic treatment is performed by pressing the Ultrasonic Treatment button of the software. Then, after three times of defoaming, the sample loading can be carried out again to adjust the concentration to within the appropriate range. Thereafter, the sample is promptly laser diffracted at a flow rate of 60% with a measurement time of 10 seconds, and the result is used as the measurement value. The parameters for the measurement may be, e.g., Distribution indication: Volume; Particle refractive index: 1.60; Solvent refractive index: 1.36; Upper limit of measurement: 2,000.00 $\mu$m; Lower limit of measurement: 0.021 $\mu$m.

The term "particle size $d_{50}$" (or the term "particle size $d_{90}$") herein refers to, when the particle size distribution of the object is measured on a volume basis and divided into two parts at a certain particle size, the particle size at which the ratio between the cumulative value of the particle frequency % on the larger side to that on the smaller side are 50:50 (or 10:90). The "ultrasonic treatment" herein refers to a treatment with ultrasonic waves of 40 kHz frequency at an output of 40 W for 3 minutes, unless otherwise specified. Furthermore, all particle size distributions, not limited to this context but throughout the specification, are measured on a volume basis.

[Porosity]

The swollen composition of the present invention may preferably be characterized in that when the composition is frozen at -25 °C and cut along a cut plane A into a frozen section A with a thickness of 30$\mu$m, the total porosity observed on the frozen section A is within a predetermined range. This characteristic relating to the porosity may preferably be satisfied not only for the cut plane A but also for a cut plane B, which is orthogonal to the cut plane A. The cut plane A may more preferably be a cut plane of a frozen section obtained by cutting in a cut plane perpendicular to the longitudinal direction of the composition, and this characteristic relating to the porosity may more preferably be satisfied not only for the cut plane A but also for a cut plane B, which is orthogonal to the cut plane A. In this case, the cut plane A may preferably be orthogonal to the longitudinal direction, and the cut plane B may preferably be parallel to the longitudinal direction. When there is more than one longitudinal direction of the composition, any direction can be adopted. The properties of the entire composition can be more accurately evaluated by evaluating both the cut plane A and the cut plane B, which is orthogonal to the cut plane A.

The "longitudinal axis" of a composition herein refers to a longitudinal direction of a hypothetical rectangle with a minimum volume inscribed in the composition, while the "transverse axis" of a composition herein refers to a line perpendicular to the longitudinal axis. In cases where there are multiple longitudinal directions of the composition, any direction can be adopted.

Specifically, the total porosity of the swollen composition of the present invention may preferably be within the range of more than 1% but 90% or less. More specifically, the lower limit may preferably be typically more than 1%, particularly more than 2%, or more than 3%, or more than 4%, or more than 5%, or more than 6%, or more than 7%, or more than 8%, or more than 9%, or more than 10%, or more than 11%, or more than 12%, or more than 13%, or more than 14%, or more than 15%, or more than 20%, particularly more than 30% が preferably. On the other hand, the upper limit may be, although not particularly limited to, typically 90% or less, or 80% or less.

In addition, the ratio of the area of closed pores to the total area of pores on the frozen section of the swollen composition of the present invention may preferably be within the range of 20% or more but 100% or less. More specifically, the lower limit may preferably be typically 20% or more, particularly 30% or more, or 40% or more, or 50% or more, from the viewpoint of swellability. On the other hand, the upper limit may be, although not particularly limited to, typically 100% or less, or 90% or less.

In addition, the ratio of the area of closed pores to the total area on the frozen section of the swollen composition of the present invention may preferably be within the range of more than 1% but 50% or less. More specifically, the lower limit may preferably be typically more than 1%, particularly more than 2%, or more than 3%. On the other hand, the upper limit may be, although not particularly limited to, typically 50% or less, or 40% or less, or 30% or less.

The measurement of characteristics relating to porosity, such as the total area of pores, can be carried out as follows. A frozen section prepared by the method described below is placed under the field of view of a microscope with a magnification of, e.g., 200x, and a color photograph with a pixel count of 1360x1024 is taken for analysis. Specifically, the vertices of adjacent convexities in the composition image are connected by line segments so that they do not intersect the composition image at the shortest distance to draw an envelope perimeter. The envelope area surrounded by the obtained envelope perimeter (the number of pixels surrounded by the envelope perimeter) is then calculated, and the composition area (the number of pixels constituting the image of the solid composition other than pores, etc.) from the obtained envelope area to obtain the difference (total pore area). The ratio of this difference to the composition area (total pore area/composition area) is calculated as the total pore ratio. Accordingly, the term "pores" used herein refers to a concept that encompasses both open and closed pores.

The swollen composition of the present invention may preferably be characterized in that the closed pores of the frozen section of the composition satisfy the characteristics relating to porosity. Specifically, the total closed pore ratio, which is calculated as the ratio of the total area of closed pores to the area of the composition area on the frozen section, may preferably be within the range of more than 1% but 90% or less. More specifically, the lower limit may preferably be typically more than 1%, particularly more than 2%, or more than 3%, or more than 4%, or more than 5%, or more than 6%, or more than 7%, or more than 8%, or more than 9%, or more than 10%, or more than 11%, or more than 12%, or more than 13%, or more than 14%, or more than 15%, or more than 20%, particularly more than 30%. On the other hand, the total closed pore ratio the upper limit of, although not particularly limited to, typically 90% or less, or 80% or less.

[Weighted average perimeter of pores/weighted average area of pores]

The composition of the present invention may preferably be characterized in that when the weighted average perimeter of the pores inside the composition is $\alpha$ and the weighted average area of the pores is $\beta$, the value of the $\alpha/\beta$ ratio satisfies a predetermined range. Specifically, the $\alpha/\beta$ value of the composition of the present invention may preferably be within the range of 0.00% or more and 1.5% or less. More specifically, the upper limit may be typically 1.5% or less, or 1.4% or less, or 1.3% or less, or 1.2% or less, or 1.1% or less, or 1.0% or less, or 0.9% or less, or 0.8% or less, or 0.7% or less, or 0.6% or less, or 0.5% or less. The composition having an $\alpha/\beta$ value not exceeding the upper limit mentioned above is preferred since it tends to have a rigid structure whose pores are resistant to collapse pores. The principle behind the improved stability of pores by adjusting the $\alpha/\beta$ value of the composition to a certain limit or less is unknown, but it is possible that heating the composition under conditions with a sufficient amount of water causes the starch grains surrounding the pores of the composition to collapse, resulting in a composition with less unevenness in the support structures that make up the pore walls. On the other hand, the lower limit of the $\alpha/\beta$ value of the composition of the present invention may be, although not limited to, for example typically 0.00% or more, or 0.005% or more, or 0.01% or more, or 0.02% or more, or 0.03% or more, or 0.04% or more, or 0.05% or more, or 0.10% or more, or 0.15% or more.

In the present invention, the geometrical characteristics of pores in the composition, i.e., "perimeter" and "area," can be determined based on a two-dimensional cross-sectional image of the composition (e.g., an X-ray CT scan image, which allows non-destructive evaluation of the composition's internal pore shapes). That is, a virtual cut plane A1 of the composition can be acquired and evaluated as a 2D cross-sectional image by X-ray CT scan. In this case, the "perimeter" of a certain pore in a composition represents the value obtained by calculating the length of the rounded corners of the pore on a two-dimensional cross-sectional image of the composition in terms of the number of pixels, with the length of one side of a pixel as "one pixel." Pores that do not have intricate internal contours have smaller "perimeters." Specifically, the "perimeter" of a pore is calculated by, in principle, summing up, among the pixels that make up the pore image (2 pixels x 2 pixels or more), the number of pixels that are not in contact with other pixels and form the contour of the pore. However, as an exception, for pixels that are in contact with other pixels only on two orthogonal sides, the diagonal length is calculated as the number of pixels to round off the corners. Accordingly, a composition having pores with small irregularities have a relatively small perimeter length ($\alpha$) relative to its pore area ($\beta$), resulting in a relatively small $\alpha/\beta$ value.

The porosity can also be determined based on a two-dimensional cross-sectional image. Specifically, the virtual cut plane A1, which corresponds to the cut plane A, may preferably satisfy the porosity requirement described above, and the virtual cut planes A1 and B1, which correspond to the cut planes A and B, respectively, may preferably satisfy the porosity requirement described above. The "area" of a certain pore of a composition herein refers to an area equivalent to the total number of pixels constituting the pore on a two-dimensional cross-sectional image of the composition. All pixels overlapping the contour of the pore shall be counted as pixels constituting the pore. It is preferable that both the virtual cut plane A1 and the virtual cut plane B1, which is orthogonal to the virtual cut plane A1, satisfy the requirements of $\alpha/\beta$, etc. It is

preferable that the virtual cut plane A1 is at least a cut plane orthogonal to the longitudinal direction of the composition. In this case, it is also preferable that both the virtual cut plane A1 and the virtual cut plane B1, which is orthogonal to the virtual cut plane A1, satisfy the requirements of $\alpha/\beta$, etc. In this case, the virtual cut plane A1 should be orthogonal to the longitudinal direction, and the virtual cut plane B1 should be parallel to the longitudinal direction. In cases where there are multiple longitudinal directions of a composition, any direction can be adopted, and the properties of the entire composition can be more accurately evaluated by evaluating the virtual cut plane A1 and its transverse virtual cut plane B1.

In the present invention, the "weighted average perimeter" of the pores of a composition can be calculated using the perimeter value of each pore as a weight, and the "weighted average area" of the pores of a composition can be calculated using the area of each pore as a weight. Specifically, the percentage of the measured value (pore area and pore perimeter) for each pore is calculated when the total of the measured values (pore area and pore perimeter) for all pores is 100. The percentage of each pore is further multiplied by the measured value (pore area and pore perimeter) of the pore as a weight. This multiplied value is calculated for each pore {(the square of the measured value of each pore) / (the sum of the measured values of all pores)}, and the sum of the calculated values of all pores is determined as the weighted average value. For any of the above parameters related to the shapes of pores, when analyzing a magnified image, the respective values can be converted to actual values by converting an image of known length (scale bar, etc.) into pixels.

A more specific method of determining the "weighted average perimeter" and "weighted average area" of the porosity of a composition according to the present invention will be described using a two-dimensional cross-sectional image of the composition obtained by an X-ray CT scanner as an example. For example, a microfocus CT scanner capable of generating images with a magnification factor of 200x (e.g., phoenix v|tome|x m, Baker Hughes Co.) is used to capture an X-ray transmission image of a composition cross section. More specifically, for example, X-ray transmission images of 900 spots at different angles (taken at 360°/900 spots) are taken by phoenix v|tome|x m (Baker Hughes Co.) in nanofocus mode, while rotating the composition under the following imaging conditions. From the images thus obtained, a two-dimensional cross-sectional image (magnification 200x, number of pixels 2000 x 2000, 200 $\mu$m pixels) is generated and acquired.

<Imaging conditions>

X-ray tube type: Nanofocus open tube
Minimum detectable size: 1$\mu$m
Tube voltage: 30kV
Tube current: 300$\mu$A
Timing: 500 msec
Scan rate: 2 (3 images are taken at each spot and the first one is discarded)
Filter: none

Using the 2D cross-sectional image thus obtained, a corrected image is created by excluding, from the density specific gravity class values in the image, the peaks that are thought to originate from the background (mainly considered to be air). The resulting corrected image is grayscaled and binarized, and all pixel sets each of which consists of pixels that are white-cut (i.e., pixels corresponding to pores in the original photo) and are connected to each other at any of their four sides and is independent of other pixel sets are extracted as "pores," and their shapes, etc. are evaluated. Binarization is carried out using a discriminant analysis method to determine a threshold value so as to maximize the variance ratio of the within-class variance and between-class variance for the background and pattern regions when binarized. Specifically, the grayscaled image can be binarized using Particle Analysis ver. 3.5 (Nittetsu Technology, Inc.). Next, these pixel aggregates are screened for those that overlap in whole or in part on the outer edges of the field of view, and the remaining pixel aggregates are selected for analysis. If there are independent black pixels inside the set of white pixels (i.e., if there are spot-like dots, etc. inside the pore in the image), the area is calculated ignoring such pixels. For the selected pores, the pore perimeters and pore areas can be measured and calculated by the above procedure as parameters related to the shape of the pore area. The measurement and calculation of these parameters can be performed using various known image analysis software that can analyze shapes in an image.

[Density (bulk density)]

The swollen composition of the present invention may be characterized in that its density (hereinafter also referred to as "bulk density" or "density specific gravity") is less than a predetermined value due to swelling. Specifically, the density (bulk density) of the composition of the present invention may preferably be 0.10g/cm$^3$ more than 1.0g/cm$^3$ less than may preferably be within the range of. More specifically, the upper limit may be typically 1.0g/cm$^3$ less than,

particularly 0.90g/cm$^3$, or less than 0.80g/cm$^3$, or less than 0.70g/cm$^3$, or less than 0.60g/cm$^3$ less than. On the other hand, the lower limit may be, although not particularly limited to, typically 0.10g/cm$^3$, or more than 0.15g/cm$^3$, or more than 0.20g/cm$^3$, or more than 0.25g/cm$^3$, or more than 0.30g/cm$^3$ more than.

The density (bulk density) of the composition of the present invention refers to the value obtained by dividing the mass of the composition by the apparent volume of the composition (which corresponds to the total volume of "the volume of the composition itself," "the volume of pores connected to the outside on the surface of the composition," and "the volume of internal pores"). A method of measurement may include measuring the apparent volume (Vf) of about 100 g of the composition (m), and calculating the composition density (g/mL) using m/Vf. In this regard, since the value of density is almost equal to the value of specific gravity (the ratio of the density of a substance to the density of water 0.999972 g/cm$^3$ at 4°C under atmospheric pressure), the values in the above requirement may be indicated using specific gravity with no unit number.

[Protein content]

The swollen composition of the present invention may preferably be characterized in that it has a protein content of within a predetermined range. Specifically, the protein content in the swollen composition of the present invention may preferably be within the range of 3.0 mass % or more 40 mass % or less in terms of dry mass basis. More specifically, the lower limit may preferably be 3.0 mass % or more, particularly 4.0 mass % or more, or 5.0 mass % or more, or 6.0 mass % or more, or 7.0 mass % or more, or 8.0 mass % or more, or 9.0 mass % or more, or 10 mass % or more, or 11 mass % or more, or 12 mass % or more, or 13 mass % or more, or 14 mass % or more, or 15 mass % or more, or 16 mass % or more, or 17 mass % or more, or 18 mass % or more. On the other hand, the upper limit may be, although not particularly limited to, typically 40 mass % or less, or 30 mass % or less, or 25 mass % or less, or 20 mass % or less.

The origin of the protein in the composition of the present invention is not particularly restricted. Examples include plant-derived protein and animal-derived protein, of which protein derived from pulse and/or cereal. Specifically, the ratio of the content of protein derived from pulse and/or cereal (preferably the content of protein derived from pulse) to the total protein content in the whole composition may preferably be within the range of 10 mass % or more but 100 mass % or less. More specifically, the lower limit may preferably be typically 10 mass % or more, particularly 20 mass % or more, or 30 mass % or more, or 40 mass % or more, or 50 mass % or more, or 60 mass % or more, or 70 mass % or more, or 80 mass % or more, or 90 mass % or more. On the other hand, the upper limit may be, although not particularly limited to, typically 100 mass %, or 100 mass % or less. The pulse-derived protein may preferably be particularly pea-derived protein, most preferably yellow pea-derived protein. The cereal-derived protein may preferably be protein derived from oats.

The protein incorporated in the composition of the present invention may be in the form of an isolated pure product or, preferably, may be present in the state of being contained in pulse and/or cereal. Specifically, the ratio of the total content of protein contained in pulse and/or cereal protein (preferably the content of protein contained in pulse) in the whole composition total protein content may preferably be within the range of 10 mass % or more and 100 mass % or less. More specifically, the lower limit may preferably be typically 10 mass % or more, particularly 20 mass % or more, or 30 mass % or more, or 40 mass % or more, or 50 mass % or more, or 60 mass % or more, or 70 mass % or more, or 80 mass % or more, or 90 mass % or more. On the other hand, the upper limit may be, although not particularly limited to, typically 100 mass %, or 100 mass % or less.

The protein content in a composition herein can be measured by, e.g., quantifying the total amount of nitrogen according to the combustion method (improved Dumas method) specified in the Food Labeling Law ("About Food Labeling Standards" (Consumer Food Indication No. 139 dated March 30, 2015))," and then multiplying the total amount of nitrogen with the "nitrogen-protein conversion factor."

[Features relating to CFW Staining]

The swollen composition of the present invention may preferably be characterized in that when the composition is frozen at -25 °C and cut along a cut plane C into a frozen section C with a thickness of 30μm, and the section C is subjected to calcofluor white (CFW) staining and then observed under fluorescence microscope, the resulting CFW-stained sites satisfying the following features.

*Preparation of Frozen Sections after Treated in Heated Water and Observation with CFW staining:

According to the present invention, the composition is frozen at -25 °C and cut along certain cut planes into frozen sections with a thickness of 30μm. These frozen sections can be observed in their unstained state in order to measure the porosity and other properties in the composition. These frozen sections can also be observed with CFW staining in order to measure the shape and size of insoluble dietary fiber in the composition.

The method for preparation of a frozen section of a composition and observation thereof with CFW staining is not limited, but they may preferably be carried out in accordance with the following procedure. The composition is placed in a 1000-fold volume of water heated to 90°C or higher (more specifically, in water at 90°C) for 6 minutes, and then frozen at -25°C and cut into a section with a thickness of 30 $\mu$m according to Kawamoto method described in "Use of a new adhesive film for the preparation of multipurpose fresh-frozen sections from hard tissues, whole-animals, insects and plants", Arch. Histol. Cytol., (2003), 66[2]:123-43. The thus-obtained frozen section of the composition is stained with, e.g., CFW (Calcofluor-white: 18909-100ml-F, from Sigma-Aldrich). More specifically, the frozen section of the composition is adsorbed on a glass slide, onto which 1$\mu$L of CFW is added and mixed, and a cover glass is placed. The resulting sample is observed under a magnified field of view with a fluorescence microscope (e.g., BZ-9000 fluorescence microscope from Keyence) using an appropriate filter. The magnification of the fluorescence microscope during observation is not limited, but for example, the sample may be placed under the field of view of a microscope with a magnification of 200x, and a color photograph of, for example, 1360 x 1024 pixels may be taken for analysis.

*Determination of Shapes of CFW-Stained Sites in Frozen Composition Section:

The CFW-stained photographs of compositional frozen sections taken by the procedure described above are observed for the shape of each stained area is measured by the following method.

Specifically, a CFW-stained frozen section is observed and photographed under a fluorescence microscope with a 200x field of view, and the taken photograph is subjected to image analysis for extracting CFW-stained sites as pixel clusters. Specifically, the maximum distance between two points on the contour line for each CFW-stained site (with the longest diameter of 1 $\mu$m or more) on the obtained image is determined as the "longest diameter" of each CFW-stained site. In addition, "{the longest diameter of each CFW-stained site image} divided by {the distance between two straight lines parallel to the longest diameter of each CFW-stained site and tangent to the contour of the CFW-stained site}" is determined as the "aspect ratio" of each CFW stained site. The arithmetic average is calculated for each of the longest diameters and the aspect ratios of the CFW-stained sites on the obtained image and used for evaluation.

For analyzing each of the above parameters related to the shape of the stained sites in consideration of the magnified image of the microscope, the respective values can be converted to actual measurements based on the pixel count of the image of a known length (e.g., a scale bar).

Each of the thus-chosen stained sites is then subjected to measurement of parameters related to its shape, such as area, area ratio, perimeter, and degree of roundness. These parameters can be measured by using various known image analysis software used for analysis of shapes in an image.

The "area" of a stained site herein refers to the area corresponding to the total number of pixels forming the stained site.

Specifically, the average of the longest diameters of CFW-stained sites observed for the swollen composition of the present invention may preferably be within the range of 1 $\mu$m or more but less than 450$\mu$m. More specifically, the upper limit may preferably be typically less than 450$\mu$m, particularly 400 $\mu$m or less, or 350 $\mu$m or less, or 300 $\mu$m or less, or 250 $\mu$m or less, or 200 $\mu$m or less, or 150 $\mu$m or less, or 100 $\mu$m or less, or 80 $\mu$m or less, or 60 $\mu$m or less, particularly 50 $\mu$m or less. On the other hand, the lower limit of the particle diameter $d_{50}$ of the insoluble dietary fiber may be, although not particularly limited to, typically 1 $\mu$m or more, or 3 $\mu$m or more.

In addition, the arithmetic average of the aspect ratio of the CFW-stained sites observed for the swollen composition of the present invention may preferably be within the range of 1.1 one or more but 5.0 or less. More specifically, the upper limit may be typically 5.0 or less, or 4.5 or less, or 4.0 or less, or 3.5 or less, or 3.0 or less, or 2.5 or less, particularly 2.0 or less. If the average value of the aspect ratio of the CFW-stained areas exceeds the aforementioned range, the effects of the invention may be less effective. On the other hand, the lower limit of the arithmetic average of the aspect ratio of the CFW-stained sites may be, although not particularly limited to, typically 1.1 or more, or 1.3 or more.

The swollen composition of the present invention may also preferably be characterized in that at least a part of the CFW-stained sites is embedded in iodine-stained sites. Specifically, the ratio of the CFW-stained sites embedded in iodine-stained sites may preferably be within the range of 50% or more 100% or less. More specifically, the lower limit may preferably be typically 50% or more, or 60% or more, or 70% or more, or 80% or more, or 90% or more. The upper limit may be, although not particularly limited to, typically 100%, or 100% or less. It is preferred that at least a part (preferably at a ratio of at least the lower limit mentioned above) of the CFW-stained sites is embedded in iodine-stained sites, as this tends to improve swelling during heat treatment and gives the composition a unique swollen-food texture. Although the principle is unknown, it is estimated that the composition of the present invention contains support structures composed of starch-based iodine-stained sites, while some of the CFW-stained sites, which are mainly composed of insoluble dietary fiber, are embedded in the support structure and reinforces that structure, thereby improving swelling during heat treatment and providing the composition with a unique swollen-food texture. The term "embedded" herein refers to the state where a CFW-stained site is surrounded by an iodine-stained site, e.g., the state where more than 50% of the circumference of a CFW-stained image is in close proximity at a distance of 1 $\mu$m or less to, or in contact with, an iodine-stained site.

[Features relating to imaging mass spectrometry]

The composition of the present invention may preferably be characterized in that when the composition is frozen at -25 °C and cut along a cut plane C into a frozen section C with a thickness of 30 $\mu$m, and the frozen section C is subjected to imaging mass spectrometry by means of NANO-PALDI MS (NanoParticle Assisted Laser Desorption/Ionization Mass Spectrometry) using iron oxide nanoparticles coated with $\gamma$-aminopropyltriethoxysilane as an ionization assisting agent (under [Condition C] explained below), the measurement results satisfy at least one or more of the features (c1) to (c3) below.

*Analysis of a frozen section by imaging mass spectrometry using NANO-PALDI MS:

[Condition C] is the condition under which the composition is frozen at -25 °C and cut along a cut plane C into a frozen section C with a thickness of 30 $\mu$m, and the frozen section C is subjected to imaging mass spectrometry by means of NANO-PALDI MS (NanoParticle Assisted Laser Desorption/Ionization Mass Spectrometry) using iron oxide nanoparticles coated with $\gamma$-aminopropyltriethoxysilane as an ionization assisting agent. NANO-PALDI MS can be carried out according to the method described in Shu Taira. et al., "Nanoparticle-Assisted Laser Desorption/Ionization Based Mass Imaging with Cellular Resolution," Anal. Chem., (2008), 80, 4761-4766. An example of the detailed conditions is as follows.
A Rapiflex (Bruker) is used as the NANO-PALDI MS analyzer for imaging mass spectrometry. Image acquisition is carried out using a NanoZoomer-SQ (Hamamatsu Photonics K.K.) under conditions of 21504 x 13440 pixels, and the analysis software flexControl (Bruker) under measurement conditions of laser frequency: 10 kHz, laser power: 100, the number of shots: 500, sensitivity gain: 26x (2905 V), scan range: X5 $\mu$m, Y5 $\mu$m, and the resulting field size: X = 9 $\mu$m, Y = 9 $\mu$m, and the imaging area is set to surround the entire composition cross-section. The ionization assisting agent is sprayed manually using an airbrush so that the measurement target is evenly covered. The iron oxide nanoparticles coated with $\gamma$-aminopropyltriethoxysilane are prepared by mixing 20 mL of 100 mM iron (II) chloride tetrahydrate (FUJIFILM Wako Pure Chemicals Co.) and 20 mL $\gamma$-aminopropyltriethoxysilane (Shin-Etsu Chemical Co., Ltd) for 1 hour at room temperature, washing the precipitate produced five times with distilled water, and drying the washed precipitate at 80°C. For measurement, 10 mg of dried $\gamma$-aminopropyltriethoxysilane-coated iron oxide nanoparticles are suspended in 1 mL of methanol and centrifuged at 6000 G for 1 min, and 0.5 mL of the supernatant is sprayed onto a glass slide and dried in a decompression desiccator for 10 min for use.
Signal intensity analysis is performed by Fleximage. Specifically, the signal intensities at m/z 66.88278 $\pm$ 0.36786 and at m/z 80.79346 $\pm$ 0.44436 are displayed as shades of white in a composition cross-sectional image, and the white intensity in the image is measured to determine the intensity of each target substance (thus the background with no signal is black). The signal intensity is measured by using imageJ as image analysis software and specifying the measurement area to surround the entire composition cross-sectional image. In other words, the term "signal intensity" herein refers to the total signal intensity in the range of 66.88278 $\pm$ 0.36786 for m/z 66.88278 and the total signal intensity in the range of 80.79346 $\pm$ 0.44436 for m/z 80.79346.
The signal intensity of each pixel constituting each composition cross-sectional image thus-obtained is determined and stratified into 255 segments, with the highest intensity being 255 and the lowest being 0, to thereby calculate the luminance and luminance fraction (i.e., the numerical value calculated as the ratio of luminance in each pixel with respect to the total luminance in all pixels constituting the composition cross-sectional image as the denominator). The average luminance is calculated by obtaining the multiplication value (luminance x luminance fraction) of the luminance and the luminance fraction at each pixel and summing the said multiplication value for all pixels (when mentioned simply as the "average luminance" herein, it refers to the value explained in this paragraph, not the "luminance per pixel" described below. Also, the average luminance calculated from the signal intensity at m/z = N (where N is an arbitrary number) may be labelled as "AVN").
The "luminance per pixel" is obtained by dividing the total value of luminance at each pixel thus-obtained by the number of pixels having a luminance between 1 and 255. The obtained luminance per pixel is then subtracted from the luminance of each pixel, the resulting value is then squared and divided by the number of pixels having a luminance of between 1 and 255 to determine a variance, and the square root of the variance is calculated as a standard deviation (note that the standard deviation of brightness in signal intensity variance at m/z =N (where N is an arbitrary number) may be referred to as the "$SD_N$"). .

*Feature (c1): Product of the average luminances at m/z = 66.88278 and 80.79346

The composition of the present invention may preferably be characterized in that when the frozen section C is analyzed under the [Condition C] above to obtain imaging mass spectrometry data, the product of an average luminance calculated from a signal intensity at m/z 66.88278 ($AV_{66.88278}$) and an average luminance calculated from a signal intensity at m/z 80.79346 ($AV_{80.79346}$), i.e., $AV_{66.88278}$ x $AV_{80.79346}$, is a predetermined value or more (feature (c1)). This feature is desirable because it may serve to prevent the composition of the present invention from hardening. The principle behind this is unknown, but it is estimated that the processing during the heat treatment distributes the low molecular weight components throughout the composition and thereby prevents the starch from becoming hard.

Specifically, when the frozen section C of the composition of the present invention is analyzed under the [Condition C] above to obtain imaging mass spectrometry data, the product of the average luminances $AV_{66.88278}$ x $AV_{80.79346}$ may preferably be within the range of 120 or more 3000 or less. More specifically, the lower limit may preferably be typically 120 or more preferably, particularly 150 or more, or 180 or more, or 200 or more, or 220 or more, or 250 or more, or 270 or more, or 300 or more, or 350 or more, or 400 or more, particularly 450 or more. On the other hand, the upper limit of $AV_{66.88278}$ x $AV_{80.79346}$ may be, although not particularly limited to, typically 3000 or less, or 2000 or less, from the viewpoint of industrial productivity.

*Feature (c2): Standard deviation of luminance and average luminance at m/z = 66.88278

The composition of the present invention may preferably be characterized by having a large variation in the brightness of a specific component in a cross-section of the composition. This may serve to localize the component over wider areas throughout the composition, resulting in a quality that is more temperate in hardness.

Specifically, the composition of the present invention may preferably be characterized in that when the frozen section C of the composition of the present invention is analyzed under the [Condition C] above to obtain imaging mass spectrometry data, signal intensity dispersion at m/z 66.88278 a standard deviation of luminance in ($SD_{66.88278}$) is a predetermined value or more (feature (c2)). Specifically, the standard deviation ($SD_{66.88278}$) may preferably be within the range of for example 16.0 or more 100 or less. More specifically, the lower limit may preferably be typically 16.0 or more preferably, particularly 18.0 or more, or 19.0 or more, or 20.0 or more, or 22.0 or more, particularly 24.0 or more. On the other hand, the standard deviation ($SD_{66.88278}$) the upper limit of は, although not particularly limited to, from the viewpoint of industrial productivity, typically 100 or less, or 80 or less, or 60 or less, or 50 or less.

In addition, the composition of the present invention may preferably be characterized in that the average luminance in signal intensity dispersion at m/z = 66.88278 ($AV_{66.88278}$) is a predetermined value or more. Specifically, the average luminance ($AV_{66.88278}$) may preferably be within the range of 15 or more 200 or less. More specifically, the lower limit may preferably be typically 15 or more, particularly 18 or more, or 20 or more, or 25 or more, or 30 or more, or 33 or more, or 35 or more, or 37 or more, or 39 or more, particularly 40 or more. On the other hand, the upper limit of the average luminance ($AV_{66.88278}$) may be, although not particularly limited to, from the viewpoint of industrial productivity, typically 200 or less, or 150 or less, or 100 or less.

*Feature (c3): Standard deviation of luminance and average luminance at m/z = 80.79346

The composition of the present invention may preferably be characterized in that when the frozen section C is analyzed under the [Condition C] above to obtain imaging mass spectrometry data, the standard deviation of luminance in signal intensity dispersion at m/z = 80.79346 ($SD_{80.79346}$) is a predetermined value or more (feature (c3)). The reason for this is unknown, but assuming that NANO-PALDI MS observes the value at m/z where the hydrogenation occurred, then it is estimated that this parameter reflects the distribution of pyrazine (CAS: 290-37-9, molar mass: 80.09 g/mol), which has a relatively close molecular weight, in the composition. If so, it is estimated that pyrazine analogues formed by the Maillard reaction during cooking may be localized over wider areas throughout the composition, resulting in a quality that is more temperate in hardness.

Specifically, the standard deviation ($SD_{80.79346}$) may preferably be within the range of 4.0 or more 80 or less. More specifically, the lower limit may preferably be typically 4.0 or more preferably, particularly 4.5 or more, or 5.0 or more, or 5.5 or more, or 6.0 or more, or 6.5 or more, or 7.0 or more, or 7.5 or more. or 8.0 or more, or 8.5 or more, particularly 9.0 or more. On the other hand, the upper limit of the standard deviation ($SD_{80.79346}$) may be, although not particularly limited to, typically 80 or less, or 70 or less, or 60 or less, or 50 or less, or 40 or less, from the viewpoint of industrial productivity.

In addition, the composition of the present invention may also preferably be characterized in that the average luminance ($AV_{80.79346}$) in signal intensity dispersion at m/z 80.79346 is a predetermined value or more. Specifically, the average luminance ($AV_{80.79346}$) may preferably be within the range of 6.5 or more 100 or less. More specifically, the lower limit may preferably be typically 6.5 or more, particularly 7.0 or more, or 7.5 or more, or 8.0 or more, or 8.5 or more, or 9.0 or more, particularly 9.5 or more. On the other hand, the upper limit of the average luminance ($AV_{80.79346}$) may be, although not particularly limited to, from the viewpoint of industrial productivity, typically 100 or less, or 80 or less, or 60 or less.

*Cut planes of frozen sections:

The composition of the present invention may preferably be characterized in that when the frozen section C is analyzed under the [Condition C] above to obtain imaging mass spectrometry data, it satisfies at least one or more, preferably two or more, more preferably all of the tree, of the features (c1), (c2), and (c3) mentioned above. In this regard, the composition of the present invention may satisfy the features (c1), (c2), and/or (c3) for a frozen section obtained by cutting the frozen composition along any cut plane.

However, the composition of the present invention may preferably satisfy the features (c1), (c2), and/or (c3) at least for a frozen section C obtained by cutting the frozen composition along a cut plane C orthogonal to the longitudinal axis of the composition. The "longitudinal axis" of a composition herein refers to a longitudinal direction of a hypothetical rectangle with a minimum volume inscribed in the composition, while the "transverse axis" of a composition herein refers to a line perpendicular to the longitudinal axis. In cases where there are multiple longitudinal directions of the composition, any direction can be adopted.

The composition of the present invention may more preferably be characterized in that when both a frozen section X, which is obtained by cutting the frozen composition along an arbitrary cut plane X, and a frozen section Y, which is obtained by cutting the frozen composition along a cut plane Y orthogonal to the cut plane X, are analyzed under the [Condition C] above to obtain imaging mass spectrometry data, and standard deviations of luminance ($SD_{66.88278}$, $SD_{80.79346}$) and average luminances ($AV_{66.88278}$, $AV_{80.79346}$) were determined at m/z = 66.88278 and 80.79346, then the arithmetic averages of the standard deviations of luminance ($SD_{66.88278}$, $SD_{80.79346}$) and the average luminances ($AV_{66.88278}$, $AV_{80.79346}$) obtained for the frozen section X at the cut plane X and the standard deviations of luminance ($SD_{66.88278}$, $SD_{80.79346}$) and the average luminances ($AV_{66.88278}$, $AV_{80.79346}$) obtained for the frozen section Y at the cut plane Y satisfy the features (c1), (c2), and/or (c3). The composition of the present invention may still more preferably be characterized in that both the standard deviations of luminance ($SD_{66.88278}$, $SD_{80.79346}$) and the average luminances ($AV_{66.88278}$, $AV_{80.79346}$) obtained for the frozen section X at the cut plane X and the standard deviations of luminance ($SD_{66.88278}$, $SD_{80.79346}$) and the average luminances ($AV_{66.88278}$, $AV_{80.79346}$) obtained for the frozen section Y at the cut plane Y satisfy the features (c1), (c2), and/or (c3) satisfy the features (c1), (c2), and/or (c3). In this case, the cut plane X may preferably be a plane orthogonal to the longitudinal axis of the composition, while the cut plane Y may preferably be a plane parallel to the longitudinal axis of the composition. In cases where there are multiple longitudinal directions of the composition, any direction can be adopted. Evaluating both the cut plane X and its transverse cut plane Y allows a more accurate characterization of the overall composition.

If the distribution of stained sites in a composition is uniform, the structure of the entire composition can be estimated by observing the structure of an arbitrary section as a representative site. However, if the distribution of stained sites is uneven, the stained sites on multiple cut surfaces can be observed, and the results of these observations can be added together to obtain a measurement of the stained sites of the entire composition.

[Total oil and fat content]

The swollen composition of the present invention may preferably have a total oil and fat content of within a predetermined range. Specifically, total oil and fat content in the swollen composition of the present invention in terms of dry mass basis may preferably be within the range of 2.0 mass % or more but 70 mass % or less. More specifically, the lower limit may preferably be typically 2.0 mass % or more preferably, particularly 3.0 mass % or more, or 4.0 mass % or more, or 5.0 mass % or more, or 6.0 mass % or more, or 7.0 mass % or more, or 8.0 mass % or more, or 9.0 mass % or more, particularly 10.0 mass % or more. On the other hand, the upper limit may be, although not particularly limited to, typically 70 mass % or less, or 65 mass % or less, or 60 mass % or less, or 55 mass % or less, or 50 mass % or less, or 45 mass % or less, or 40 mass % or less, or 35 mass % or less, or 30 mass % or less.

The origin of the oil and fat content in the composition of the present invention is not particularly restricted. Examples include plant-derived oils and fats and animal-derived oils and fats, of which plant-derived oils and fats are preferred. Specifically, the ratio of the content of plant-derived oils and fats in the whole composition may preferably be within the range of 50 mass % or more 100 mass % or less. More specifically, the lower limit may preferably be typically 50 mass % or more, particularly 60 mass % or more, or 70 mass % or more, or 80 mass % or more, or 90 mass % or more. On the other hand, the upper limit may be, although not particularly limited to, typically 100 mass %, or 100 mass % or less. Examples of plant-derived oil and fat content include those derived from general cereals (particularly from specific cereals), those derived from pulse (beans), those derived from potatoes, those derived from vegetables, those derived from nuts, and those derived from fruits, among which olive-derived oil and fat are preferred.

The oil and fat content incorporated in the composition of the present invention may be in the form of an isolated pure product or may be present in the state of being contained in edible plant (particularly pulse and/or cereal, preferably pulse), although the ratio of the oil and fat content present in the state of being contained in edible plant is law. Specifically, the ratio of the oil and fat content incorporated in pulse to the total protein content of the composition may preferably be within the range of 0 mass % or more but less than 65 mass %. More specifically, the upper limit may be typically less than 65 mass %, particularly less than 60 mass %, or less than 50 mass %, or less than 40 mass %, or less than 30 mass %. On the other hand, the lower limit may be, although not particularly limited to, typically 0 mass %, or 0 mass % or more.

The swollen composition of the present invention may preferably be characterized in that the ratio of the liquid oil and fat content to the total oil and fat content is within a predetermined range. Specifically, the ratio of the liquid oil and fat content to the total oil and fat content in the swollen composition of the present invention may preferably be within the range of 20 mass % or more 100 mass % or less. More specifically, the lower limit may preferably be typically 20 mass % or more preferably, particularly 30 mass % or more, or 40 mass % or more, or 50 mass % or more, or 60 mass % or more, or 70 mass % or more, or 80 mass % or more, or 90 mass % or more. On the other hand, the upper limit may be, although not particularly limited to, typically 100 mass %, or 100 mass % or less. The liquid oil and fat herein refers to oil and fat that are in the state of liquid at ordinary temperature (20 °C).

(Raw materials)

The raw materials for the compositions of the present invention are not particularly restricted, as long as the various ingredient compositions and properties specified in the present invention can be achieved. However, it is preferable to use one or more edible plants as raw materials, and it is more preferable to use pulse and/or cereal as edible plants, still more preferably at least one species of pulse. Examples of edible plants than can be used include plant ingredients classified under the food groups in the Japan Standard Tables for Food Composition 2015 (7th revised edition) (e.g., vegetables, potatoes, mushrooms, fruits, algae, cereals, nuts, etc.), as well as wild plants normally used for dietary purpose as vegetables (e.g., psyllium (obako or plantain), warabi (common bracken or eagle fern), fuki (butterbur or sweet-coltsfoot), yomogi (Japanese mugwort or first wormwood), etc.). The dry mass basis moisture content of an edible plant to be used for the composition of the present invention may preferably be within the range of 0 mass % or more but less than 15 mass %. More specifically, the upper limit may be typically less than 15 mass %, particularly less than 13 mass %, or less than 11 mass %, or less than 10 mass %. On the other hand, the lower limit of the dry mass basis moisture content may be, although not particularly limited to, typically 0 mass % or more, or 0.01 mass % or more.

*Pulse:

When pulse is used as edible plant in the composition of the present invention, preferable examples of pulse species that can be used include, although not limited to, one or more selected from Pisum, Phaseolus, Cajanus, Vigna, Vicia, Cicer, Glycine, and Lens species, more preferably from Pisum, Phaseolus, Cajanus, Vigna, Vicia, Cicer, and Lens species. Specific examples of pulse species include, although not limited to: peas (in particular, yellow peas, white peas, and green peas, which are immature seeds), kidney beans, red kidney beans, white kidney beans, black beans, pinto beans, toramame (a variation of kidney beans: concord paul), lima beans, scarlet runner beans, pigeon peas, mung beans, cowpeas, azuki beans, broad beans (vicia faba), soybeans (especially edamame, which are immature seeds of soybeans harvested with their pods in their immature state and characterized by the green appearance of the beans), chickpeas, lentils, blue peas, scarlet runner beans, peanuts, lupin beans, glass peas, locust beans (carob), twisted cluster beans, African locust beans, coffee beans, cacao beans, and Mexican jumping beans. Other classifications of foodstuffs not exemplified can be naturally understood by those skilled in the art who deal with the foodstuffs or processed products of the foodstuffs. Specifically, this can be clearly understood by referring to the food group classifications (p. 249, Table 1) in the Japan Standard Tables for Food Composition 2015 (7th revised edition), which are also widely used in everyday aspects of life in the general household. These pulse species may be used either any one singly or in any combination of two or more.

The pulse to be used for the composition of the present invention may preferably have a starch content of a predetermined value or more. Specifically, the starch content in the pulse may preferably be within the range of 10.0 mass % or more but 90 mass % or less in terms of dry mass basis. More specifically, the lower limit may preferably be typically 10.0 mass % or more, or 15.0 mass % or more, or 20.0 mass % or more, or 25.0 mass % or more, or 30.0 mass % or more, or 35 mass % or more, or 40.0 mass % or more. On the other hand, the upper limit of the starch content in the pulse may be, although not particularly limited to, for example typically 90 mass % or less, or 85.0 mass % or less, or 80.0 mass % or less, or 75.0 mass % or less, or 70.0 mass % or less, or 65.0 mass % or less, or 60.0 mass % or less.

When pulse is used for the composition of the present invention, it is preferable to use mature pulse rather than immature pulse seeds (e.g. green peas, which are immature pea seeds, or edamame, which are immature soybean seeds), because the proportion of the intermediate molecular weight fraction (molecular weight log 6.5 to 8.0) of starch in the composition increases (more specifically, the AUC3 value increases). For the same reason, it is preferable to use pulse which is in a state where the dry mass basis moisture content is a predetermined value or less as they mature. Specifically, the dry mass basis moisture content in the pulse to be used for the composition of the present invention may preferably be within the range of 0 mass % or more but less than 15 mass %. More specifically, the upper limit may be typically less than 15 mass %, particularly less than 13 mass %, or less than 11 mass %, or less than 10 mass %. On the other hand, the lower limit of the dry mass basis moisture content of the pulse may be, although not particularly limited to, typically 0 mass % or more, or 0.01 mass % or more.

*Cereal:

The term "cereal" used herein refers to general cereal species but excluding rice, wheat and barley, which are main cereal species, and the concept of cereal includes so-called pseudo-cereals other than those belonging to Poaceae family (Acanthaceae, Ascomycota). When cereal is used in the composition of the present invention, preferable examples of pulse species that can be used include, although not limited to, one or more selected from Poaceae, Chenopodiaceae, and Amaranthaceae species, more preferably from Poaceae species. Specific examples include, although not limited to, awa (foxtail millet), hie (Japanese millet), kibi (common millet), sorghum, rye, oats, hatomugi (job's tear), corn, buckwheat, amaranthus, and quinoa. It is particularly desirable to use one or more of oats, amaranthus and quinoa, more preferably oats, which contain high levels of soluble dietary fiber. Cereal may preferably be substantially gluten-free (specifically, with a gluten content of less than 10 ppm by mass), more preferably gluten-free.

The cereal to be used for the composition of the present invention may preferably have a starch content of a predetermined value or more. Specifically, the starch content in the cereal may preferably be within the range of 10.0 mass % or more 90 mass % or less may preferably be within the range of. More specifically, the lower limit may preferably be typically 10.0 mass % or more, or 15.0 mass % or more, or 20.0 mass % or more, or 25.0 mass % or more, or 30.0 mass % or more, or 35.0 mass % or more, or 40.0 mass % or more. On the other hand, the upper limit of the starch content in the cereal may be, although not particularly limited to, for example typically 90 mass % or less, or 85.0 mass % or less, or 80.0 mass % or less, or 75.0 mass % or less, or 70.0 mass % or less, or 65.0 mass % or less, or 60.0 mass % or less.

When cereal is used for the composition of the present invention, it is preferable to use dried cereal, because the proportion of the intermediate molecular weight fraction (molecular weight log 6.5 to 8.0) of cereal in the composition increases (more specifically, the AUC3 value increases). For the same reason, it is preferable to use cereal which is in a state where the dry mass basis moisture content is a predetermined value or less as they mature. Specifically, the dry mass basis moisture content in the cereal to be used for the composition of the present invention may preferably be within the range of 0 mass % or more but less than 15 mass %. More specifically, the upper limit may be typically less than 15 mass %, particularly less than 13 mass %, or less than 11 mass %, or less than 10 mass %. On the other hand, the lower limit of the dry mass basis moisture content of the cereal may be, although not particularly limited to, typically 0 mass % or more, or 0.01 mass % or more.

*Contents and particle diameters of pulse and/or cereal:

When pulse is used for the composition of the present invention, the pulse content in the composition of the present invention may preferably be within the range of, although not limited to, 10 mass % or more but 100 mass % or less, in terms of dry mass basis. More specifically, the lower limit may preferably be typically 10 mass % or more, particularly 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, particularly 95 mass % or more. On the other hand, the upper limit may be, although not particularly limited to, typically 100 mass %, or 100 mass % or less.

When cereal is used for the composition of the present invention, the cereal content in the composition of the present invention may preferably be within the range of, although not limited to, 10 mass % or more but 100 mass % or less, in terms of dry mass basis. More specifically, the lower limit may preferably be typically 10 mass % or more, particularly 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, particularly 95 mass % or more. On the other hand, the upper limit may be, although not particularly limited to, typically 100 mass %, or 100 mass % or less.

When pulse and/or cereal is used for the composition of the present invention, the total content of pulse and/or cereal in the composition of the present invention may preferably be within the range of, although not limited to, 15 mass % or more but 100 mass % or less, in terms of dry mass basis. More specifically, the lower limit may preferably be typically 10 mass % or more, particularly 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, particularly 95 mass % or more. On the other hand, the upper limit may be, although not particularly limited to, typically 100 mass %, or 100 mass % or less.

When pulse and/or cereal is used for the composition of the present invention, it is preferable to use pulse and/or cereal in the form of powder. Specifically, it is preferred to use pulse and/or cereal powder which, when measured using a laser diffraction particle size analyzer after ultrasonication, has a particle diameter $d_{90}$ and/or $d_{50}$ which each satisfy a predetermined upper limit or less.

Specifically, the particle diameter $d_{90}$ of the pulse powder after ultrasonication may preferably be within the range of 0.3 μm or more but less than 500 μm. More specifically, the upper limit may preferably be typically less than 500 μm, more preferably 450 μm or less, particularly 400 μm or less, or 350 μm or less, or 300 μm or less, or 275 μm or less, or 250 μm or less, or 225 μm or less, or 200 μm or less, or 175 μm or less, or 150 μm or less, or 125 μm or less, or 100 μm or less, or 90 μm or less, or 80 μm or less, or 70 μm or less, or 60 μm or less, or 50 μm or less. On the other hand, the lower limit may be, although not particularly limited to, typically 0.3 μm or more, or 1 μm or more, or 5 μm or more, or 8 μm or more, or 10 μm or more, or 15 μm or more.

Likewise, the particle diameter $d_{50}$ of the pulse powder after ultrasonication may preferably be within the range of 0.3 μm or more but less than 500 μm. More specifically, the upper limit may preferably be typically less than 500 μm, more preferably 450 μm or less, particularly 400 μm or less, or 350 μm or less, or 300 μm or less, or 250 μm or less, or 200 μm or less, or 150 μm or less, or 100 μm or less, or 90 μm or less, or 80 μm or less, or 70 μm or less, or 60 μm or less, or 50 μm or less. On the other hand, the lower limit may be, although not particularly limited to, typically 0.3 μm or more, or 1 μm or more, or 5 μm or more, or 8 μm or more, or 10 μm or more.

Especially if the above size of the composition is a certain upper limit or more, the composition surface may become non-uniform. Therefore, it is preferable to use powdered pulse and/or cereal, preferably pulse, with a size of the above-mentioned upper limit or less. When the aforementioned powdered pulse and/or powdered cereal is used, the powdered pulse and/or powdered cereal may be bound together in the resulting swollen composition while retaining their shape, or the pulse and/or cereal powder may be melted and blended together in the resulting swollen composition during processing.

*Other Food Ingredients:

The composition of the present invention may further contain any one or more food ingredients. Examples of such food ingredients include plant ingredients (vegetables, potatoes, mushrooms, fruits, algae, grains, seeds, etc.), animal ingredients (seafood, meat, eggs, milk, etc.), and microbial food products. The amount of these food ingredients can be set appropriately as long as they do not undermine the purpose of the present invention.

*Seasonings and food additives:

The composition of the present invention may contain any one or more seasonings, food additives, etc., or the contents of these seasonings may be limited as explained above. Examples of seasonings and food additives include: soy sauce, miso (Japanese fermented soybean paste), alcohols, sugars (e.g., glucose, sucrose, fructose, glucose-fructose liquid sugar, glucose-fructose liquid sugar, etc.), sugar alcohols (e.g., xylitol, erythritol, maltitol, etc.), artificial sweeteners (e.g., sucralose, aspartame, saccharin, acesulfame K, etc.), minerals (e.g., calcium, potassium, sodium, iron, zinc, magnesium, etc., and their salts), flavoring agents, pH adjusters (e.g., sodium hydroxide, potassium hydroxide, lactic acid, citric acid, tartaric acid, malic acid and acetic acid), cyclodextrins, antioxidants (e.g., vitamin E, vitamin C, tea extract, green coffee bean extract, chlorogenic acid, spice extract, caffeic acid, rosemary extract, vitamin C palmitate, rutin, quercetin, peach extract, sesame extract, etc.), emulsifiers (e.g., glycerin fatty acid esters, acetic acid monoglycerides, lactic acid monoglycerides, citric acid monoglycerides, diacetyl tartaric acid monoglycerides, succinic acid monoglycerides, polyglycerin fatty acid esters, polyglycerin condensed linosylate esters, chiraya extracts, soybean saponins, chia seed saponins, sucrose fatty acid esters, lecithin, etc.), colorants, thickening stabilizers, etc.

However, in view of the recent increase in nature consciousness, the composition of the present invention may preferably be characterized in that the content of at least one type of additives selected from the so-called emulsifiers, colorants, and thickening stabilizer (e.g., those listed in the "Table of food additive substance names for labeling" section of the "Pocket Book of Food Additives Labeling (2011 edition)" as "colorants," "thickening stabilizers," and "emulsifiers") is typically 1.0 mass % or less, particularly 0.5 mass % or less, or 0.1 mass % or less, particularly substantially zero (specifically, it represents a content of less than 1 ppm, which is the lower limit of the general measurement method), or zero. It is more preferred that the content of each of at least two types of additives selected from the so-called emulsifiers, colorants, and thickening stabilizer is typically 1.0 mass % or less, particularly 0.5 mass % or less, or 0.1 mass % or less, particularly substantially zero (specifically, it represents a content of less than 1 ppm, which is the lower limit of the general measurement method), or zero. It is still more preferred that the content of each of the so-called emulsifiers, colorants, and thickening stabilizer is typically 1.0 mass % or less, particularly 0.5 mass % or less, or 0.1 mass % or less, particularly substantially zero (specifically, it represents a content of less than 1 ppm, which is the lower limit of the general measurement method), or zero.

[Wheat and gluten]

The swollen composition of the present invention may preferably be characterized in that the wheat content in the composition is within a predetermined rang. Specifically, the wheat content in the swollen composition of the present invention may preferably be within the range of 0 mass % or more but 50 mass % or less, in terms of dry mass basis. More specifically, the upper limit may preferably be typically 50 mass % or less, particularly 40 mass % or less, or 30 mass % or less, or 20 mass % or less, or 10 mass % or less, particularly substantially zero (specifically, it represents a content of less than 1 ppm, which is the lower limit of the general measurement method), or zero. The swollen composition of the present invention is especially useful since it exhibits a unique swollen-food texture even when its wheat content ratio is equal to these upper limits or less. On the other hand, the lower limit of the ratio may be, although not particularly limited to, typically 0 mass %, or 0 mass % or more.

The swollen composition of the present invention may preferably be characterized in that the content ratio of wheat-derived protein to the total protein content in the composition is within a predetermined range. Specifically, the content ratio of wheat-derived protein to the total protein content in the composition may preferably be within the range of 0 mass % or more 50 mass % or less. More specifically, the upper limit may preferably be typically 50 mass % or less, particularly 40 mass % or less, or 30 mass % or less, or 20 mass % or less, or 10 mass % or less, particularly substantially zero (specifically, it represents a content of less than 1 ppm, which is the lower limit of the general measurement method), or zero. The swollen composition of the present invention is especially useful when the content ratio of wheat-derived protein to the total protein content is equal to these upper limits or less since it exhibits a unique swollen-food texture even when its wheat content is relatively law. On the other hand, the lower limit of the ratio may be, although not particularly limited to, typically 0 mass %, or 0 mass % or more.

The swollen composition of the present invention may preferably be characterized in that it is substantially gluten-free (specifically, it represents a content of less than 1 ppm, which is the lower limit of the general measurement method), or gluten-free. The swollen composition of the present invention is especially useful since it can exhibit a unique swollen-food texture even when it is substantially gluten-free.

Conventional solid paste compositions for heat cooking (especially those containing gluten in a network structure) retain compositional elasticity by containing sodium chloride, but have problems in terms of affecting the taste and resulting in excessive salt intake. These challenges were particularly pronounced in compositions in the dry state (e.g. dried udon noodles, dried hiyamugi noodles, etc.), where more than 3 mass% sodium chloride is usually used to maintain compositional elasticity. On the other hand, the composition of the present invention is preferable because it exhibits reduced elasticity loss and has a good quality even with a very limited amount of, or without the addition of, sodium chloride. The invention is also preferred for specific types of solid paste compositions for heat cooking such as pasta, udon noodles and bread, which normally have adhesion and elasticity due to the network structure gluten and sodium chloride, as the invention can be applied to produce a composition of good quality without the addition of sodium chloride.

Specifically, the sodium chloride content in the composition of the present invention may preferably be within the range of 0 mass % or more 3 mass % or less in terms of dry mass basis. More specifically, the upper limit may be typically 3 mass % or less, particularly 2 mass % or less, or 1 mass % or less, or 0.7 mass % or less, particularly 0.5 mass % or less. The lower limit of the sodium chloride content in the composition of the present invention is not particularly restricted. and may be 0 mass %. In the present invention, the sodium chloride content in a solid paste composition may be determined, for example, according to the "Salt equivalent" section in the Japan Standard Tables for Food Composition 2015 (7th revised edition), by measuring the amount of sodium using the atomic absorption method and multiplying the measured amount by 2.54.

[Swollen food]

The swollen composition of the present invention is typically a swollen food. The term "swollen food" used herein refers to a food consisting of a swollen composition or a food prepared using a swollen composition as a main ingredient. More specifically, it refers to a food product produced by increasing the volume of a dough composition by swelling it through a heat treatment. Examples include: bread or similar lumpy-swollen composition foods (also referred to as bread-like foods); puff-like compositions, which are special types of lumpy lumpy-swollen composition foods, especially those swollen by rapid decompression of dough that has been heat-treated under pressurized conditions; and crackers or similar foods (also referred to as cracker-like foods), which are special types of lumpy lumpy-swollen composition foods which have a plate-like shape with a smaller thickness.

The swollen composition of the present invention may preferably be characterized by having a unique swollen-food texture. The term "unique swollen-food texture" used herein refers to a texture that is derived from porous structure inside a swollen food composition and is perceived due to the difference in strength between solid structure and pores in the composition. Specific examples of such unique swollen-food texture include crunchy crispiness of crackers and fluffiness of bread. Even once formed, such unique swollen-food texture is less likely to be felt if the composition becomes hard and its structure is difficult to break down, or if the composition is unable to retain its swollen state and shrivels up, reducing the internal pores.

[Method for Producing Starch-Containing Swollen Composition]

The swollen composition of the present invention can be produced by any method, but may preferably be produced by means of a specific method comprising the steps of:

(i) preparing a dough composition having

(1) a starch content of 8.0 mass % or more in terms of wet mass basis,
(2) a dry mass basis moisture content of more than 40 mass %,
(3) a dietary fiber content of 2.0 mass % or more in terms of wet mass basis,
(4) a starch digestion enzyme activity of 0.2 U/g or more in terms of dry mass basis, and
(5) according to a particle diameter distribution obtained by subjecting the dough composition to the starch and protein digestion treatment defined in the [Procedure b] above followed by ultrasonication, a particle diameter $d_{50}$ of less than 450$\mu$m; and

(ii) swelling the dough composition from step (i) via heating treatment, wherein the AUC1 value of the composition increases by 5% or more and the dry mass basis moisture content of the composition increases by 5 mass % or more during the heating treatment.

*Step (i): Preparation of Dough Composition:

Preparation of the dough composition in step (i) may preferably be carried out so as to satisfy the conditions mentioned below.

The dough composition prepared in step (i) may preferably be characterized in that the starch content in the composition is equal to or more than a predetermined limit. Specifically, the starch content in the dough composition in terms of wet mass basis may preferably be within the range of, for example 8.0 mass % or more 60 mass % or less. More specifically, the lower limit may preferably be typically 8.0 mass % or more, particularly 9.0 mass % or more, or 10.0 mass % or more, or 12.0 mass % or more, or 14.0 mass % or more, or 16.0 mass % or more, or 18.0 mass % or more. The upper limit is not particularly restricted, but may be typically 60 mass % or less, or 55.0 mass % or less, or 50.0 mass % or less, or 45.0 mass % or less, or 40.0 mass % or less, or 35.0 mass % or less, or 30.0 mass % or less.

The dough composition prepared in step (i) may preferably be characterized in that the dry mass basis moisture content in the composition is higher than a predetermined limit. Its technical significance resides in that since enzymatic reactions are less likely to proceed if the dry mass basis moisture content is a predetermined limit or lower, the composition is maintained for a predetermined amount of time or more in a state where the dry mass basis moisture content is kept higher than a predetermined limit during the baking at step (ii), to thereby facilitate enzymatic reactions to change the relatively high molecular weight starch constituents defined by AUC2 to relatively low molecular weight starch constituents defined by AUC1 (therefore, the values of AUC1 and AUC2 in the compositions of the present invention are different from the values in raw materials without heat treatment and from the values in compositions with different factors that have a significant influence on the degradative enzyme reaction (dough enzyme activity, water addition conditions to the dough, heat treatment conditions, etc.). Specifically, the dry mass basis moisture content in the dough composition may preferably be within the range of more than 40 mass % but 250 mass % or less. More specifically, the lower limit may preferably be typically more than 40 mass %, particularly more than 45 mass %, or more than 50 mass %, or more than 55 mass %, or more than 60 mass %, or more than 65 mass %, or 70 mass % or more, or 80 mass % or more, or 90 mass % or more, especially 100 mass % or more. The upper limit is not particularly restricted, but may be typically 250 mass % or less, or 225 mass % or less, or 200 mass % or less, or 175 mass % or less, or 150 mass % or less.

The dry mass basis moisture content in the dough composition may preferably be maintained to be higher than the predetermined limit for a predetermined amount of time or more. The amount of time during which the dry mass basis moisture content in the dough composition is to be kept higher than a predetermined limit may be determined as appropriate in consideration of various conditions, such as the reaction rate, which is determined from, e.g., the enzyme activity in the dough composition, the reaction temperature, and the dry mass basis moisture content, as well as the change ratios of AUC2 and AUC1, but may preferably be within the range of one minute or more but 24 hours or less. More specifically, the lower limit may preferably be typically one minute or more, particularly 2 minutes or more, or 3 minutes or more. On the other hand, the upper limit is not particularly restricted, but may be typically 24 hours or less, or 16 hours or less. The reaction temperature of the dough composition may also be determined as appropriate in consideration of conditions such as the change ratios of AUC2 and AUC1, but may preferably be within the range of 30 °C or higher but 300 °C or lower. More specifically, the lower limit may preferably be typically 30 °C or higher, particularly 40 °C or higher, or 50 °C or higher, or 60 °C or higher, or 70 °C or higher, or 80 °C or higher, or 90 °C or higher, or 100 °C or higher, or 110 °C or higher, especially 120 °C or higher. On the other hand, the upper limit is not particularly restricted, but may be typically 300 °C or lower, particularly 260 °C or lower, or 230 °C or lower. The step of maintaining the dry mass basis moisture content in the dough composition to be higher than the predetermined limit for a predetermined amount of time or more may be carried out after the preparation of the dough composition at step (i) and before the heating at step (ii), or at least a part or all of this step may be achieved during the heating at step (ii).

In addition, while maintaining the dry mass basis moisture content in the dough composition to be higher than the predetermined limit for a predetermined amount of time or more, it is possible to produce the swollen composition of the present invention by carrying out the fermentation step described below, or by carrying out an enzyme treatment in the dough composition and then swelling the treated dough composition by heat treatment. Specifically, the swollen composition of the present invention can be produced by yeast fermentation using yeast incorporated in the dough composition, or by carrying out an enzymatic treatment reaction with a starch degradative enzyme incorporated in the dough composition or carrying out an enzymatic treatment reaction of psyllium husk (preferably with cellulase and/or pectinase and/or xylanase, more preferably at least with pectinase and/or xylanase), which is incorporated in the dough composition, and then swelling the treated dough composition by heat treatment. In such cases, the statement "before heat treatment" refers to the state of the dough composition before the fermentation and enzyme treatments (i.e. immediately after preparation), while the statement "after heat treatment" refers to the state of the swollen composition after the dough composition has undergone fermentation and enzyme treatments and have swollen.

The term "wet mass basis ratio" (or also referred to as "wet mass basis" or "wet weight basis") used herein refers to the ratio of an ingredient of a composition or a fraction calculated with the wet mass of the composition or the fraction including its moisture content as the denominator and the content of the ingredient as the numerator.

The dietary fiber content (the total content of soluble dietary fiber and insoluble dietary fiber) in the dough composition prepared in step (i) may preferably be equal to or more than a predetermined limit. Specifically. the dietary fiber content (especially the insoluble dietary fiber content) in the dough composition in terms of wet mass basis for example 2.0 mass % or more 30 mass % or less may preferably be within the range of. More specifically, the lower limit may preferably be typically 2.0 mass % or more, particularly 3.0 mass % or more, or 4.0 mass % or more, or 5.0 mass % or more, or 6.0 mass % or more, or 7.0 mass % or more, or 8.0 mass % or more. The upper limit is not particularly restricted, but may be typically 30 mass % or less, or 20 mass % or less.

The starch degradative enzyme activity in the dough composition prepared in step (i) may preferably be equal to or more than a predetermined limit. Specifically, the starch degradative enzyme activity in the dough composition in terms of dry mass basis may preferably be within the range of 0.2 U/g or more but 100.0 U/g or less. More specifically, the lower limit may preferably be typically 0.2 U/g or more, particularly 0.4 U/g or more, or 0.6 U/g or more, or 0.8 U/g or more, or 1.0 U/g or more, or 2.0 U/g or more, or 3.0 U/g or more, especially 4.0 U/g or more. On the other hand, the upper limit of the ratio may be, although not particularly limited to, typically 100.0 U/g or less, or 50.0 U/g or less, or 30.0 U/g or less, or 10.0 U/g or less, or 7.0 U/g or less.

In order to prevent the inactivation of starch degradative enzymes in edible plant (e.g., pulse and/or cereal, especially pulse), edible plant to be used as a raw material may preferably be pre-treated so as to have a high starch degradative enzyme activity, e.g., by carrying out heat treatment under a circumstance with a dry mass basis moisture content at a predetermined ratio or less (e.g., typically 70 mass % or less, or 60 mass % or less, or 50 mass % or less, or 40 mass % or less, or 30 mass % or less, especially 20 mass % or less). The temperature of the heat treatment may preferably be within the range of 60 °C or higher but 300 °C or lower. More specifically. the upper limit may preferably be typically 300 °C or lower, or 260 °C or lower, or 220 °C or lower, or 200 °C or lower. On the other hand, since carrying out heat treatment at a temperature of a predetermined value or higher in advance may serve to remove undesirable scents in the raw material, the treatment temperature may preferably be at a predetermined temperature or more. Specifically, the temperature may preferably be typically 60 °C or higher, particularly 70 °C or higher, or 80 °C or higher, or 90 °C or higher, especially 100 °C or higher. The duration of the heat treatment may be set as appropriate as long as the starch degradative enzyme activity is adjusted to a predetermined limit, but may preferably be within the range of 0.1 minutes or more but 60 minutes or less. More specifically, the lower limit may preferably be typically 0.1 minutes or more, or 1 minute or more. On the other hand, the upper limit is not particularly restricted, but may be typically 60 minutes or less.

The enzyme activity unit (U/g) can be determined as follows. A measurement sample is subjected to the enzyme reaction for 30 minutes, and the absorbance reduction rate C (%) at a wavelength of 660 nm measured with a spectrophotometer before and after the reaction was determined as the absorbance reduction rate of the enzyme reaction zone (absorbance A) relative to the comparison zone (absorbance B), i.e., {(absorbance B) - (absorbance A) / (absorbance B)} x 100 (%). The enzyme activity that reduces absorbance by 10% per 10 minutes is determined as one unit (U), and the enzyme activity per gram of the sample measured is determined from the absorbance reduction rate C (%) when the enzyme reaction is conducted with 0.25 mL of the enzyme solution (sample content: 0.025 g) for 30 minutes, using the following formula.

[Formula 2]

$$\text{Enzyme activity unit (U/g)} = \{C \times (10/30) \times (1/10)\}/0.025$$

Specific examples of starch degradative enzymes to be incorporated in the dough composition include amylase. The enzyme may be either derived from edible plant (e.g., pulse and/or cereal, especially pulse) as the raw material of the dough composition or may be added to the dough composition externally. However, a predetermined ratio or more of the starch degradative enzyme activity in the dough composition may preferably be derived from edible plant as the raw material of the dough composition, preferably from pulse and/or cereal, more preferably from pulse. Specifically, the ratio of the starch degradative enzyme activity derived from edible plant (e.g., pulse and/or cereal, especially pulse) as the raw material to the starch degradative enzyme activity in the dough composition for example 30 % or more 100 % or less may preferably be within the range of. More specifically, the lower limit may preferably be typically 30 % or more, particularly 40 % or more, or 50 % or more, or 60 % or more, or 70 % or more, or 80 % or more, or 90 % or more may preferably be. On the other hand, the upper limit is not particularly restricted, but may be typically 100 % or less.

In addition, a predetermined ratio or more of the starch degradative enzyme activity in the dough composition may preferably be derived from endogenous degradative enzyme contained in edible plant as the raw material of the dough composition, preferably from endogenous degradative enzyme contained in pulse and/or cereal, more preferably from endogenous degradative enzyme contained in pulse. In this case, the endogenous starch degradative enzyme may preferably be amylase. In this regard, since starch derived from edible plant is considered to be easily degradable by the endogenous degradative enzyme contained in the same plant, the starch degradative enzyme (especially the endogenous degradative enzyme contained in edible plant) may preferably be derived from the same plant as the plant from which the starch contained in the composition is derived. Specifically, the ratio of the starch degradative enzyme activity resulting from the endogenous degradative enzyme contained in edible plant (especially pulse and/or cereal, preferably pulse) as a raw material to the total starch degradative enzyme activity contained in the dough composition may preferably be within the range of 30 % or more and 100 % or less. More specifically, the lower limit may preferably be typically 30 % or more, particularly 40 % or more, or 50 % or more, or 60 % or more, or 70 % or more, or 80 % or more, or 90 % or more. The upper limit is not particularly restricted, but may be typically 100 % or less.

The dough composition may preferably be prepared in such a manner that when the dough composition prepared in step (i) is subjected to starch and protein digestion treatment defined in [Procedure b] below followed by ultrasonication, and then subjected to measurement for particle diameter distribution, the resulting particle diameter $d_{50}$ satisfies a predetermined ratio or more. Specifically, the particle diameter $d_{50}$ may preferably be within the range of 1 $\mu$m or more less than 450 $\mu$m. More specifically, the upper limit may preferably be typically less than 450 $\mu$m, particularly 400 $\mu$m or less, or 350 $\mu$m or less, or 300 $\mu$m or less, or 250 $\mu$m or less, or 200 $\mu$m or less, or 150 $\mu$m or less, or 100 $\mu$m or less. The lower limit is not particularly restricted, but may be typically 1 $\mu$m or more, particularly 5 $\mu$m or more, or 7 $\mu$m or more. The principle behind this is unknown, but it is estimated that the composition of the present invention contains support structures composed mainly of starch, and these ingredients reinforce the support structures, thereby improving swelling during heat treatment and providing the composition with a unique swollen-food texture. And it is estimated that these ingredients may preferably be smaller than a predetermined upper, since if the size of these ingredients exceeds the predetermined size, they may penetrate the support structures composed mainly of starch and make it difficult to maintain the swollen state after the heat treatment.

The dough composition may preferably be prepared in such a manner that when the dough composition is subjected to [Procedure a] below and the resulting product is subjected to measurement under [Condition A] below to obtain a molecular weight distribution curve in an interval with molecular weight logarithms of 6.5 or more but less than 9.5 (hereinafter referred to as "$MWDC_{6.5-9.5}$"), the ratio of the area under the curve in an interval with molecular weight logarithms of 6.5 or more but less than 8.0 to the area under the entire curve (AUC3) satisfies a predetermined ratio or more. Specifically, the AUC3 value may preferably be within the range of 30 % or more but 100 % or less. More specifically, the lower limit may preferably be typically 30 % or more, particularly 35 % or more, or 40 % or more, or 45 % or more, or 50 % or more, or 55 % or more, or 60 % or more, or 65 % or more, or 70 % or more, or 80 % or more, or 90 % or more. The upper limit is not particularly restricted, but may be typically 100 % or less, or 98 % or less. The reason for this is not clear, but it is estimated that the ratio of the amylopectin with a relatively low molecular weight ratio to the total starch content in starch (thought to be contained in the fraction with molecular weight logarithms of 6.5 or more but less than 9.5) is adjusted to the predetermined value or larger, thereby improving the spreadability during the swelling step and resulting in a favorably swollen food product.

The dough composition prepared in step (i) may preferably contain pulse and/or cereal, preferably pulse. The pulse and/or cereal content can be selected as appropriate, but may preferably be within the range of 5 mass % or more 90 mass % or less in terms of wet mass basis. More specifically, the lower limit may preferably be typically 5 mass % or more, particularly 10 mass % or more, or 15 mass % or more, or 20 mass % or more, or 25 mass % or more, or 30 mass % or more, or 35 mass % or more. The upper limit is not particularly restricted, but may be typically 90 mass % or less, or 80 mass % or less, or 70 mass % or less.

The pulse and/or cereal to be used may either have or have not undergone the heat treatment explained below, or may be the combination of a heat-treated one and a non-treated one. The pulse and/or cereal to be used may preferably be in the powder form.

The pulse and/or cereal to be used as a raw material at step (i) of the present invention may also have been mildly heated as warming treatment beforehand in such a manner that the decrement difference of the peak temperature of gelatinization measured under the aforementioned conditions is in a predetermined temperature range. Using such a raw material is desirable because it serves to remove unwanted components in the raw material while maintaining starch grains in the material, which act to aid the swelling of the composition and allow the effects of the present invention to be well achieved. On the other hand, if the decrement difference of the peak temperature of gelatinization is too large, then in the swelling treatment process at step (ii), the starch grains may be completely destroyed to the extent that they do not exhibit RVA peaks, or even if they are not destroyed, they may lose their heat resistance, making it difficult for the effects of the present invention to be realized. Specifically, the decrement difference in the peak temperature of gelatinization before and after the treatment may preferably be within the range of 0 °C or higher 50 °C or lower. More specifically, the upper limit of the decrement difference in temperature may preferably be typically 50 °C or lower, or 45 °C or lower, or 40 °C or lower, or 35 °C or lower, or 30 °C or lower. On the other hand, the lower limit of the decrement difference in temperature is not particularly restricted, but it may be preferable to carry out the treatment in such a manner that the peak temperature of gelatinization decreases by 0 °C or higher, particularly 1 °C or higher, or 2 °C or higher, or 3 °C or higher, or 4 °C or higher, or 5 °C or higher.

When pulse and/or cereal raw material (especially raw material powder) to be used for step (i) of the production method of the present invention is subjected to the measurement for peak temperature of gelatinization in accordance with the method explained above, then the decrement difference in temperature may preferably satisfy the predetermined limit or less (i.e., within the range of 0 °C or higher but 50 °C or lower and more specifically, typically 50 °C or lower, or 45 °C or lower, or 40 °C or lower, or 35 °C or lower, or 30 °C or lower, while the lower limit of the decrement difference in temperature is not particularly restricted, but may be 0 °C or higher, particularly 1 °C or higher, or 2 °C or higher, or 3 °C or higher, or 4 °C or higher, or 5 °C or higher). In this connection, pulse and/or cereal raw material (especially raw material powder) that has been subjected to warming treatment so as to satisfy this requirement is also included in the subject of the present invention. The pulse and/or cereal raw material (especially raw material powder) that has been subjected to warming treatment may preferably satisfy the requirement(s) (c-3) and/or (d-3) mentioned below, which correspond to the requirement(s)

(c-1) and/or (d-1) explained above.

(c-3) When 6% suspension of a crushed product of the dough composition is observed, the number of starch grain structures is 40/mm$^2$ or more, or 60/mm$^2$ or more, or 80/mm$^2$ or more, or 100/mm$^2$ or more, or 150/mm$^2$ or more, or 200/mm$^2$ or more, or 250/mm$^2$ or more, or more than 300/mm$^2$, while the upper limit is not particularly limited, but may be 100000/mm$^2$ or less, or 50000/mm$^2$ or less, or 10000/mm$^2$ or less.

(d-3) When 14 mass % aqueous slurry of a crushed product of the dough composition is measured using rapid visco-analyzer with elevating the temperature from 50 °C to 140 °C at a rate of 12.5°C/min, the peak temperature of gelatinization is more than 95 °C, or 100 °C or higher, or 105 °C or higher, or 110 °C or higher, while the upper limit is not particularly limited, but may be 140 °C or lower, or 135 °C or lower, or 130 °C or lower.

It may also be preferable to subject psyllium seed skin (psyllium husk) to enzyme treatment (preferably cellulase and/or pectinase and/or xylanase treatment, more preferably at least xylanase and/or pectinase treatment) for use in step (i) of the production method of the present invention. The enzyme-treated product of psyllium seed skin is also included in the subject of the present invention.

The temperature and the duration of time of the warming treatment may be adjusted as appropriate so as to adjust the decremental difference in the peak temperature of gelatinization to within a predetermined range, from the viewpoint of removing undesirable components in raw materials while preventing damage to starch grains. The heating method can also be selected as appropriate, such as heating the powder directly using a solid (e.g., metal parts in equipment) as a medium (e.g. extruder) or using a gas medium (e.g., saturated steam heating, air dry heating, etc.). The composition temperature during the processing may preferably be within the range of 80 °C or higher 250 °C or lower. More specifically, the upper limit may preferably be typically 250 °C or lower, or 210 °C or lower, or 150 °C or lower. The lower limit of the temperature is not particularly restricted, but may be 80 °C or higher, or 90 °C or higher, or 100 °C or higher. The duration of processing at the temperature may preferably be typically 30 minutes or less, or 25 minutes or less, while the lower limit is not particularly restricted, but may preferably be 0.1 minutes or more.

The dry mass basis moisture content during the warming treatment may preferably be a predetermined limit or lower. If the dry mass basis moisture content during the warming treatment is too high, the starch grains may be completely destroyed, or even if they are not destroyed, they may lose their heat resistance, making it difficult for the effects of the present invention to be realized. Specifically, the upper limit of the dry mass basis moisture content moisture content may preferably be within the range of 0 mass % or more 80 mass % or less. More specifically, the upper limit may preferably be typically 80 mass % or less, or 70 mass % or less, or 60 mass % or less, or 50 mass % or less, or 40 mass % or less, or 35 mass % or less, or 30 mass % or less, or 25 mass % or less, or 20 mass % or less, or 15 mass % or less. The lower limit of the dry mass basis moisture content during the warming treatment is not particularly restricted, but may be 0 mass % or more, or 1 mass % or more, or 2 mass % or more.

(Starch grain structures)

The swollen composition of the present invention after baking may preferably be characterized in that the starch grain structures contained therein are disrupted, since this result in a smooth texture. On the other hand, the dough composition prepared in step (i) the production method of the present invention may preferably be characterized in that, to the contrary, the number of starch grain structures is equal to or more than a predetermined limit. The principle behind this is unknown, but it is estimated that since the dough composition is expanded by heat treatment while the starch grain structures are contained therein, the starch grains protect the internal pores, resulting in the swollen composition having a smooth texture. Specifically, the dough composition prepared in step (i) of the production method of the present invention may preferably satisfy the requirement(s) (c-1) and/or (d-1) below, more preferably both the requirements (c-1) and (d-1) below.

(c-1) When 6% suspension of a crushed product of the dough composition is observed, the number of starch grain structures is 40/mm$^2$ or more.
(d-1) When 14 mass % aqueous slurry of a crushed product of the dough composition is subjected to measurement using rapid visco-analyzer with elevating the temperature from 50 °C to 140 °C at a rate of 12.5°C/min, the peak temperature of gelatinization is higher than 95 °C.

*(c-1) Starch grain structures in the dough composition:

Specifically, the dough composition prepared in step (i) of the production method of the present invention may preferably be characterized in that the number of starch grain structures observed under the conditions explained in section (a) above is within the range of 40/mm$^2$ or more but 100000/mm$^2$ or less. More specifically, the lower limit may preferably be typically 40/mm$^2$ or more, or 60/mm$^2$ or more, or 80/mm$^2$ or more, or 100/mm$^2$ or more, or 150/mm$^2$ or more, or 200/mm$^2$ or more, or 250/mm$^2$ or more, or more than 300/mm$^2$. The upper limit of the number of starch grain structures in the dough composition is not particularly restricted, but may be typically 100000/mm$^2$ or less, or 50000/mm$^2$ or less, or 10000/mm$^2$ or less.

*(c-2) Decremental difference in the number of starch grain structures in the dough composition:

It is preferable that the dough composition prepared in step (i) satisfies the requirement (c-1) above, while the swollen composition of the present invention after baking satisfies the requirement (a) above. Specifically, the number of starch grain structures in the swollen composition of the present invention as defined in the requirement (a) above may preferably be smaller than the number of starch grain structures in the dough composition prepared in step (i) as defined in the requirement (c) above, more preferably by a predetermined number or more (requirement (c-2)). More specifically, the number of starch grain structures in the composition may preferably decrease before and after the heat treatment at step (ii) by a predetermined limit or more (i.e., the decremental difference calculated by "(the number of starch grain structures in the dough composition before the heat treatment) - (the number of starch grain structures in the composition after the heat treatment)" satisfies a predetermined value or more). Specifically, the decrease ratio before and after the before and after the heat treatment at step (ii) may preferably be within the range of 10/mm$^2$ or more but 100000/mm$^2$ or less. More specifically, the lower limit of the decrease ratio may preferably be 10/mm$^2$ or more, particularly 20/mm$^2$ or more, or 30/mm$^2$ or more, or 40/mm$^2$ or more, or 50/mm$^2$ or more, or 100/mm$^2$ or more, or 150/mm$^2$, or 200/mm$^2$ or more, or 250/mm$^2$ or more, or 300/mm$^2$ or more. On the other hand, the upper limit of the decrease ratio is not particularly restricted, but may be typically 100000/mm$^2$ or less, or 50000/mm$^2$ or less, or 10000/mm$^2$ or less.

*(d-1) RVA peak temperature of gelatinization in the dough composition:

According to the present invention, a composition containing many starch grain structures tend to exhibit increased viscosity due to hydro-swelling of starch grain structures, and to have a relatively high peak temperature of gelatinization. Therefore, the dough composition prepared in step (i) of the production method of the present invention may preferably be characterized in that the peak temperature of gelatinization measured under the conditions explained in section (b) above is within the range of higher than 95 °C but 140 °C or lower. More specifically, the lower limit may preferably be typically higher than 95 °C, or 100 °C or higher, or 105 °C or higher, or 110 °C or higher. Even in compositions where the starch grains have been destroyed, the constituents may exhibit pseudo-peak temperature of gelatinization due to hydro-swelling. Therefore, the upper limit may be, although not particularly limited to, typically 140 °C or lower, or 135 °C or lower, or 130 °C or lower.

*(d-2) Decremental difference in RVA peak temperature of gelatinization in the dough composition:

It is preferable that the dough composition prepared in step (i) satisfies the requirement (d-1) above, while the swollen composition of the present invention after baking satisfies the requirement (b) above. Specifically, the peak temperature measured for the swollen composition of the present invention as defined in the requirement (b) above may preferably be smaller than the peak temperature measured for the dough composition prepared in step (i) as defined in the requirement (d) above, more preferably by a predetermined number or more (requirement (d-2)). More specifically, the peak temperature of the composition may preferably decrease before and after the heat treatment at step (ii) by a predetermined limit or more (i.e., the decremental difference calculated by "(the peak temperature of the dough composition before the heat treatment) - (the peak temperature of the composition after the heat treatment)" satisfies a predetermined value or more). Specifically, the decrease ratio before and after the before and after the heat treatment at step (ii) may preferably be within the range of 5 % or more 100 % or less. More specifically, the lower limit of the decrease ratio may preferably be 5 % or more, particularly 10 % or more, or 15 % or more, or 20 % or more. On the other hand, the upper limit of the decrease ratio is not particularly restricted, but may be typically 100 % or less (i.e., no peak is detected), or 60 % or less, or 50 % or less, or 45 % or less, or 40 % or less.

*Dietary fiber-localized part

The dough composition at step (i) may more preferably contain parts in which dietary fiber (i.e., the total of soluble dietary fiber and insoluble dietary fiber) is localized (dietary fiber-localized parts). Specifically, the lower limit of the ratio of dietary fiber-localized parts (e.g., psyllium husk) to the total mass of the dough composition in terms of wet mass basis ratio may preferably be within the range of 0.1 mass % or more 20 mass % or less. More specifically, the lower limit may preferably be typically 0.1 mass % or more, particularly 0.2 mass % or more, or 0.3 mass % or more, or 0.4 mass % or more, or 0.5 mass % or more, or 1.0 mass % or more, or 1.5 mass % or more. On the other hand, the upper limit may be, although not particularly limited to, typically 20 mass % or less, or 15 mass % or less, or 10 mass % or less, or 7.5 mass % or less, or 5.0 mass % or less. The dietary fiber-localized parts may be insoluble dietary fiber-localized parts satisfying the above requirements. The dietary fiber-localized parts may include at least psyllium husk, and may have undergone the enzyme treatment (e.g., xylanase treatment and/or pectinase treatment) explained above.
The dough composition may also preferably contain pulse seed skin as dietary fiber-localized parts (more specifically insoluble dietary fiber-localized parts) at the ratios explained above, especially when the production process does not include the fermentation step, since the resulting dough composition may exhibit improved spreadability upon addition of water and results in a physical property that facilitates swelling in step (ii).
The dough composition may also preferably contain the seed skin of edible wild plant psyllium (also referred to as psyllium seed skin or psyllium husk) as a dietary fiber-localized part (more specifically, a localized part in which soluble dietary fiber and insoluble dietary fiber are localized) at the ratio mentioned above, especially when the production process includes the step of fermentation the dough composition, since the swelling of the dough composition at step (ii) is promoted. Specifically, the dough composition may preferably contain psyllium seed skin which has undergone enzyme treatment (preferably with cellulase and/or pectinase and/or xylanase, especially with at least pectinase or xylanase) at the ratio mentioned above. The dough composition may more preferably contain both pulse seed skin and psyllium seed skin (especially enzyme-treated psyllium seed skin). In this case, the total content of pulse seed skin and psyllium seed skin may preferably satisfy the ratio mentioned above.
The dough composition may contain a dietary fiber-localized part either as a pure product or as a dietary fiber-containing food ingredient containing the dietary fiber-localized part, but it may preferably contain both a dietary fiber-localized part and a different part of the same kind of food ingredient, more preferably both a dietary fiber-localized part and a different part of the same individual of food ingredient. When the dough composition contains both a dietary fiber-localized part and a different part of the same kind or the same individual of food ingredient, the dietary fiber-localized part and the different part of food ingredient may be incorporated into the dough composition either separately or as a single food ingredient containing both the dietary fiber-localized part and the different part. It is also preferable that the dietary fiber-localized part is an insoluble dietary fiber-localized part satisfying the requirements mentioned above.
The dietary fiber-localized part herein refers to a part of a food ingredient (edible plant) which has a relatively higher content ratio of dietary fiber compared to the edible part of the same food ingredient. For example, the dietary fiber-localized part may have a content ratio of dietary fiber in a drying state which is typically 1.1 times or more, or 1.2 times or more, or 1.3 times or more, or 1.4 times or more, or 1.5 times or more, or 1.6 times or more, or 1.7 times or more, or 1.8 times or more, or 1.9 times or more, or 2.0 times or more of that of the edible part. For example, a dietary fiber-localized part (more specifically, insoluble dietary fiber-localized part) of pulse is its seed skin, which has a relatively higher content ratio of dietary fiber than the dietary fiber content ratio than its edible part (cotyledon). A dietary fiber-localized part (more specifically, insoluble dietary fiber-localized part) of cereal is its bran, which has a relatively higher content ratio of dietary fiber than the dietary fiber content ratio than its edible part. A dietary fiber-localized part (more specifically, soluble dietary fiber- and insoluble dietary fiber-localized part) of edible wild plant psyllium is its seed skin (psyllium seed skin or psyllium husk). Among them, psyllium seed skin is particularly favorable from a nutritional point of view, since it contains soluble dietary fiber in addition to insoluble dietary fiber.

The dietary fiber-localized part or insoluble dietary fiber-localized part used in the present invention may be either a part of an "edible part" of a food ingredient (e.g., one or more selected from seeds or skin of cereals, pulses, nuts, vegetables (especially pulse seed skin), the seed skin of psyllium, and bran of cereals) or a "non-edible part" of a food ingredient (e.g., corn cores and bean pods), but may preferably be a part of an "edible part" of a food ingredient, more preferably at least one of pulse seed skin, psyllium seed skin, and cereal bran, more preferably either pulse seed skin or psyllium seed skin, most preferably both pulse seed skin and psyllium seed skin.

Examples of dietary fiber-localized parts include "discarded parts" of various food ingredients described in the Japan Standard Tables for Food Composition 2015 (7th revised edition) (examples are shown in Table 1). However, other than these "non-edible parts," dietary fiber-localized parts can also be found in "edible parts," such as seeds or skin of cereals, pulses, nuts, vegetables, and particularly hard and thick parts of the stem and leaf parts of vegetables.

The term "non-edible part" of a food ingredient herein refers to a part of a food ingredient which is normally not suitable for eating or drinking or which is discarded under normal eating practices, and the term "edible part" herein refers to a part of a food ingredient other than the discarded parts (non-edible parts). Specific non-edible parts and their ratios in food ingredient used in the present invention, i.e., food ingredients containing dietary fiber and/or other food ingredients (which do not contain dietary fiber) are naturally understood by those skilled in the art who deal with these food ingredients or processed products of these food ingredients. For example, reference can be made to the "discarded parts" and "discarded ratios" the Japan Standard Tables for Food Composition 2015 (7th revised edition), and these can be treated as the parts and percentages of inedible parts respectively. The parts and ratios of inedible parts in food ingredients can also provide information about the parts and ratios of edible parts.

The dietary fiber content in a dietary fiber-localized part in terms of dry mass basis may preferably be within the range of more than 8 mass % but 50 mass % or less. More specifically, the lower limit may preferably be typically more than 8 mass %, or more than 9 mass %, or more than 10 mass %, or more than 11 mass %, or more than 12 mass %, or more than 13 mass %, or more than 14 mass %, or more than 15 mass %, or more than 16 mass %, or more than 17 mass %, or more than 18 mass %, or more than 19 mass %, or more than 20 mass %. The upper limit is not particularly restricted, but may be typically 50 mass % or less, or 40 mass % or less, or 30 mass % or less. The term "dry mass basis" (also referred to as "dry mass basis ratio," "wet mass basis," or "dry basis") herein refers to the content ratio of each component, etc., in a composition calculated with the dry mass of the composition or each fraction excluding moisture (in the above case, the dry mass of the insoluble dietary fiber localized part) as the denominator and the content of each target component or target object (in the above case. the dry mass of the insoluble dietary fiber) as the numerator. In other words, some of the requirements relating to the composition of the present invention in terms of dry mass basis, such as the requirements relating to the raw material contents and nutritional ingredients, may also be satisfied by the dough composition at step (i) and/or step (ii), since these parameters may not change depending on the presence or absence of moisture or before or after any treatment.

When a dietary fiber-localized part is incorporated in the dough composition, it may preferably be made into the form of micronized product. Micronization of a dietary fiber-localized part may be carried out on an isolated product of the dietary fiber-localized part or on a dietary fiber-containing food ingredient containing the dietary fiber-localized part, although it is convenient to separate the dietary fiber-localized part from the other parts before micronization, since dietary fiber-localized parts are normally difficult to micronize. Examples of such embodiments include: an embodiment including separating the seed skin of pulse from other edible parts, micronizing the separated pulse seed skin, and mixing the micronized pulse seed skin with the edible part of pulse which has been micronized separately; an embodiment including separating the bran of cereal from other edible parts, micronizing the separated cereal bran, and mixing the micronized cereal bran with the edible part of cereal which has been micronized separately; and an embodiment including separating the seed skin of psyllium (psyllium husk) from other edible parts, micronizing the separated psyllium husk, and mixing the micronized psyllium husk with the edible part of psyllium which has been micronized separately. It is also preferred that the above requirement is satisfied when the dietary fiber-localized part is an insoluble dietary fiber-localized part that contains hard tissue.

On the other hand, if powerful micronization method can be employed, it may be advantageous from the industrial viewpoint to micronize a dietary fiber-localized part (especially insoluble dietary fiber-localized part) in the form of a dietary fiber-containing food ingredient containing the dietary fiber-localized part without separation, because the step of separating the food ingredient into parts can be omitted. Examples of such embodiments include subjecting pulse with seed skin or cereal with bran to micronization without any separation.

The dough composition may preferably contain both a micronized product of a dietary fiber-localized part (especially insoluble dietary fiber-localized part) and a micronized product of a different part of the same kind of food ingredient. In this case, the micronized dietary fiber-localized part may be once separated from the food ingredient before being micronized, or may be micronized in the form of a dietary fiber-containing food ingredient containing the dietary fiber-localized part.

The means of pulverization to be used as conditions for micronization in the present invention is not particularly limited. Specifically, the temperature during pulverization is not particularly limited, and may be high-temperature pulverization, normal-temperature pulverization, or low-temperature pulverization. Examples of devices for the micronization process include, but are not limited to, blenders, mixers, mills, kneaders, crushers, disintegrators, and grinders. Specific examples that can be used include, for example, media stirring mills such as dry bead mills ball mills (rolling, vibrating, etc.), jet mills, high-speed rotating impact mills (pin mills, etc.), roll mills, hammer mills, etc.

Micronization of a dietary fiber-localized part (especially insoluble dietary fiber-localized part) may preferably be carried out such that the particle diameter $d_{50}$ of the microparticle complexes after disturbance is adjusted to within a predetermined range. Specifically, the particle diameter $d_{50}$ after disturbance may preferably be within the range of 1 $\mu$m or more 450 $\mu$m or less. More specifically, the upper limit may preferably be typically 450 $\mu$m or less, particularly 400 $\mu$m or less, or 350 $\mu$m or less, or 300 $\mu$m or less, or 250 $\mu$m or less, or 200 $\mu$m or less, or 150 $\mu$m or less, or 100 $\mu$m or less. On the other hand, the lower limit is not particularly restricted, but may be 1 $\mu$m or more, particularly 5 $\mu$m or more, or 7 $\mu$m or more.

Micronization of a dietary fiber-localized part (especially insoluble dietary fiber-localized part) may preferably be carried out such that the particle diameter $d_{90}$ of the microparticle complexes after disturbance is adjusted to within a predetermined range. Specifically, the particle diameter $d_{90}$ after disturbance may preferably be within the range of 1 $\mu$m or more 450 $\mu$m or less. More specifically, the upper limit may preferably be typically 450 $\mu$m or less, particularly 400 $\mu$m or less, or 350 $\mu$m or less, or 300 $\mu$m or less, or 250 $\mu$m or less, or 200 $\mu$m or less, or 150 $\mu$m or less, or 100 $\mu$m or less. On the other hand, the lower limit is not particularly restricted, but may be 1 $\mu$m or more, particularly 5 $\mu$m or more, or 7 $\mu$m or more.

Micronization of a dietary fiber-localized part (especially an insoluble dietary fiber-localized part) may preferably be carried out such that the specific surface area per unit volume of (microparticles and microparticle complexes) in a crushed product of the dietary fiber-localized part after disturbance may preferably be within the range of 0.01 [$m^2$/mL] or more 1.50 [$m^2$/mL] or less . More specifically, the upper limit may preferably be typically 0.01 [$m^2$/mL] or more, particularly 0.02 [$m^2$/mL] or more, or 0.03 [$m^2$/mL] or more may preferably be. On the other hand, the upper limit is not particularly restricted, but may preferably be typically 1.50 [$m^2$/mL] or less, particularly 1.00[$m^2$/mL] or less, or 0.90 [$m^2$/mL] or less, or 0.80 [$m^2$/mL] or less.

The specific surface area per unit volume [$m^2$/mL] herein refers to a specific surface area of particles per unit volume (1 mL) measured with a laser diffraction particle size distribution analyzer, assuming that the particles are spherical. The specific surface area of particles per unit volume assuming that the particles are spherical is a value based on a different mechanism from, e.g., those of values reflecting the constitution of particles and surface structures of particles (specific surface area per volume and per mass determined by, e.g., permeation and gas adsorption methods). The specific surface area of particles per unit volume assuming that the particles are spherical can be calculated as 6 x $\Sigma$ (ai)/$\Sigma$(ai*di) particle where ai represents a surface area per particle and di represents a particle diameter.

The pulse and/or cereal contained in the dough composition prepared in step (i) may preferably be in the form of pulse powder and/or cereal powder which has a particle diameter $d_{90}$ of a predetermined limit or lower after ultrasonication. Specifically, the particle diameter $d_{90}$ of the pulse and/or cereal after ultrasonication may preferably be within the range of 1 $\mu$m or more less than 500 $\mu$m. More specifically, the upper limit may preferably be typically less than 500 $\mu$m, particularly 450 $\mu$m or less, or 400 $\mu$m or less, or 350 $\mu$m or less, or 300 $\mu$m or less, or 250 $\mu$m or less, or 200 $\mu$m or less, or 150 $\mu$m or less, or 100 $\mu$m or less. On the other hand, the lower limit is not particularly restricted, but may be 1 $\mu$m or more, particularly 5 $\mu$m or more, or 7 $\mu$m or more, or 10 $\mu$m or more.

*Step (ii): Swelling of the dough composition via heat treatment:

Step (ii) is to swell the dough composition by heating. This heating process usually promotes the enzymatic treatment mentioned above (e.g., xylanase and/or pectinase treatment) at this step, whereby the starch in the dough composition is broken down by the degradative enzymes while the composition is swollen. In this regard, the enzyme treatment may be carried out using raw materials which have been enzyme-treated in advance, which are enzyme-treated at step (i), which are enzyme-treated at step (ii), or a combination of these methods. The duration of heating at step (ii) may be determined as appropriate, based on the reaction rate determined from enzyme activity, reaction temperature and moisture content on a dry mass basis in the dough composition, as well as the change ratios of AUC2 and AUC1. For example, the duration of heating at step (ii) may preferably be typically one minute or more, particularly 2 minutes or more, or 3 minutes or more. The upper limit is not particularly restricted, but may be typically 24 hours or less, or 16 hours or less. The heating temperature at step (ii) may also be determined as appropriate, based on, e.g., the change ratios of AUC2 and AUC1, but may preferably be within the range of 30 °C or higher and 300 °C or lower. More specifically, the upper limit may preferably be typically 30 °C or higher, particularly 40 °C or higher, or 50 °C or higher, or 60 °C or higher, or 70 °C or higher, or 80 °C or higher, or 90 °C or higher, or 95 °C or higher, or 100 °C or higher, or 105 °C or higher, or 110 °C or higher, or 115 °C or higher, especially 120 °C or higher. On the other hand, the upper limit is not particularly restricted, but may be typically 300 °C or lower, particularly 290 °C or lower, or 280 °C or lower, or 270 °C or lower, or 260 °C or lower, or 250 °C or lower, or 240 °C or lower, or 230 °C or lower, or 220 °C or lower. The pressure during heating at step (ii) is not limited and may be determined unless inhibiting the swelling of the composition, but may be typically normal procedure.

More specifically, when the composition of the present invention is a fermented swollen composition, the production method of the fermented swollen composition explained below can be employed. In this case, with regard to the requirements for step (ii) (specifically, the requirements relating to the state before and after the heat treatment at step (ii)) in the production method of the fermented swollen composition, it is sufficient if the "after treatment" requirement is satisfied at the completion of the heating and kneading step (ii-a) and the baking step (ii-b), which are described below, but the requirement may be satisfied at the completion of the heating and kneading step (ii-a). In addition, if the composition of the present invention is a non-fermented swollen composition, it is possible to adopt the production method of the non-fermented swollen composition 1 or the production method of the non-fermented swollen composition 2 explained below. In this case, with regard to the requirements for step (ii) (specifically, the requirements relating to the state before and after the heat treatment at step (ii)) in the production method of the non-fermented swollen composition 1, it is sufficient if the "after treatment" requirement is satisfied at the completion of the heating and kneading step (ii-1a) and the baking step (ii-1b), which are described below, but the requirement may be satisfied at the completion of the heating and kneading step (ii-1a). Likewise, with regard to the requirements for step (ii) (specifically, the requirements relating to the state before and after the heat treatment at step (ii)) in the production method of the non-fermented swollen composition 2, it is sufficient if the "after treatment" requirement is satisfied at the completion of the heating and kneading step (ii-2a) and the baking step (ii-2b), which are described below, but the requirement may be satisfied at the completion of the heating and kneading step (ii-2a).

(Production method of the fermented swollen composition)

Step (ii) includes:

(ii-a) yeast-fermenting the dough composition from step (i); and
(ii-b) baking the yeast-fermented composition from step (ii-a).

(Production method of the fermented swollen composition 1)

Step (ii) includes:

(ii-1a) kneading the dough composition from step (i) under pressurized conditions with heating at a temperature of more than 100 °C 1; and
(ii-1b) subjecting the kneaded composition from step (ii-1a) to normal pressure at a temperature of more than 100 °C.

(Production method of the fermented swollen composition 2)

Step (ii) includes:

(c-3) When 6% suspension of a crushed product of the dough composition is observed, the number of starch grain structures is 40/mm$^2$ or more.
(d-3) When 14 mass % aqueous slurry of a crushed product of the dough composition is measured using rapid visco-analyzer with elevating the temperature from 50 °C to 140 °C at a rate of 12.5°C/min, the peak temperature of gelatinization is more than 95 °C.

Swelling of the dough composition by heat treatment at step (ii) may preferably satisfy the following conditions.
The dry mass basis moisture content in the composition may preferably be decreased before and after the heat treatment at step (ii) by a predetermined ratio or more (i.e., the decremental ratio calculated as "{(the ratio in the dough composition before the heat treatment) - (the ratio in the dough composition after the heat treatment)}/ (the ratio in the dough composition before the heat treatment)" may preferably be a predetermined value or higher). Specifically, the decremental ratio before and after the heat treatment at step (ii) may preferably be within the range of 5 mass % or more but 100 mass % or less. More specifically, the lower limit of the decremental ratio may preferably be typically 5 mass % or more, particularly 9 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more. The reason for this is not clear, but it is estimated that the higher the said ratio is, the more starch degradation in the dough composition during the heating process is accelerated and the composition is preferably swollen. On the other hand, the upper limit of the decremental ratio is not particularly restricted, but may be typically 100 mass % or less, or 98 mass % or less, or 96 mass % or less, or 94 mass % or less, or 92 mass % or less, or 90 mass % or less, or 80 mass % or less, or 70 mass % or less.

In the case of fermented swollen compositions prepared via the production process including a fermentation step (e.g., breads or bread-like foods), the dry mass basis moisture content decrease ratio before and after the heat treatment at step (ii) may preferably be relatively low (i.e., the decremental ratio calculated as "{(the ratio in the dough composition before the fermentation and the heat treatment) - (the ratio in the dough composition after the fermentation and the heat treatment) }/ (the ratio in the dough composition before the fermentation and the heat treatment)" may preferably be a predetermined value or higher). Specifically, the decrease ratio before and after the heat treatment at step (ii) may preferably be within the range of 5 mass % or more 80 mass % or less. More specifically, the lower limit of the decrease ratio may be typically 5 mass % or more, or 9 mass % or more, or 15 mass % or more. On the other hand, the upper limit of the decrease ratio is not particularly restricted, but may be typically less than 80 mass %, particularly less than 70 mass %, or less than 60 mass % from the viewpoint of industrial production efficiency.

Unless otherwise specified in the present invention, the statement "before the heat treatment" herein refers to the state of the dough composition immediately after preparation at step (i) and the statement "after the heat treatment" herein refers to the state of the swollen composition after step (ii) has been completed.

The AUC1 value of the composition may preferably increase by a predetermined ratio or more before and after the heat treatment at step (ii) (i.e., the incremental ratio calculated as "{(the ratio in the composition after the heat treatment) - (the ratio in the dough composition before the heat treatment)}/(the ratio in the dough composition before the heat treatment)" may preferably be a predetermined value or higher). Specifically, the incremental ratio before and after the heat treatment at step (ii) may preferably be within the range of 5 % or more 500 % or less. More specifically, the lower limit of the incremental ratio may preferably be typically 5 % or more, particularly 10 % or more, or 15 % or more, or 20 % or more, or 25 % or more, or 30 % or more, or 35 % or more, or 40 % or more. The reason for this is not clear, but it is estimated that compositions with high AUC1 are considered to soften the hardening of the compositions due to cooling after the heat treatment and make it easier to feel the unique swollen-food texture, so the higher the percentage increase, the more desirable the quality of the composition, which is less likely to become hard after the heat treatment. On the other hand, the upper limit of the incremental ratio is not particularly restricted, but may be typically 500 % or less, or 400 % or less, or 300 % or less, or 250 % or less, or 210 % or less, or 200 % or less, or 150 % or less, or 100 % or less, or 95 % or less, or 90 % or less, or 85 % or less, or 80 % or less, or 75 % or less, or 70 % or less, or 65 % or less. Incidentally, because the values in the composition after the heat treatment do not change significantly after subsequent cooling to ambient temperature, the values for the composition measured after cooling to ambient temperature can be adopted as the relevant values for the composition after the heat treatment.

The AUC2 value in the composition before and after the heat treatment at step (ii) may preferably decrease by a predetermined ratio or more (i.e., the decremental ratio calculated as "{(the ratio in the dough composition before the heat treatment) - (the ratio in the composition after the heat treatment)}/(the ratio in the dough composition before the heat treatment)" may preferably be a predetermined value or higher). Specifically, the decremental ratio before and after the heat treatment at step (ii) may preferably be within the range of 5 % or more 100 % or less. More specifically, the lower limit of the decremental ratio may preferably be 5 % or more, particularly 10 % or more, or 15 % or more, or 20 % or more, or 25 % or more, or 30 % or more, or 35 % or more, or 40 % or more. The reason for this is not clear, but it is estimated that compositions with high AUC2 swell easily during the heat treatment, but cooling after the heat treatment causes the composition to harden, making it difficult to fully appreciate the unique texture of the swollen food, and so that the higher this decremental ratio, the more favorable the quality of the composition, which combines the contradictory properties of easy swelling in the dough composition during the heat treatment and resistance to hardening after the heat treatment. The upper limit of the decremental ratio is not particularly restricted, but may be typically 100 % or less, or 90 % or less. Incidentally, because the values in the composition after the heat treatment do not change significantly after subsequent cooling to ambient temperature, the values for the composition measured after cooling to ambient temperature can be adopted as the relevant values for the composition after the heat treatment.

The ratio of AUC2 to AUC1 ([AUC2]/[AUC1]) before and after the heat treatment at step (ii) may preferably decrease by a predetermined ratio or more (i.e., the decremental ratio calculated as "{(the ratio in the dough composition before the heat treatment) - (the ratio in the composition after the heat treatment)}/(the ratio in the dough composition before the heat treatment)" may preferably be a predetermined value or higher). Specifically, the decremental ratio before and after the heat treatment at step (ii) may preferably be 10 % or more 100 % or less may preferably be within the range of. More specifically, the lower limit of the decremental ratio may preferably be 10 % or more, particularly 15 % or more, or 20 %

or more, or 25 % or more, or 30 % or more, or 35 % or more, or 40 % or more. The reason for this is not clear, but it is estimated that the higher the decremental ratio, the more favorable the quality of the composition, with a good balance between the ease of swelling in the dough composition during the heat treatment and the resistance to hardening after the heat treatment. On the other hand, the upper limit of the decrease ratio is not particularly restricted, but may be typically 100 % or less, or 90 % or less, or 80 % or less. Incidentally, because the values in the composition after the heat treatment do not change significantly after subsequent cooling to ambient temperature, the values for the composition measured after cooling to ambient temperature can be adopted as the relevant values for the composition after the heat treatment.

The absorbance of the composition at a wavelength of 660 nm ("$ABS_{5.0-6.5}$") may preferably increase by a predetermined ratio or more before and after the heat treatment at step (ii) (i.e., the incremental difference calculated as "(the measurement value in the composition after the heat treatment) - (the measurement value in the dough composition before the heat treatment)" may preferably be a predetermined value or higher). Specifically, the incremental difference before and after the heat treatment at step (ii) may preferably be within the range of 0.03 or higher but 3.00 or higher. More specifically, the lower limit of the incremental difference may preferably be typically 0.03 or more, or 0.04 or more, or 0.05 or more, particularly 0.10 or more, or 0.15 or more, or 0.20 or more, or 0.25 or more, or 0.30 or more, or 0.35 or more, or 0.40 or more. The reason for this is not clear, but it is estimated that compositions containing more degraded amylopectin, which are considered to be specified by this parameter, are considered to be more likely to retain their state after swelling due to their moderate elasticity, so that the higher this parameter, the more likely they are to retain their state after swelling and be of favorable quality. On the other hand, the upper limit of the incremental difference is not particularly restricted, but may be typically 3.00 or less, or 2.50 or less, or 2.00 or less, or 1.50 or less, or 1.00 or less, or 0.90 or less, or 0.80 or less, or 0.70 or less. Incidentally, because the values in the composition after the heat treatment do not change significantly after subsequent cooling to ambient temperature, the values for the composition measured after cooling to ambient temperature can be adopted as the relevant values for the composition after the heat treatment.

The ratio of the area under the curve in an interval with molecular weight logarithms of 6.5 or more but less than 8.0 to the area under the entire curve of the molecular weight distribution curve $MWDC_{6.5-9.5}$ (AUC3) in the swollen composition of the present invention may decrease by a predetermined ratio or more before and after the heat treatment (i.e., the decremental ratio calculated as "{(the ratio in the dough composition before the heat treatment) - (the ratio in the composition after the heat treatment) }/(the ratio in the dough composition before the heat treatment)" may preferably be a predetermined value or higher). Specifically, the decremental ratio may preferably be within the range of 5 % or more 100 % or less. More specifically, the lower limit of the decrease ratio may preferably be typically 5 % or more, particularly 10 % or more, or 15 % or more, or 20 % or more, or 25 % or more, or 30 % or more, or 35 % or more. The upper limit is not particularly restricted, but may be typically 100 % or less, or 90 % or less. The reason for this is not clear, but it is estimated that a part or all of the amylopectin contained in the starch (considered to be contained in a fraction with molecular weight logarithms of 6.5 or more but less than 8.0) is further broken down into lower molecular weight amylose (considered to be contained in a fraction with molecular weight logarithms of 5.0 or more but less than 6.5) or dextrin (considered to be contained in a fraction with molecular weight logarithms of 3.5 or more but less than 5.0), the proportion of which increases during baking, resulting in a favorable-quality composition with both spreadability during the swelling step and a unique swollen product texture after baking. Incidentally, because the values in the composition after the heat treatment do not change significantly after subsequent cooling to ambient temperature, the values for the composition measured after cooling to ambient temperature can be adopted as the relevant values for the composition after **the** heat treatment.

The total porosity of the swollen composition of the present invention may preferably increase by a predetermined ratio or more before and after the heat treatment at step (ii) (i.e., the incremental ratio calculated as "{(the ratio in the composition after the heat treatment) - (the ratio in the dough composition before the heat treatment)}/(the ratio in the dough composition before the heat treatment)" may preferably be a predetermined value or higher). Specifically, the incremental ratio may preferably be 1 % or more 10000 % or less may preferably be within the range of. More specifically, the lower limit of the incremental ratio may preferably be typically 1 % or more, particularly 2 % or more, or 3 % or more, or 4 % or more, or 5 % or more, or 6 % or more, or 7 % or more, or 8 % or more, or 9 % or more, or 10 % or more, or 15 % or more, or 20 % or more, or 30 % or more, or 40 % or more, especially 50 % or more. The reason for this is not clear, but it is estimated that the air bubbles in the dough composition expand. On the other hand, the upper limit of the incremental ratio is not particularly restricted, but may be 10000 % or less, or 8000 % or less, or 6000 % or less, or 4000 % or less, or 2000 % or less, or 1000 % or less, or 500 % or less, or 300 % or less, or 200 % or less, or 150 % or less.

The composition volume of the swollen composition of the present invention may preferably increase by typically 1 % or more before and after the heat treatment at step (ii) (i.e., the incremental ratio calculated as "{(the volume after the heat treatment) - (the volume before the heat treatment)/(the volume before the heat treatment)" may preferably be a predetermined value or higher). Specifically, the incremental ratio may preferably be 1 % or more 2000 % or less may preferably be within the range of. More specifically, the lower limit of the incremental ratio may preferably be typically 1 % or more, particularly 2 % or more, or 3 % or more, or 4 % or more, or 5 % or more, or 6 % or more, or 7 % or more, or 8 % or more, or 9 % or more, or 10 % or more, or 15 % or more, or 20 % or more, or 30 % or more, or 40 % or more, especially 50 % or more. The reason for this is not clear, but it is estimated that the composition volume increases as the air bubbles in the dough composition expand. On the other hand, the incremental ratio the upper limit of は not particularly restricted, but may be 2000 % or less, or 1500%, or 1000%, or 800%, or 600 % or less, or 400 % or less, or 300 % or less, or 200 % or less, or 150 % or less.

The swollen composition of the present invention may preferably maintain its swollen state even after the heat treatment at step (ii). Specifically, the decrease ratio in the total porosity after the heat treatment at step (ii) when the composition is cooled to normal temperature (20 °C) may preferably be a predetermined limit or lower (i.e., the decrease ratio calculated as "{(the ratio in the composition after step (ii) (maximal value)) - (the ratio in the composition after being cooled to normal temperature (minimal value))}/( the ratio in the composition after step (ii) (maximal value))" may preferably be a predetermined value or lower). Specifically, the decrease ratio may preferably be within the range of 0 % or more 50 % or less. More specifically, the lower limit of the decrease ratio may preferably be typically 50 % or less, particularly 45 % or less, or 40 % or less, or 35 % or less, or 30 % or less, or 25 % or less, especially 20 % or less. The reason for this is not clear, but it is estimated that compositions in which this ratio is high cannot retain their swollen state after heat treatment and rapidly shrivel up. On the other hand, the lower limit of the decrease ratio is not particularly restricted, but may be 0 % or more, or 5 % or more.

The decrease ratio of the composition volume the swollen composition of the present invention when the composition is cooled to normal temperature (20 °C) after the heat treatment at step (ii) may preferably be a predetermined ratio or lower (i.e., the decrease ratio calculated as "{(the volume of the composition after step (ii) (maximal value)) - (the volume of the composition after being cooled to normal temperature (minimal value))}/(the volume of the composition after step (ii) (maximal value))" may preferably be a predetermined value or lower). Specifically, the decrease ratio may preferably be within the range of 0 % or more 50 % or less. More specifically, the lower limit of the decrease ratio may preferably be 50 % or less, particularly 45 % or less, or 40 % or less, or 35 % or less, or 30 % or less, or 25 % or less, especially 20 % or less. The reason for this is not clear, but it is estimated that compositions in which this ratio is high cannot retain their swollen state after heat treatment and rapidly shrivel up. On the other hand, the lower limit of the decrease ratio is not particularly restricted, but may be 0 % or more, or 5 % or more.

The $AV_{66.88278}$ x $AV_{80.79346}$ value (a product of an average luminance calculated from a signal intensity at m/z 66.88278 ($AV_{66.88278}$) and an average luminance calculated from a signal intensity at m/z 80.79346 ($AV_{80.79346}$)), which is defined as the feature (c1) of the composition, may preferably increase before and after the heat treatment at step (ii) by a predetermined ratio or more (i.e., the incremental ratio calculated as "{ (the ratio in the composition after the heat treatment) - (the ratio in the dough composition before the heat treatment)}/(the ratio in the dough composition before the heat treatment)" may preferably be a predetermined value or higher). Specifically, the incremental ratio before and after the heat treatment at step (ii) may preferably be within the range of 30 % or more 1000 % or less. More specifically, the incremental ratio the lower limit of may preferably be typically 30 % or more, particularly 40 % or more, or 50 % or more, or 60 % or more, or 70 % or more, or 80 % or more, or 90 % or more, or 100 % or more. The reason for this is not clear, but it is estimated that processing during heat treatment may reduce starch hardening by distributing low molecular weight components throughout the composition. On the other hand, the incremental ratio the upper limit of is not particularly restricted, but may be typically 1000 % or less, or 700 % or less, or 400 % or less. Incidentally, because the values in the composition after the heat treatment do not change significantly after subsequent cooling to ambient temperature, the values for the composition measured after cooling to ambient temperature can be adopted as the relevant values for the composition after the heat treatment.

The $SD_{66.88278}$ (a standard deviation of luminance in a signal intensity dispersion at m/z 66.88278), which is defined as the feature (c2) of the composition, may preferably increase before and after the heat treatment at step (ii) by a predetermined ratio or more (i.e., the incremental ratio calculated as "{ (the value in the composition after the heat treatment) - (the value in the dough composition before the heat treatment)}/(the value in the dough composition before the heat treatment)" may preferably be a predetermined value or higher). Specifically, the incremental ratio before and after the heat treatment at step (ii) may preferably be within the range of 5 % or more 500 % or less. More specifically, the lower limit of the incremental ratio may be typically 5 % or more, particularly 10 % or more, or 15 % or more, or 20 % or more, or 25 % or more, or 30 % or more, or 35 % or more, or 40 % or more. The reason for this is not clear, but it is estimated that low molecular weight components may be more widely distributed throughout the composition, resulting in a less stiff quality. On the other hand, the incremental ratio the upper limit of is not particularly restricted, but may be typically 500 % or less, or 400 % or less, or 350 % or less, or 300 % or less, or 200 % or less. Incidentally, because the values in the composition after the heat treatment do not change significantly after subsequent cooling to ambient temperature, the values for the composition measured after cooling to ambient temperature can be adopted as the relevant values for the composition after the heat treatment.

The $SD_{80.79346}$ (a standard deviation of luminance in a signal intensity dispersion at m/z 80.79346), which is defined as the feature (c3) of the composition, may preferably increase before and after the heat treatment at step (ii) by a predetermined ratio or more (i.e., the incremental ratio calculated as "{ (the value in the composition after the heat treatment) - (the value in the dough composition before the heat treatment)}/(the value in the dough composition before the heat treatment)" may preferably be a predetermined value or higher). Specifically, the incremental ratio before and after the

heat treatment at step (ii) may preferably be within the range of 5 % or more 1000 % or less. More specifically, the lower limit of the incremental ratio may be typically 5 % or more, particularly 10 % or more, or 15 % or more, or 20 % or more, or 25 % or more, or 30 % or more, or 35 % or more, or 40 % or more, or 50 % or more, or 60 % or more, or 70 % or more, or 80 % or more, or 100 % or more, or 200 % or more, or 300 % or more. The reason for this is not clear, but it is estimated that Low molecular weight components similar to pyrazine may be more widely distributed throughout the composition, resulting in a less stiff quality. The upper limit is not particularly restricted, but may be typically 1000 % or less, or 800 % or less, or 600 % or less. Incidentally, because the values in the composition after the heat treatment do not change significantly after subsequent cooling to ambient temperature, the values for the composition measured after cooling to ambient temperature can be adopted as the relevant values for the composition after the heat treatment.

**[0288]** The ratio of the area under the curve in an interval with molecular weight logarithms 3.5 or more but less than 5.0 to the area under the entire molecular weight distribution curve $MWDC_{3.5-6.5}$ (AUC4) of the swollen composition of the present invention may preferably increase before and after the heat treatment by a predetermined ratio or more (i.e., "{(the ratio in the composition after the heat treatment) - (the ratio in the dough composition before the heat treatment)}/(the ratio in the dough composition before the heat treatment)" the incremental ratio calculated as may preferably be a predetermined value or higher). Specifically, the incremental ratio before and after the heat treatment at step (ii) may preferably be within the range of 5 % or more 100 % or less. More specifically, the lower limit of the incremental ratio may be typically 5 % or more, particularly 10 % or more, or 15 % or more, or 20 % or more, or 25 % or more, or 30 % or more, or 35 % or more may preferably be. The upper limit is not particularly restricted, but may be typically 100 % or less, or 90 % or less. The reason for this is not clear, but it is estimated that a part or all of the amylopectin contained in the starch (considered to be contained in a fraction with molecular weight logarithms of 6.5 or more but less than 8.0) is further broken down into lower molecular weight amylose (considered to be contained in a fraction with molecular weight logarithms of 5.0 or more but less than 6.5) or dextrin (considered to be contained in a fraction with molecular weight logarithms of 3.5 or more but less than 5.0), the proportion of which increases during baking, resulting in a favorable-quality composition with a unique swollen product texture more easily felt. Incidentally, because the values in the composition after the heat treatment do not change significantly after subsequent cooling to ambient temperature, the values for the composition measured after cooling to ambient temperature can be adopted as the relevant values for the composition after the heat treatment.

*Intermediate processing and/or Post-processing:

**[0289]** The composition of the invention can be obtained by carrying out at least the steps (i) and (ii) explained above, but additional intermediate treatments and/or post-treatments may be added. Additional intermediate treatments and/or post-treatments include fermentation, molding, drying, and isothermal treatments.

**[0290]** Fermentation treatment may typically be carried out between step (i) and step (ii). The method and form of fermentation are not restricted, and may be carried out under any conditions using methods known in the art. For example, fermentation may typically be carried out by mixing the dough composition with yeast and holding it at a predetermined temperature for a predetermined time. The yeast for fermentation is not particularly restricted. Examples include sake yeast, bakery yeast, beer yeast, and wine yeast. The temperature during fermentation is also not restricted, but may preferably be within the range of 0 °C or higher but 60 °C or lower. More specifically, the lower limit may preferably be typically 0 °C or higher, particularly 4 °C or higher, still particularly 10 °C or higher. The upper limit is also not particularly restricted, but may be typically 60 °C or lower, particularly 50 °C or lower. The duration of fermentation is also not restricted, but may be typically 30 minutes or more, particularly 60 minutes or more, and typically 36 hours or less, particularly 24 hours or less. For example, fermentation may preferably be carried out at a temperature of 0 °C or higher but 40 °C or lower (more preferably 35 °C or lower, or 30 °C or lower, or 25 °C or lower, or 20 °C or lower) for 10 hours or more but 36 hours or less, since this may result in a fragrant composition.

**[0291]** Molding treatment may typically be carried out between step (i) and step (ii) and/or after step (ii). The method and form of molding are not restricted, and may be carried out into any shape using methods known in the art. For example, in order to produce compositions in elongated shapes such as pasta, Chinese noodles, or other noodles, the composition can be extruded into elongated forms using an extruder or other devices described above. On the other hand, in order to produce compositions in flat plate shapes, the composition may be molded into flat plate shapes. Furthermore, the composition can be made into any shape such as elongated, granular, or flaky shapes, by, e.g., press-molding the composition or cutting or die-cutting the flat-plate shaped composition.

**[0292]** Drying treatment may typically be carried out after step (ii). Drying treatment can be carried out by using any method generally used for drying foods. Examples include solar drying, drying in the shade, freeze drying, air drying (e.g., hot air drying, fluidized bed drying, spray drying, drum drying, low temperature drying, etc.), pressurized drying, decompressed drying, microwave drying, and oil heat drying. Preferable among these are air-drying (e.g., hot air drying, fluidized bed drying, spray drying, drum drying, low-temperature drying, etc.) and freeze-drying, since the degree of change in the color tone and flavor inherent in the food materials is small, and non-food aroma (e.g., burnt smell) can be controlled.

Isothermal treatment may typically be carried out between step (i) and step (ii). For example, the composition prepared at step (i) may be subjected to isothermal treatment at a predetermined temperature or higher with maintaining a dry mass basis moisture content of a predetermined value or higher, since this may serve to improve swellability. The treatment temperature is not restricted, but may preferably be within the range of 60 °C or higher but 300 °C or lower. More specifically. the lower limit may preferably be typically 60 °C or higher, particularly 70 °C or higher, or 90 °C or higher, or 100 °C or higher. The upper limit is not particularly restricted, but may be typically 300 °C or lower, or 250 °C or lower. The duration of isothermal treatment may be typically 15 minutes or more, particularly 30 minutes or more, and typically 10 hours or less, particularly 5 hours or less. The dry mass basis moisture content in the composition during isothermal treatment is not particularly restricted, but may preferably be within the range of more than 30 mass % but 200 mass % or less. More specifically, the lower limit may preferably be typically more than 30 mass %, particularly more than 40 mass %, or more than 50 mass %, or more than 60 mass %, or more than 70 mass %, or more than 80 mass %, and typically 200 mass % or less, particularly 175 mass % or less, or 150 mass % or less.

**EXAMPLES**

The present invention will now be described in further detail by way of Examples. These examples are shown merely for convenience of the description, and should not be construed as limitations to the present invention in any sense. The figures in each table are rounded to the nearest tenth of a digit.

[Preparation and parameter measurement of dough compositions]

The dough composition of each of the Test Examples and Comparative Examples was prepared by using a dried pulse powder (prepared using a matured pulse with a dry mass basis moisture content of less than 15 mass % as a raw material) or a dried cereal powder (prepared using a matured cereal with a dry mass basis moisture content of less than 15 mass % as a raw material) indicated in Table 1 below, mixing the raw material and water at ratios indicated in Table 2 below, so as to satisfy the values indicated in Tables 3 and 4 below. The peas used as a pulse contained a dietary fiber-localized part, i.e., "seed skin," and the oats used as a cereal contained a dietary fiber-localized part, i.e., "bran." Each of the dried pulse and cereal powders indicated in Table 1 was prepared by using a raw material pulse or cereal indicated in Table 1, powdering the raw material pulse or cereal using the method indicated in Table 1, optionally kneading the powdered pulse or cereal in some of the Test Examples by the heat-kneading method under moisture content conditions indicated in Table 1, and natural-drying the resulting powder (Test Examples without the corresponding treatment are marked 'NA' in the table). With regard to the heating step, in the Examples indicated as "Baked in oven," the dough composition was baked using a Panasonic, NE-MS264, and in the Examples indicated as "Heated between steel plates," the dough composition was baked using a Hanchen electric waffle maker NP-532.

[Table 1-1]

| Table 1 | | Raw material pulse and cereal | Powdering method | Dry pulse powder | | | | | Particle diameter d90 after ultrasonication |
|---|---|---|---|---|---|---|---|---|---|
| | | | | Heating kneading treatment | | | | | |
| | | | | Treatment method | Ratio of pulse/cereal powder kneaded/heated with water to the total mass of pulse/cereal powder | Heating temp. | Dry basis moisture content during heating treatment | Decrease in RVA peak temp. of gelatinization at heating treatment | |
| | | | | | mass % | °C | mass % | °C | μm |
| Test Example | 1 | Yellow pea (with skin) | Pin mill | NA | NA | NA | NA | - | 95 |
| Test Example | 2 | Yellow pea (with skin) | Pin mill | Part of powder was kneaded and heated with water, re-dried, and mixed with the remaining, unheated powder | 25% | 120°C | 60% | 12 | 85 |
| Test Example | 3 | Yellow pea (with skin) | Pin mill | Part of powder was kneaded and heated with water, re-dried, and mixed with the remaining, unheated powder | 50% | 120°C | 60% | 27 | 85 |
| Test Example | 4 | Yellow pea (with skin) | Pin mill | Part of powder was kneaded and heated with water, re-dried, and mixed with the remaining, unheated powder | 75% | 120°C | 60% | 39 | 80 |
| Comparative Example | 5 | Yellow pea (with skin) | Pin mill | All powder was kneaded and heated with water, re-dried, and crushed | 100% | 120°C | 60% | 52 | 76 |
| Test Example | 6 | Yellow pea (with skin) | Pin mill | All powder was kneaded and heated with water, re-dried, and crushed | 100% | 120°C | 60% | 52 | 76 |

(continued)

| Table 1 | | Raw material pulse and cereal | Powdering method | Dry pulse powder | | | | | | Particle diameter d90 after ultrasonication |
|---|---|---|---|---|---|---|---|---|---|---|
| | | | | Heating kneading treatment | | | | | | |
| | | | | Treatment method | Ratio of pulse/cereal powder kneaded/heated with water to the total mass of pulse/cereal powder | Heating temp. | Dry basis moisture content during heating treatment | Decrease in RVA peak temp. of gelatinization at heating treatment | | |
| | | | | | mass % | °C | mass % | °C | | μm |
| Comparative Example | 7 | Yellow pea (with skin) | Pin mill | All powder was kneaded and heated with water, re-dried, and crushed | 100% | 180°C | 60% | 80 | | 70 |
| Test Example | 8 | Yellow pea (with skin) | Pin mill | NA | NA | NA | NA | NA | - | 95 |
| Test Example | 9 | Yellow pea (with skin) | Pin mill | NA | NA | NA | NA | NA | - | 95 |
| Test Example | 10 | Yellow pea (with skin) | Pin mill | NA | NA | NA | NA | NA | - | 95 |
| Test Example | 11 | Yellow pea (with skin) | Pin mill | NA | NA | NA | NA | NA | - | 8 |
| Test Example | 12 | Yellow pea (with skin) | Pin mill | NA | NA | NA | NA | NA | - | 25 |
| Test Example | 13 | Yellow pea (with skin) | Pin mill | NA | NA | NA | NA | NA | - | 150 |
| Test Example | 14 | Yellow pea (with skin) | Pin mill | NA | NA | NA | NA | NA | - | 420 |

[Table 1-2]

| Table 1 | | Raw material pulse and cereal | Powdering method | Dry pulse powder | | | | | | Particle diameter d90 after ultrasonication |
|---|---|---|---|---|---|---|---|---|---|---|
| | | | | Heating kneading treatment | | | | | | |
| | | | | Treatment method | Ratio of pulse/cereal powder kneaded/heated with water to the total mass of pulse/cereal powder | Heating temp. | Dry basis moisture content during heating treatment | Decrease in RVA peak temp. of gelatinization at heating treatment | | |
| | | | | | mass % | °C | mass % | °C | | μm |
| Comparative Example | 15 | Yellow pea (with skin) | Pin mill | NA | NA | NA | NA | - | | 520 |
| Test Example | 16 | Yellow pea (with skin) | Pin mill | NA | NA | NA | NA | - | | 520 |
| Test Example | 17 | Yellow pea (with skin) | Jet mill | NA | NA | NA | NA | - | | 15 |
| Test Example | 18 | Yellow pea (with skin) | Jet mill | NA | NA | NA | NA | - | | 20 |
| Test Example | 19 | Yellow pea (with skin) | Jet mill | NA | NA | NA | NA | - | | 12 |
| Test Example | 20 | Yellow pea (with skin) | Jet mill | NA | NA | NA | NA | - | | 18 |
| Test Example | 21 | Yellow pea (with skin) | Pin mill | NA | NA | NA | NA | - | | 25 |

(continued)

| Table 1 | | Raw material pulse and cereal | Powdering method | Dry pulse powder | | | | | | |
|---|---|---|---|---|---|---|---|---|---|---|
| | | | | Heating kneading treatment | | | | | | Particle diameter d90 after ultrasonication |
| | | | | Treatment method | Ratio of pulse/cereal powder kneaded/heated with water to the total mass of pulse/cereal powder | Heating temp. | Dry basis moisture content during heating treatment | Decrease in RVA peak temp. of gelatinization at heating treatment | |
| | | | | | mass % | °C | mass % | °C | | μm |
| Test Example | 22 | Yellow pea (with skin) | Pin mill | Part of powder was kneaded and heated with water, re-dried, and mixed with the remaining, unheated powder | 25% | 120°C | 60% | 18 | | 85 |
| Test Example | 23 | Yellow pea (with skin) | Pin mill | Part of powder was kneaded and heated with water, re-dried, and mixed with the remaining, unheated powder | 50% | 120°C | 60% | 26 | | 85 |
| Test Example | 24 | Yellow pea (with skin) | Pin mill | Part of powder was kneaded and heated with water, re-dried, and mixed with the remaining, unheated powder | 75% | 120°C | 60% | 39 | | 80 |
| Comparative Example | 25 | Yellow pea (with skin) | Pin mill | All powder was kneaded and heated with water, re-dried, and crushed | 100% | 120°C | 60% | 51 | | 76 |
| Comparative Example | 26 | Yellow pea (with skin) | Pin mill | NA | NA | NA | NA | - | | 485 |
| Test Example | 27 | Yellow pea (with skin) | Pin mill | NA | NA | NA | NA | - | | 485 |

(continued)

| Table 1 | | Raw material pulse and cereal | Powdering method | Dry pulse powder | | | | | Particle diameter d90 after ultrasonication |
|---|---|---|---|---|---|---|---|---|---|
| | | | | Heating kneading treatment | | | | | |
| | | | | Treatment method | Ratio of pulse/cereal powder kneaded/heated with water to the total mass of pulse/cereal powder | Heating temp. | Dry basis moisture content during heating treatment | Decrease in RVA peak temp. of gelatinization at heating treatment | |
| | | | | | mass % | °C | mass % | °C | μm |
| Test Example | 28 | Yellow pea (with skin) | Pin mill | NA | NA | NA | NA | - | 485 |
| Test Example | 29 | Yellow pea (with skin) | Pin mill | NA | NA | NA | NA | - | 485 |

[Table 1-3]

| Table 1 | | Raw material pulse and cereal | Powdering method | Dry pulse powder | | | | | Particle diameter d90 after ultrasonication |
|---|---|---|---|---|---|---|---|---|---|
| | | | | Heating kneading treatment | | | | | |
| | | | | Treatment method | Ratio of pulse/cereal powder kneaded/heated with water to the total mass of pulse/cereal powder | Heating temp. | Dry basis moisture content during heating treatment | Decrease in RVA peak temp. of gelatinization at heating treatment | |
| | | | | | mass % | °C | mass % | °C | μm |
| Test Ex-ample | 30 | Yellow pea (with skin) | Pin mill | Paste composition prepared by mixing pulse powder with water was airflow-heated for 15 min, dried, and crushed | 100 | 90°C | 39% | 15 | 45 |
| Test Example | 31 | Yellow pea (with skin) | Pin mill | Pulse powder was airflow-heated for 15 min | 100 | 90°C | 10% | 2 | 55 |
| Test Example | 32 | Yellow pea (with skin) | Pin mill | Pulse powder was heated for 15 min in extruder | 100 | 240°C | 5% | 4 | 59 |
| Test Example | 33 | Yellow pea (with skin): 75% Oat (with bran): 25% | Pin mill | Pulse & oat powder was airflow-heated for 15 min | 100 | 90°C | 10% | 5 | 45 |
| Test Ex-ample | 34 | Yellow pea (with skin): 50% Oat (with bran): 50% | Pin mill | Pulse & oat powder was airflow-heated for 15 min | 100 | 90°C | 10% | 4 | 36 |

(continued)

| Table 1 | | Raw material pulse and cereal | Powdering method | Heating kneading treatment | | | | | Particle diameter d90 after ultrasonication |
|---|---|---|---|---|---|---|---|---|---|
| | | | | Dry pulse powder | | | | | |
| | | | | Treatment method | Ratio of pulse/cereal powder kneaded/heated with water to the total mass of pulse/cereal powder | Heating temp. | Dry basis moisture content during heating treatment | Decrease in RVA peak temp. of gelatinization at heating treatment | |
| | | | | | mass % | °C | mass % | °C | μm |
| Test Example | 35 | Yellow pea (with skin): 25% Oat (with bran): 75% | Pin mill | Pulse & oat powder was airflow-heated for 15 min | 100 | 90°C | 10% | 2 | 23 |
| Test Example | 36 | Oat (with bran) | Pin mill | Oat powder was airflow-heated for 15 min | 100 | 90°C | 10% | 0 | 15 |
| Test Example | 37 | Oat (with bran) | Pin mill | Oat powder was airflow-heated for 15 min | 100 | 90°C | 10% | 0 | 15 |
| Test Example | 38 | Oat (with bran) | Pin mill | Oat powder was airflow-heated for 15 min | 100 | 90°C | 10% | 0 | 15 |

[Table 2-1]

| Table 2 | | Dough composition | | | | | | |
|---|---|---|---|---|---|---|---|---|
| | | Pulse (yellow pea) powder | Cereal (oat) powder | Rice powder | Psyllium husk powder | Olive oil | Externally added enzyme | |
| | | mass %* | mass %* | mass %* | mass %* | mass %* | Type | U/dough 100g (wet weight) |
| Test Example | 1 | 86.7% | NA | NA | NA | 13.3% | NA | NA |
| Test Example | 2 | 86.7% | NA | NA | NA | 13.3% | NA | NA |
| Test Example | 3 | 86.7% | NA | NA | NA | 13.3% | NA | NA |
| Test Example | 4 | 86.7% | NA | NA | NA | 13.3% | NA | NA |
| Comparative Example | 5 | 86.7% | NA | NA | NA | 13.3% | NA | NA |
| Test Example | 6 | 86.7% | NA | NA | NA | 13.3% | NA | NA |
| Comparative Example | 7 | 86.7% | NA | NA | NA | 13.3% | NA | NA |
| Test Example | 8 | 95.2% | NA | NA | NA | 4.8% | NA | NA |
| Test Example | 9 | 98.6% | NA | NA | NA | 1.4% | NA | NA |
| Test Example | 10 | 63.8% | NA | NA | NA | 36.3% | NA | NA |
| Test Example | 11 | 97.9% | NA | NA | NA | 2.1% | NA | NA |
| Test Example | 12 | 97.9% | NA | NA | NA | 2.1% | NA | NA |
| Test Example | 13 | 97.9% | NA | NA | NA | 2.1% | NA | NA |
| Test Example | 14 | 97.9% | NA | NA | NA | 2.1% | NA | NA |
| Comparative Example | 15 | 97.9% | NA | NA | NA | 2.1 % | NA | NA |
| Test Example | 16 | 97.9% | NA | NA | NA | 2.1% | Cel-1" | 1.0 |
| Test Example | 17 | 27.9% | NA | 70.0 | NA | 2.1% | NA | NA |
| Test Example | 18 | 47.9% | NA | 50.0 | NA | 2.1 % | NA | NA |
| Test Example | 19 | 66.9% | NA | 30.0 | NA | 3.1% | NA | NA |
| Test Example | 20 | 86.9% | NA | 10.0 | NA | 3.1 % | NA | NA |

[Table 2-2]

| Table 2 | | Dough composition | | | | | | |
|---|---|---|---|---|---|---|---|---|
| | | Pulse (yellow pea) powder | Cereal (oat) powder | Rice powder | Psyllium husk powder | Olive oil | Externally added enzyme | |
| | | mass %* | mass %* | mass %* | mass %* | mass %* | Type | U/dough 100g (wet weight) |
| Test Example | 21 | 89.9% | NA | NA | 0.1 | 10.0% | NA | NA |
| Test Example | 22 | 89.9% | NA | NA | 0.1 | 10.0% | NA | NA |
| Test Example | 23 | 89.9% | NA | NA | 0.1 | 10.0% | NA | NA |
| Test Example | 24 | 89.9% | NA | NA | 0.1 | 10.0% | NA | NA |
| Comparative Example | 25 | 89.9% | NA | NA | 0.1 | 10.0% | NA | NA |

(continued)

| Table 2 | | Dough composition | | | | | | |
|---|---|---|---|---|---|---|---|---|
| | | Pulse (yellow pea) powder | Cereal (oat) powder | Rice powder | Psyllium husk powder | Olive oil | Externally added enzyme | |
| | | mass %* | mass %* | mass %* | mass %* | mass %* | Type | U/dough 100g (wet weight) |
| Comparative Example | 26 | 88.0% | NA | NA | 2.0 | 10.0% | Cel-2** | 0.001 |
| Test Example | 27 | 88.0% | NA | NA | 2.0 | 10.0% | Cel-2** | 0.01 |
| Test Example | 28 | 88.0% | NA | NA | 2.0 | 10.0% | Pec** | 0.1 |
| Test Example | 29 | 88.0% | NA | NA | 2.0 | 10.0% | Cel-2 + Pec** | Cel-2: 0.01 Pec: 0.1** |
| Test Example | 30 | 80.0% | NA | NA | 5.0 | 15.0% | Xyl*** | Xyl:0.01*** |
| Test Example | 31 | 80.0% | NA | NA | 5.0 | 15.0% | Xyl*** | Xyl:0.01*** |
| Test Example | 32 | 80.0% | NA | NA | 5.0 | 15.0% | Xyl*** | Xyl:0.01*** |
| Test Example | 33 | 60.0% | 20.0% | NA | 5.0 | 15.0% | Xyl*** | Xyl:0.2*** |
| Test Example | 34 | 40.0% | 40.0% | NA | 5.0 | 15.0% | Xyl*** | Xyl:0.2*** |
| Test Example | 35 | 20.0% | 60.0% | NA | 5.0 | 15.0% | Xyl*** | Xyl:0.2*** |
| Test Example | 36 | NA | 80.0% | NA | 5.0 | 15.0% | Xyl*** | Xyl:0.2*** |
| Test Example | 37 | NA | 85.0% | NA | NA | 15.0% | Xyl*** | Xyl:0.2*** |
| Test Example | 38 | NA | 80.0% | NA | 5.0 | 15.0% | Xyf*** | Xyl:0.2*** |

* **All** mass % are based on dry mass basis.
** Cel-1: Cellulase T "Amano" 4 by Amano Enzyme Inc.
Cel-2: Cellulase A "Amano" 3 by Amano Enzyme Inc.
Pec: Pectinase G "Amano" by Amano Enzyme Inc.
*** xyl: Hemicellulase "Amano" 90 (xylanase) by Amano Enzyme Inc.

The dough compositions of the Test Examples and Comparative Examples obtained by the above procedure were subjected to measurement of various parameters using the methods described in the [DESCRIPTION OF EMBODIMENTS] section above. The results of the dough compositions of the Test Examples and Comparative Examples are shown in Tables 3 and 4 below. The CFW-stained sites were observed in the state of being embedded in the iodine-stained sites, since more than 90% of the CFW-stained sites were embedded in the iodine-stained sites. The "Starch degradative enzyme activity" represents starch degradative enzyme activity derived from endogenous degradative enzymes as contained in the raw material edible plant (e.g., pulse and cereal) and from endogenous degradative enzymes contained in unheated yellow pea extracts.

[Table 3-1]

| Table 3 | | Dough composition | | | | | | | |
|---|---|---|---|---|---|---|---|---|---|
| | | Starch | | | | | | | |
| | | Origin of starch (main raw material) | Starch content (wet basis) | Degree of gelatinization of starch | Ratio of starch contained in pulse/cereal to total starch content | AUC1 | AUC2 | [AUC2]/ [AUC1] | AUC3 |
| | | | mass % | mass % | mass % | % | % | | % |
| Test Example | 1 | Yellow pea | 15.0 | 15.0 | 100.0 | 65% | 35% | 0.54 | 90% |
| Test Example | 2 | Yellow pea | 15.0 | 39.0 | 100.0 | 61%) | 39% | 0.64 | 93% |
| Test Example | 3 | Yellow pea | 15.0 | 60.0 | 100.0 | 60% | 40% | 0.67 | 95% |
| Test Example | 4 | Yellow pea | 15.0 | 85.0 | 100.0 | 59% | 41% | 0.69 | 100% |
| Comparative Example | 5 | Yellow pea | 15.0 | 97.0 | 100.0 | 58% | 42% | 0.72 | 100% |
| Test Example | 6 | Yellow pea | 15.0 | 97.0 | 100.0 | 60% | 40% | 0.67 | 100% |
| Comparative Example | 7 | Yellow pea | 15.0 | 100.0 | 100.0 | 28% | 72% | 2.57 | 100% |
| Test Example | 8 | Yellow pea | 41.3 | 15.0 | 100.0 | 65% | 35% | 0.54 | 90% |
| Test Example | 9 | Yellow pea | 13.3 | 15.0 | 100.0 | 65% | 35% | 0.54 | 90% |
| Test Example | 10 | Yellow pea | 9.4 | 15.0 | 100.0 | 65% | 35% | 0.54 | 90% |
| Test Example | 11 | Yellow pea | 22.0 | 10.0 | 100.0 | 65% | 35% | 0.54 | 90% |
| Test Example | 12 | Yellow pea | 22.0 | 10.0 | 100.0 | 65% | 35% | 0.54 | 90% |
| Test Example | 13 | Yellow pea | 22.0 | 10.0 | 100.0 | 65% | 35% | 0.54 | 90% |
| Test Example | 14 | Yellow pea | 22.0 | 10.0 | 100.0 | 65% | 35% | 0.54 | 90% |
| Comparative Example | 15 | Yellow pea | 22.0 | 10.0 | 100.0 | 65% | 35% | 0.54 | 90% |
| Test Example | 16 | Yellow pea | 22.0 | 10.0 | 100.0 | 65% | 35% | 0.54 | 90% |
| Test Example | 17 | Rice, Yellow pea | 27.5 | 15.0 | 20.4 | 58% | 42% | 0.72 | 24% |
| Test Example | 18 | Rice, Yellow pea | 24.5 | 15.0 | 38.5 | 60% | 40% | 0.67 | 30% |
| Test Example | 19 | Rice, Yellow pea | 21.5 | 15.0 | 59.8 | 63% | 37% | 0.59 | 51% |

(continued)

| Table 3 | | Dough composition | | | | | | | |
| --- | --- | --- | --- | --- | --- | --- | --- | --- | --- |
| | | Starch | | | | | | | |
| | | Origin of starch (main raw material) | Starch content (wet basis) | Degree of gelatinization of starch | Ratio of starch contained in pulse/cereal to total starch content | AUC1 | AUC2 | [AUC2]/ [AUC1] | AUC3 |
| | | | mass % | mass % | mass % | % | % | | % |
| Test Example | 20 | Rice, Yellow pea | 18.1 | 15.0 | 85.3 | 65% | 35% | 0.54 | 70% |

[Table 3-2]

| Table 3 | | Dough composition | | | | | | | |
| --- | --- | --- | --- | --- | --- | --- | --- | --- | --- |
| | | Starch | | | | | | | |
| | | Origin of starch (main raw material) | Starch content (wet basis) | Degree of gelatinization of starch | Ratio of starch contained in pulse/cereal to total starch content | AUC1 | AUC2 | [AUC2]/ [AUC1] | AUC3 |
| | | | mass % | mass % | mass % | % | % | | % |
| Test Example | 21 | Yellow pea | 17.6 | 15.0 | 100.0 | 60% | 40% | 0.67 | 91% |
| Test Example | 22 | Yellow pea | 17.6 | 39.0 | 100.0 | 60% | 40% | 0.67 | 91% |
| Test Example | 23 | Yellow pea | 17.6 | 60.0 | 100.0 | 60% | 40% | 0.67 | 91% |
| Test Example | 24 | Yellow pea | 17.6 | 85.0 | 100.0 | 60% | 40% | 0.67 | 91% |
| Comparative Example | 25 | Yellow pea | 17.6 | 97.0 | 100.0 | 58% | 42% | 0.72 | 91% |
| Comparative Example | 26 | Yellow pea | 17.6 | 15.0 | 100.0 | 60% | 40% | 0.67 | 91% |
| Test Example | 27 | Yellow pea | 17.6 | 15.0 | 100.0 | 60% | 40% | 0.67 | 91% |
| Test Example | 28 | Yellow pea | 17.6 | 15.0 | 100.0 | 60% | 40% | 0.67 | 91% |
| Test Example | 29 | Yellow pea | 17.6 | 15.0 | 100.0 | 60% | 40% | 0.67 | 91% |
| Test Example | 30 | Yellow pea | 20.0 | 65.0 | 100.0 | 55% | 45% | 0.82 | 91% |
| Test Example | 31 | Yellow pea | 20.0 | 5.0 | 100.0 | 55% | 45% | 0.82 | 91% |
| Test Example | 32 | Yellow pea | 20.0 | 20.0 | 100.0 | 55% | 45% | 0.82 | 91% |

(continued)

| Table 3 | | Dough composition | | | | | | | |
|---|---|---|---|---|---|---|---|---|---|
| | | Starch | | | | | | | |
| | | Origin of starch (main raw material) | Starch content (wet basis) | Degree of gelatinization of starch | Ratio of starch contained in pulse/cereal to total starch content | AUC1 | AUC2 | [AUC2]/ [AUC1] | AUC3 |
| | | | mass % | mass % | mass % | % | % | | % |
| Test Example | 33 | Yellow pea, Oat | 18.3 | 5.0 | 100.0 | 49% | 51% | 1.04 | 91% |
| Test Example | 34 | Yellow pea, Oat | 20.0 | 5.0 | 100.0 | 42% | 58% | 1.38 | 90% |
| Test Example | 35 | Yellow pea, Oat | 21.7 | 5.0 | 100.0 | 28% | 72% | 2.57 | 90% |
| Test Example | 36 | Oat | 23.3 | 5.0 | 100.0 | 20% | 80% | 4.00 | 89% |
| Test Example | 37 | Oat | 24.8 | 5.0 | 100.0 | 20% | 80% | 4.00 | 89% |
| Test Example | 38 | Oat | 23.7 | 5.0 | 100.0 | *20%* | 80% | 4.00 | 89% |

[Table 3-3]

| Table 3 | | Dough composition | | | |
|---|---|---|---|---|---|
| | | Starch | | | |
| | | Starch digestion enzyme activity (dry mass basis) | Unheated yellow pea extract added? | Absorbance ratio {(ABS6.5-8.0)/ (ABS5.0-6.5)) | Low Mw fraction (Mw Log 5.0-6.5) iodine stainability |
| | | U/g | | | |
| Test Example | 1 | 5.1 | NA | 0.38 | 0.42 |
| Test Example | 2 | 3.5 | NA | 0.30 | 0.55 |
| Test Example | 3 | 2.0 | NA | 0.21 | 0.76 |
| Test Example | 4 | 0.6 | NA | 0.11 | 1.01 |
| Comparative Example | 5 | 0.0 | NA | 0.08 | 1.20 |
| Test Example | 6 | 0.3 | Yes | 0.08 | 1.20 |
| Comparative Example | 7 | 0.8 | Yes | 0.04 | 1.98 |
| Test Example | 8 | 5.1 | NA | 0.38 | 0.42 |
| Test Example | 9 | 5.1 | NA | 0.38 | 0.42 |
| Test Example | 10 | 5.1 | NA | 0.38 | 0.42 |
| Test Example | 11 | 5.1 | NA | 0.38 | 0.42 |
| Test Example | 12 | 5.1 | NA | 0.38 | 0.42 |
| Test Example | 13 | 5.1 | NA | 0.38 | 0.42 |
| Test Example | 14 | 5.1 | NA | 0.38 | 0.42 |
| Comparative Example | 15 | 5.1 | NA | 0.38 | 0.42 |
| Test Example | 16 | 5.1 | NA | 0.38 | 0.42 |
| Test Example | 17 | 4.5 | NA | 0.05 | 2.35 |

(continued)

| Table 3 | | Dough composition | | | |
|---|---|---|---|---|---|
| | | Starch | | | |
| | | Starch digestion enzyme activity (dry mass basis) | Unheated yellow pea extract added? | Absorbance ratio {(ABS6.5-8.0)/ (ABS5.0-6.5)) | Low Mw fraction (Mw Log 5.0-6.5) iodine stainability |
| | | U/g | | | |
| Test Example | 18 | 4.5 | NA | 0.07 | 1.75 |
| Test Example | 19 | 4.5 | NA | 0.15 | 1.38 |
| Test Example | 20 | 4.5 | NA | 0.21 | 0.89 |

[Table 3-4]

| Table 3 | | Dough composition | | | |
|---|---|---|---|---|---|
| | | Starch | | | |
| | | Starch digestion enzyme activity (dry mass basis) | Unheated yellow pea extract added? | Absorbance ratio [(ABS6.5-8.0)/ (ABS5.0-6.5)} | Low Mw fraction (Mw Log 5.0-6.5) iodine stainability |
| | | U/g | | | |
| Test Example | 21 | 3.8 | NA | 0.75 | 0.13 |
| Test Example | 22 | 3.0 | NA | 0.35 | 0.49 |
| Test Example | 23 | 1.9 | NA | 0.21 | 0.73 |
| Test Example | 24 | 0.2 | NA | 0.11 | 1.10 |
| Comparative Example | 25 | 0.0 | NA | 0.08 | 1.81 |
| Comparative Example | 26 | 3.8 | NA | 0.75 | 0.13 |
| Test Example | 27 | 3.8 | NA | 0.75 | 0.13 |
| Test Example | 28 | 3.8 | NA | 0.75 | 0.13 |
| Test Example | 29 | 3.8 | NA | 0.75 | 0.13 |
| Test Example | 30 | 0.3 | NA | 0.08 | 0.54 |
| Test Example | 3-1 | 1.2.1 | NA | 0.02 | 0.89 |
| Test Example | 32 | 12.1 | NA | 0.02 | 0.76 |
| Test Example | 33 | 8.8 | NA | 0.09 | 0.89 |
| Test Example | 34 | 5.6 | NA | 0.12 | 0.92 |
| Test Example | 35 | 2.8 | NA | 0.10 | 0.95 |
| Test Example | 36 | 0.5 | NA | 0.15 | 1.01 |
| Test Example | 37 | 0.5 | NA | 0.15 | 1.01 |
| Test Example | 38 | 0.5 | NA | 0.15 | 1.01 |

[Table 4-1]

| Table 4 | | Dough composition | | | | | | |
|---|---|---|---|---|---|---|---|---|
| | | Oil and fat content | | | | Protein | | |
| | | Origin of Oil and fat (main raw material) | Total oil and fat content (wet basis) | Ratio of Liquid oil and fat to Total oil and fat content | Ratio of Oil and fat contained in pulse/cereal to Total oil and fat content | Origin of Protein (main raw material) | Protein content (wet basis) | Ratio of Protein contained in pulse/cereal to Total protein content |
| | | | mass % | mass % | mass % | | mass % | mass % |
| Test Example | 1 | Olive oil Yellow pea | 15.0% | 100.0% | 11.3% | Yellow pea | 10.0% | 100.0% |
| Test Example | 2 | Olive oil Yellow pea | 15.0% | 100.0% | 11.3% | Yellow pea | 10.0% | 100.0% |
| Test Example | 3 | Olive oil Yellow pea | 15.0% | 100.0% | 11.3% | Yellow pea | 10.0% | 100.0% |
| Test Example | 4 | Olive oil Yellow pea | 15.0% | 100.0% | 11.3% | Yellow pea | 10.0% | 100.0% |
| Comparative Example | 5 | Rapeseed oil Yellow pea | 15.0% | 100.0% | 11.3% | Yellow pea | 10.0% | 100.0% |
| Test Example | 6 | Rapeseed oil Yellow pea | 15.0% | 100.0% | 11.3% | Yellow pea | 10.0% | 100.0% |
| Comparative Example | 7 | Rapeseed oil Yellow pea | 15.0% | 100.0% | 11.3% | Yellow pea | 10.0% | 100.0% |
| Test Example | 8 | Olive oil Yellow pea | 6.7% | 100.0% | 28.0% | Yellow pea | 6.7% | 100.0% |
| Test Example | 9 | Olive oil Yellow pea | 3.3% | 100.0% | 58.0% | Yellow pea | 6.7% | 100.0% |
| Test Example | 10 | Olive oil Yellow pea | 37.5% | 100.0% | 3.3% | Yellow pea | 6.3% | 100.0% |
| Test Example | 11 | Olive oil Yellow pea | 4.0% | 100.0% | 48.0% | Yellow pea | 8.0% | 100.0% |
| Test Example | 12 | Olive oil Yellow pea | 4.0% | 100.0% | 48.0% | Yellow pea | 8.0% | 100.0% |
| Test Example | 13 | Olive oil Yellow pea | 4.0% | 100.0% | 48.0% | Yellow pea | 8.0% | 100.0% |
| Test Example | 14 | Olive oil Yellow pea | 4.0% | 100.0% | 48.0% | Yellow pea | 8.0% | 100.0% |
| Comparative Example | 15 | Olive oil Yellow pea | 4.0% | 100.0% | 48.0% | Yellow pea | 8.0% | 100.0% |
| Test Example | 16 | Olive oil Yellow pea | 4.0% | 100.0% | 48.0% | Yellow pea | 8.0% | 100.0% |
| Test Example | 17 | Olive oil Yellow pea | 4.0% | 100.0% | 48.0% | Yellow pea | 4.2% | 100.0% |

(continued)

| Table 4 | | Dough composition | | | | | | |
|---|---|---|---|---|---|---|---|---|
| | | Oil and fat content | | | | Protein | | |
| | | Origin of Oil and fat (main raw material) | Total oil and fat content (wet basis) | Ratio of Liquid oil and fat to Total oil and fat content | Ratio of Oil and fat contained in pulse/cereal to Total oil and fat content | Origin of Protein (main raw material) | Protein content (wet basis) | Ratio of Protein contained in pulse/cereal to Total protein content |
| | | | mass % | mass % | mass % | | mass % | mass % |
| Test Example | 18 | Olive oil Yellow pea | 4.0% | 100.0% | 48.0% | Yellow pea | 7.2% | 100.0% |
| Test Example | 19 | Olive oil Yellow pea | 5.0% | 100.0% | 38.0% | Yellow pea | 10.0% | 100.0% |
| Test Example | 20 | Olive oil Yellow pea | 5.0% | 100.0% | 38.0% | Yellow pea | 13.0% | 100.0% |

[Table 4-2]

| Table 4 | | Dough composition | | | | | | |
|---|---|---|---|---|---|---|---|---|
| | | Oil and fat content | | | | Protein | | |
| | | Origin of Oil and fat (main raw material) | Total oil and fat content (wet basis) | Ratio of Liquid oil and fat to Total oil and fat content | Ratio of Oil and fat contained in pulse/cereal to Total oil and fat content | Origin of Protein (main raw material) | Protein content (wet basis) | Ratio of Protein contained in pulse/cereal to Total protein content |
| | | | mass % | mass % | mass % | | mass % | mass % |
| Test Example | 21 | Olive oil Yellow pea | 11.8% | 100.0% | 15.0% | Yellow pea | 8.8% | 100.0% |
| Test Example | 22 | Olive oil Yellow pea | 11.8% | 100.0% | 15.0% | Yellow pea | 8.8% | 100.0% |
| Test Example | 23 | Olive oil Yellow pea | 11.8% | 100.0% | 15.0% | Yellow pea | 8.8% | 100.0% |
| Test Example | 24 | Olive oil Yellow pea | 11.8% | 100.0% | 15.0% | Yellow pea | 8.8% | 100.0% |
| Comparative Example | 25 | Olive oil Yellow pea | 11.8% | 100.0% | 15.0% | Yellow pea | 8.8% | 100.0% |
| Comparative Example | 26 | Olive oil Yellow pea | 11.8% | 100.0% | 15.0% | Yellow pea | 8.8% | 100.0% |
| Test Example | 27 | Olive oil Yellow pea | 11.8% | 100.0% | 15.0% | Yellow pea | 8.8% | 100.0% |

(continued)

| Table 4 | | Dough composition | | | | | | |
|---|---|---|---|---|---|---|---|---|
| | | Oil and fat content | | | | Protein | | |
| | | Origin of Oil and fat (main raw material) | Total oil and fat content (wet basis) | Ratio of Liquid oil and fat to Total oil and fat content | Ratio of Oil and fat contained in pulse/cereal to Total oil and fat content | Origin of Protein (main raw material) | Protein content (wet basis) | Ratio of Protein contained in pulse/cereal to Total protein content |
| | | | mass % | mass % | mass % | | mass % | mass % |
| Test Example | 28 | Olive oil Yellow pea | 11.8% | 100.0% | 15.0% | Yellow pea | 8.8% | 100.0% |
| Test Example | 29 | Olive oil Yellow pea | 11.8% | 100.0% | 15.0% | Yellow pea | 8.8% | 100.0% |
| Test Example | 30 | Olive oil Yellow pea | 12.7% | 100.0% | 10.0% | Yellow pea | 7.2% | 100.0% |
| Test Example | 31 | Olive oil Yellow pea | 12.7% | 100.0% | 10.0% | Yellow pea | 7.2% | 100.0% |
| Test Example | 32 | Olive oil Yellow pea | 12.7% | 100.0% | 10.0% | Yellow pea | 7.2% | 100.0% |
| Test Example | 33 | Olive oil Yellow pea oat | 8.6% | 100.0% | 10.0% | Yellow pea oat | 3.7% | 100.0% |
| Test Example | 34 | Olive oil Yellow pea oat | 0.0% | 100.0% | 10.0% | Yellow pea oat | 0.0% | 100.0% |
| Test Example | 35 | Olive oil Yellow pea oat | 0.0% | 100.0% | 10.0% | Yellow pea oat | 0.0% | 100.0% |
| Test Example | 36 | Olive oil oat | 0.0% | 100.0% | 10.0% | oat | 0.0% | 100.0% |
| Test Example | 37 | Olive oil oat | 0.0% | 100.0% | 10.0% | oat | 0.0% | 100.0% |
| Test Example | 38 | Olive oil oat | 0.0% | 100.0% | 10.0% | oat | 0.0% | 100.0% |

[Table 4-3]

| Table 4 | | Dough composition | | | | | Dry basis moisture content |
|---|---|---|---|---|---|---|---|
| | | Dietary fiber | | | | | |
| | | Origin of Dietary fiber (main raw material) | Dietary fiber content (wet basis) | Ratio of Dietary fiber contained in pulse/cereal to Total dietary fiber content | Treatment with externally added enzyme | Particle diameter d50 after starch & protein digestion (and disturbance) | |
| | | | mass % | mass % | | μm | mass % |
| Test Example | 1 | Yellow pea | 8.0% | 100.0% | NA | 85 | 100 |
| Test Example | 2 | Yellow pea | 8.0% | 100.0% | NA | 90 | 100 |
| Test Example | 3 | Yellow pea | 8.0% | 100.0% | NA | 92 | 100 |
| Test Example | 4 | Yellow pea | 8.0% | 100.0% | NA | 96 | 100 |
| Comparative Example | 5 | Yellow pea | 8.0% | 100.0% | NA | 97 | 100 |
| Test Example | 6 | Yellow pea | 8.0% | 100.0% | NA | 90 | 100 |
| Comparative Example | 7 | Yellow pea | 8.0% | 100.0% | NA | 80 | 100 |
| Test Example | 8 | Yellow pea | 10.7% | 100.0% | NA | 85 | 50 |
| Test Example | 9 | Yellow pea | 8.7% | 100.0% | NA | 85 | 200 |
| Test Example | 10 | Yellow pea | 3.1% | 100.0% | NA | 85 | 60 |
| Test Example | 11 | Yellow pea | 4.0% | 100.0% | NA | 5 | 150 |
| Test Example | 12 | Yellow pea | 4.0% | 100.0% | NA | 12 | 150 |
| Test Example | 13 | Yellow pea | 4.0% | 100.0% | NA | 131 | 150 |
| Test Example | 14 | Yellow pea | 4.0% | 100.0% | NA | 386 | 150 |
| Comparative Example | 15 | Yellow pea | 4.0% | 100.0% | NA | 510 | 150 |
| Test Example | 16 | Yellow pea | 4.0% | 100.0% | cellulase (added) | 225 | 150 |
| Test Example | 17 | Yellow pea | 13.0% | 100.0% | NA | 35 | 100 |
| Test Example | 18 | Yellow pea | 13.0% | 100.0% | NA | 21 | 100 |
| Test Example | 19 | Yellow pea | 13.0% | 100.0% | NA | 19 | 100 |

(continued)

| Table 4 | | Dough composition | | | | | Dry basis moisture content |
|---|---|---|---|---|---|---|---|
| | | Dietary fiber | | | | | |
| | | Origin of Dietary fiber (main raw material) | Dietary fiber content (wet basis) | Ratio of Dietary fiber contained in pulse/cereal to Total dietary fiber content | Treatment with externally added enzyme | Particle diameter d50 after starch & protein digestion (and disturbance) | |
| | | | mass % | mass % | | μm | mass % |
| Test Example | 20 | Yellow pea | 13.0% | 100.0% | NA | 30 | 100 |

[Table 4-4]

| Table 4 | | Dough composition | | | | | Dry basis moisture content |
|---|---|---|---|---|---|---|---|
| | | Dietary fiber | | | | | |
| | | Origin of Dietary fiber (main raw material) | Dietary fiber content (wet basis) | Ratio of Dietary fiber contained in pulse/cereal to Total dietary fiber content | Treatment with externally added enzyme | Particle diameter d50 after starch & protein digestion (and disturbance) | |
| | | | mass % | mass % | | μm | mass % |
| Test Example | 21 | Yellow pea Psyllium husk (Psyllium seed skin) | 17.6% | 98.0% | NA | 26 | 70 |
| Test Example | 22 | Yellow pea Psyllium husk (Psyllium seed skin) | 17.6% | 98.0% | NA | 30 | 70 |
| Test Example | 23 | Yellow pea Psyllium husk (Psyllium seed skin) | 17.6% | 98.0% | NA | 35 | 70 |
| Test Example | 24 | Yellow pea Psyllium husk (Psyllium seed skin) | 17.6% | 98.0% | NA | 36 | 70 |
| Comparative Example | 25 | Yellow pea Psyllium husk (Psyllium seed skin) | 17.6% | 98.0% | NA | 39 | 70 |
| Comparative Example | 26 | Yellow pea Psyllium husk (Psyllium seed skin) | 18.2% | 89.0% | Cellulase (added) | 498 | 70 |

(continued)

| Table 4 | | Dough composition | | | | | |
|---|---|---|---|---|---|---|---|
| | | Dietary fiber | | | | | Dry basis moisture content |
| | | Origin of Dietary fiber (main raw material) | Dietary fiber content (wet basis) | Ratio of Dietary fiber contained in pulse/cereal to Total dietary fiber content | Treatment with externally added enzyme | Particle diameter d50 after starch & protein digestion (and disturbance) | |
| | | | mass % | mass % | | μm | mass % |
| Test Example | 27 | Yellow pea Psyllium husk (Psyllium seed skin) | 18.2% | 89.0% | Cellulase (added) | 260 | 70 |
| Test Example | 28 | Yellow pea Psyllium husk (Psyllium seed skin) | 18.2% | 89.0% | Pectinase (added) | 205 | 70 |
| Test Example | 29 | Yellow pea Psyllium husk (Psyllium seed skin) | 18.2% | 89.0% | Pectinase + cellulase (added) | 156 | 70 |
| Test Example | 30 | Yellow pea Psyllium husk (Psyllium seed skin) | 12.9% | 61.2% | Xylanase (added) | 49 | 100 |
| Test Example | 31 | Yellow pea Psyllium husk (Psyllium seed skin) | 12.9% | 61.2% | Xylanase (added) | 89 | 100 |
| Test Example | 32 | Yellow pea Psyllium husk (Psyllium seed skin) | 12.9% | 61.2% | Xylanase (added) | 58 | 100 |
| Test Example | 33 | Yellow pea, Oat, Psyllium husk (Psyllium seed skin) | 9.4% | 46.9% | Xylanase (added) | 91 | 140 |
| Test Example | 34 | Yellow pea, Oat, Psyllium husk (Psyllium seed skin) | 8.1% | 38.1% | Xylanase (added) | 110 | 140 |

(continued)

| Table 4 | | Dough composition | | | | | |
|---|---|---|---|---|---|---|---|
| | | Dietary fiber | | | | | Dry basis moisture content |
| | | Origin of Dietary fiber (main raw material) | Dietary fiber content (wet basis) | Ratio of Dietary fiber contained in pulse/cereal to Total dietary fiber content | Treatment with externally added enzyme | Particle diameter d50 after starch & protein digestion (and disturbance) | |
| | | | mass % | mass % | | μm | mass % |
| Test Example | 35 | Yellow pea, oat Psyllium husk (Psyllium seed skin) | 6.8% | 25.9% | Xylanase (added) | 121 | 140 |
| Test Example | 36 | Oat, Psyllium husk (Psyllium seed skin) | 5.4% | 7.7% | Xylanase (added) | 136 | 140 |
| Test Example | 37 | Oat | 3.5% | 100.0% | Xylanase (added) | 136 | 140 |
| Test Example | 38 | Oat, Psyllium husk (Psyllium seed skin) | 5.1% | 1.6% | Xylanase (added) | 136 | 140 |

[Preparation and parameter measurement of swollen compositions]

The dough compositions of the Test Examples and Comparative Examples obtained by the above procedure were molded to the pre-heat shape shown in Table 5 below, and then heat-treated under the conditions shown in Table 5 below. In some of the Example indicated in Table 5 below, the dough compositions were subjected to fermentation treatment under the conditions indicated in Table 5 below (Oriental Fresh Yeast from Oriental Yeast Company was used as the yeast) before the molding and heating treatments. The heat-treated compositions were cooled at room temperature, whereby the swollen compositions of the Test Examples and Comparative Examples were obtained. The shape of the swollen composition of each Example after cooling is also shown in Table 5 below. Since the bottom area of each composition did not change before and after the heat treatment and during cooling at room temperature, the composition volume can be calculated from the composition thickness or height.

[Table 5-1]

| Table 5 | | Fermmentation/Molding/Heating/Cooling | | | | |
|---|---|---|---|---|---|---|
| | | Fermentation | | | Pre-heating shape | |
| | | Treatment | Temp. | Time | Shape | Dimension |
| | | | °C | hour | | |
| Test Example | 1 | NA | NA | NA | Plate | Average width 5mm |
| Test Example | 2 | NA | NA | NA | Plate | Average width 5mm |
| Test Example | 3 | NA | NA | NA | Plate | Average width 5mm |
| Test Example | 4 | NA | NA | NA | Plate | Average width 5mm |
| Comparative Example | 5 | NA | NA | NA | Plate | Average width 5mm |
| Test Example | 6 | NA | NA | NA | Plate | Average width 5mm |
| Comparative Example | 7 | NA | NA | NA | Plate | Average width 5mm |

(continued)

| Table 5 | | Fermmentation/Molding/Heating/Cooling | | | | |
|---|---|---|---|---|---|---|
| | | Fermentation | | | Pre-heating shape | |
| | | Treatment | Temp. | Time | Shape | Dimension |
| | | | °C | hour | | |
| Test Example | 8 | NA | NA | NA | Plate | Average width 5mm |
| Test Example | 9 | NA | NA | NA | Plate | Average width 5mm |
| Test Example | 10 | NA | NA | NA | Plate | Average width 5mm |
| Test Example | 11 | NA | NA | NA | Plate | Average width 3mm |
| Test Example | 12 | NA | NA | NA | Plate | Average width 3mm |
| Test Example | 13 | NA | NA | NA | Plate | Average width 3mm |
| Test Example | 14 | NA | NA | NA | Plate | Average width 3mm |
| Comparative Example | 15 | NA | NA | NA | Plate | Average width 3mm |
| Test Example | 16 | NA | NA | NA | Plate | Average width 3mm |
| Test Example | 17 | NA | NA | NA | Plate | Average width 5mm |
| Test Example | 18 | NA | NA | NA | Plate | Average width 5mm |
| Test Example | 19 | NA | NA | NA | Plate | Average width 5mm |
| Test Example | 20 | NA | NA | NA | Plate | Average width 5mm |

[Table 5-2]

| Table 5 | | Fermentation/Molding/Heating/Cooling | | | | |
|---|---|---|---|---|---|---|
| | | Fermentation | | | Pre-heating shape | |
| | | Treatment | Temp. | Time | Shape | Dimension |
| | | | °C | hour | | |
| Test Example | 21 | Mixed with yeast and fermented | 10°C | 16 hours | Cuboid | Height 15cm |
| Test Example | 22 | Mixed with yeast and fermented | 10°C | 16 hours | Cuboid | Height 15cm |
| Test Example | 23 | Mixed with yeast and fermented | 10°C | 16 hours | Cuboid | Height 15cm |
| Test Example | 24 | Mixed with yeast and fermented | 10°C | 16 hours | Cuboid | Height 15cm |
| Comparative Example | 25 | Mixed with yeast and fermented | 10°C | 16 hours | Cuboid | Height 15cm |
| Comparative Example | 26 | Mixed with yeast and fermented | 10°C | 16 hours | Cuboid | Height 15cm |
| Test Example | 27 | Mixed with yeast and fermented | 10°C | 16 hours | Cuboid | Height 15cm |
| Test Example | 28 | Mixed with yeast and fermented | 10°C | 16 hours | Cuboid | Height 15cm |
| Test Example | 29 | Mixed with yeast and fermented | 10°C | 16 hours | Cuboid | Height 15cm |
| Test Example | 30 | Mixed with yeast and fermented | 15°C | 12 hours | Belgian waffle | Average width 2.0cm |

(continued)

| Table 5 | | Fermentation/Molding/Heating/Cooling | | | | |
|---|---|---|---|---|---|---|
| | | Fermentation | | | Pre-heating shape | |
| | | Treatment | Temp. | Time | Shape | Dimension |
| | | | °C | hour | | |
| Test Example | 31 | Mixed with yeast and fermented | 15°C | 12 hours | Belgian waffle | Average width 2.0cm |
| Test Example | 32 | Mixed with yeast and fermented | 15°C | 12 hours | Belgian waffle | Average width 2.0cm |
| Test Example | 33 | Mixed with yeast and fermented | 45°C | 1hours | Belgian waffle | Average width 2.0cm |
| Test Example | 34 | Mixed with yeast and fermented | 45°C | 1 hours | Belgian waffle | Average width 2.0cm |
| Test Example | 35 | Mixed with yeast and fermented | 45°C | 1hours | Belgian waffle | Average width 2.0cm |
| Test Example | 36 | Mixed with yeast and fermented | 45°C | 1 hours | Belgian waffle | Average width 2.0cm |
| Test Example | 37 | Mixed with yeast and fermented | 45°C | 1 hours | Belgian waffle | Average width 2.0cm |
| Test Example | 38 | Mixed with yeast and fermented | 45°C | 1 hours | Belgian waffle | Average width 2.0cm |

[Table 5-3]

| Table 5 | | Fermentation/Molding/Heating/Cooling | | | | | | |
|---|---|---|---|---|---|---|---|---|
| | | heating treatment | | | Post-heating shape | | Post-cooling shape | |
| | | Treatment | Temp. | Time | Shape | Dimension | Shape | Dimension |
| | | | °C | min | | | | |
| Test Example | 1 | Baked in oven | 220°C | 15 min | Plate | Average width 8mm | Plate | Average width 8mm |
| Test Example | 2 | Baked in oven | 220°C | 15 min | Plate | Average width 8mm | Plate | Average width 8mm |
| Test Example | 3 | Baked in oven | 220°C | 15 min | Plate | Average width 8mm | Plate | Average width 8mm |
| Test Example | 4 | Baked in oven | 220°C | 15 min | Plate | Average width 7mm | Plate | Average width 7mm |
| Comparative Example | 5 | Baked in oven | 220°C | 15 min | Plate | Average width 5mm | Plate | Average width 5mm |
| Test Example | 6 | Baked in oven | 220°C | 15 min | Plate | Average width 5mm | Plate | Average width 6mm |
| Comparative Example | 7 | Baked in oven | 220°C | 15 min | Plate | Average width 5mm | Plate | Average width 5mm |
| Test Example | 8 | Baked in oven | 220°C | 15 min | Plate | Average width 7mm | Plate | Average width 7mm |
| Test Example | 9 | Baked in oven | 220°C | 15 min | Plate | Average width 7mm | Plate | Average width 8mm |
| Test Example | 10 | Baked in oven | 220°C | 15 min | Plate | Average width 7mm | Plate | Average width 8mm |

(continued)

| Table 5 | | Fermentation/Molding/Heating/Cooling | | | | | | |
|---|---|---|---|---|---|---|---|---|
| | | heating treatment | | | Post-heating shape | | Post-cooling shape | |
| | | Treatment | Temp. | Time | Shape | Dimension | Shape | Dimension |
| | | | °C | min | | | | |
| Test Example | 11 | Baked in oven | 180°C | 25 min | Plate | Average width 7mm | Plate | Average width 8mm |
| Test Example | 12 | Baked in oven | 180°C | 25 min | Plate | Average width 7mm | Plate | Average width 8mm |
| Test Example | 13 | Baked in oven | 180°C | 25 min | Plate | Average width 7mm | Plate | Average width 7mm |
| Test Example | 14 | Baked in oven | 180°C | 25 min | Plate | Average width 7mm | Plate | Average width 5mm |
| Comparative Example | 15 | Baked in oven | 180°C | 25 min | Plate | Average width 7mm | Plate | Average width 3mm |
| Test Example | 16 | Baked in oven | 180°C | 25 min | Plate | Average width 8mm | Plate | Average width 7mm |
| Test Example | 17 | Baked in oven | 220°C | 15 min | Plate | Average width 8mm | Plate | Average width 8mm |
| Test Example | 18 | Baked in oven | 220°C | 15 min | Plate | Average width 8mm | Plate | Average width 8mm |
| Test Example | 19 | Baked in oven | 220°C | 15 min | Plate | Average width 8mm | Plate | Average width 8mm |
| Test Example | 20 | Baked in oven | 220°C | 15 min | Plate | Average width 8mm | Plate | Average width 8mm |

[Table 5-4]

| Table 5 | | Fermentation/Molding/Heating/Cooling | | | | | | |
|---|---|---|---|---|---|---|---|---|
| | | heating treatment | | | Post-heating shape | | Post-cooling shape | |
| | | Treatment | Temp. | Time | Shape | Dimension | Shape | Dimension |
| | | | °C | min | | | | |
| Test Example | 21 | Baked in oven | 240°C | 30 min | Cuboid | Height 30cm | Cuboid | Height 30cm |
| Test Example | 22 | Baked in oven | 240°C | 30 min | Cuboid | Height 28cm | Cuboid | Height 28cm |
| Test Example | 23 | Baked in oven | 240°C | 30 min | Cuboid | Height 20cm | Cuboid | Height 20cm |
| Test Example | 24 | Baked in oven | 240°C | 30 min | Cuboid | Height 17cm | Cuboid | Height 17cm |
| Comparative Example | 25 | Baked in oven | 240°C | 30 min | Cuboid | Height 15cm | Cuboid | Height 15cm |
| Comparative Example | 26 | Baked in oven | 240°C | 30 min | Cuboid | Height 30cm | Cuboid | Height 10cm |
| Test Example | 27 | Baked in oven | 240°C | 30 min | Cuboid | Height 30cm | Cuboid | Height 20cm |
| Test Example | 28 | Baked in oven | 240°C | 30 min | Cuboid | Height 30cm | Cuboid | Height 24cm |

(continued)

| Table 5 | | Fermentation/Molding/Heating/Cooling | | | | | | |
|---|---|---|---|---|---|---|---|---|
| | | heating treatment | | | Post-heating shape | | Post-cooling shape | |
| | | Treatment | Temp. | Time | Shape | Dimension | Shape | Dimension |
| | | | °C | min | | | | |
| Test Example | 29 | Baked in oven | 240°C | 30 min | Cuboid | Height 30cm | Cuboid | Height 29cm |
| Test Example | 30 | Sandwiched between steel plates and heated | 120°C | 10 min | Belgian waffle | Average width 2.5cm | Belgian waffle | Average width 2.5cm |
| Test Example | 31 | Sandwiched between steel plates and heated | 120°C | 10 min | Belgian waffle | Average width 2.5cm | Belgian waffle | Average width 2.4cm |
| Test Example | 32 | Sandwiched between steel plates and heated | 120°C | 10 min | Belgian waffle | Average width 2.5cm | **Belgian** waffle | Average width 2.1cm |
| Test Example | 33 | Sandwiched between steel plates and heated | 120°C | 5 min | Belgian waffle | Average width 2.5cm | Belgian waffle | Average width 2.5cm |
| Test Example | 34 | Sandwiched between steel plates and heated | 120°C | 5 min | Belgian waffle | Average width 2.5cm | Belgian waffle | Average width 2.5cm |
| Test Example | 35 | Sandwiched between steel plates and heated | 120°C | 5 min | Belgian waffle | Average width 2.5cm | Belgian waffle | Average width 2.5cm |
| Test Example | 36 | Sandwiched between steel plates and heated | 120°C | 5 min | Belgian waffle | Average width 2.5cm | Belgian waffle | Average width 2.5cm |
| Test Example | 37 | Sandwiched between steel plates and heated | 120°C | 5 min | Belgian waffle | Average width 2.1cm | Belgian waffle | Average width 2.0cm |
| Test Example | 38 | Sandwiched between steel plates and heated | 120°C | 5 min | Belgian waffle | Average width 2.3cm | Belgian waffle | Average width 2.2cm |

The swollen compositions of the Test Examples and Comparative Examples obtained by the above procedure were subjected to measurement of various parameters using the methods described in the [DESCRIPTION OF EMBODIMENTS] section above. The results of the swollen compositions of the Test Examples and Comparative Examples are shown in Tables 6 and 7 below. For all of the compositions with a "Unique swollen-food texture" score of three or more, the total porosity increased by 1% or more before and after the heat treatment at step (ii), and both the total porosity and the total percentage of closed pores measured for frozen section C were above 1%.

[Table 6-1]

| Table 6 | | Swollen composition | | | | | | | |
|---|---|---|---|---|---|---|---|---|---|
| | | Starch-related parameters | | | | | | | |
| | | Starch content (dry mass basis) | Degree of gelatinization of starch | AUC1 | | AUC2 | | [AUC2]/ [AUC1] | |
| | | | | Value after heating | Increase during heating | Value after heating | Decrease during heating | Value after heating | Decrease during heating |
| | | mass % | mass % | % | % | % | % | | % |
| Test Example | 1 | 30.0% | 80.0% | 95.0% | 46.2% | 5.0% | 85.7% | 0.05 | 90% |
| Test Example | 2 | 30.0% | 81.0% | 88.0% | 44.3% | 12.0% | 69.2% | 0.14 | 79% |
| Test Example | 3 | 30.0% | 81.0% | 79.0% | 31.7% | 21.0% | 47.5% | 0.27 | 60% |
| Test Example | 4 | 30.0% | 90.0% | 71.0% | 20.3% | 29.0% | 29.3% | 0.41 | 41% |
| Comparative Example | 5 | 30.0% | 97.0% | 59.0% | 1.7% | 41.0% | 2.4% | 0.69 | 4% |
| Test Example | 6 | 30.0% | 97.0% | 67.0% | 11.7% | 33.0% | 17.5% | 0.49 | 26% |
| Comparative Example | 7 | 30.0% | 100.0% | 50.0% | 78.6% | 50.0% | 30.6% | 1.00 | 61% |
| Test **Example** | 8 | 62.0% | 80.0% | 85.0% | 30.8% | 15.0% | 57.1% | 0.18 | 67% |
| Test Example | 9 | 40.0% | 80.0% | 99.9% | 53.8% | 0.1% | 100.0% | 0.00 | 100% |
| Test Example | 10 | 15.0% | 80.0% | 99.9% | 53.8% | 0.1% | 100.0% | 0.00 | 100% |
| Test Example | 11 | 55.0% | 80.0% | 95.0% | 46.2% | 5.0% | 85.7% | 0.05 | 90% |
| Test Example | 12 | 55.0% | 80.0% | 95.0% | 46.2% | 5.0% | 85.7% | 0.05 | 90% |
| Test Example | 13 | 55.0% | 80.0% | 95.0% | 46.2% | 5.0% | 85.7% | 0.05 | 90% |
| Test Example | 14 | 55.0% | 80.0% | 95.0% | 46.2% | 5.0% | 85.7% | 0.05 | 90% |
| Comparative Example | 15 | 55.0% | 80.0% | 95.0% | 46.2% | 5.0% | 85.7% | 0.05 | 90% |
| Test Example | 16 | 55.0% | 80.0% | 95.0% | 46.2% | 5.0% | 85.7% | 0.05 | 90% |
| Test Example | 17 | 55.0% | 80.0% | 93.0% | 60.3% | 7.0% | 83.3% | 0.08 | 90% |
| Test Example | 18 | 49.0% | 80.0% | 94.0% | 56.7% | 6.0% | 85.0% | 0.06 | 90% |
| Test Example | 19 | 43.0% | 80.0% | 94.0% | 49.2% | 6.0% | 83.8% | 0.06 | 89% |

[Table 6-2]

| Table 6 | | Swollen **composition** | | | | | | | |
|---|---|---|---|---|---|---|---|---|---|
| | | Starch-related parameters | | | | | | | |
| | | Starch content (dry mass basis) | Degree of gelatinization of starch | AUC1 | | AUC2 | | [AUC2]/ [AUC1] | |
| | | | | Value after heating | Increase during heating | Value after heating | Decrease during heating | Value after heating | Decrease during heating |
| | | mass % | mass % | % | % | % | % | | % |
| Test Example | 20 | 35.0% | 80.0% | 95.0% | 46.2% | 5.0% | 85.7% | 0.05 | 90% |
| Test Example | 21 | 30.0% | 80.0% | 81.0% | 35.0% | 19.0% | 52.5% | 0.23 | 65% |
| Test Example | 22 | 30.0% | 81.0% | 76.0% | 26.7% | 24.0% | 40.0% | 0.32 | 53% |

(continued)

| Table 6 | | Swollen **composition** | | | | | | | |
|---|---|---|---|---|---|---|---|---|---|
| | | Starch-related parameters | | | | | | | |
| | | Starch content (dry mass basis) | Degree of gelatinization of starch | AUC1 | | AUC2 | | [AUC2]/ [AUC1] | |
| | | | | Value after heating | Increase during heating | Value after heating | Decrease during heating | Value after heating | Decrease during heating |
| | | mass % | mass % | % | % | % | % | | % |
| Test Example | 23 | 30.0% | 81.0% | 71.0% | 18.3% | 29.0% | 27.5% | 0.41 | 39% |
| Test Example | 24 | 30.0% | 90.0% | 64.0% | 6.7% | 36.0% | 10.0% | 0.56 | 16% |
| Comparative Example | 25 | 30.0% | 97.0% | 58.0% | 0.0% | 42.0% | 0.0% | 0.72 | 0% |
| Comparative Example | 26 | 30.0% | 80.0% | 81.0% | 35.0% | 19.0% | 52.5% | 0.23 | 65% |
| Test Example | 27 | 30.0% | 80.0% | 81.0% | 35.0% | 19.0% | 52.5% | 0.23 | 65% |
| Test Example | 28 | 30.0% | 80.0% | 81.0% | 35.0% | 19.0% | 52.5% | 0.23 | 65% |
| Test Example | 29 | 30.0% | 80.0% | 81.0% | 35.0% | 19.0% | 52.5% | 0.23 | 65% |
| Test Example | 30 | 40.0% | 95.0% | 60.2% | 9.5% | 40.0% | 11.1% | 0.66 | 19% |
| Test Example | 31 | 40.0% | 80.0% | 81.0% | 47.3% | 19.0% | 57.8% | 0.23 | 71% |
| Test Example | 32 | 40.0% | 85.0% | 69.0% | 25.5% | 31.0% | 31.1% | 0.45 | 45% |
| Test Example | 33 | 44.0% | 73.0% | 76.0% | 55.1% | 24.0% | 52.9% | 0.32 | 70% |
| Test Example | 34 | 48.0% | 66.0% | 70.0% | 66.7% | 30.0% | 48.3% | 0.43 | 69% |
| Test Example | 35 | 52.0% | 61.0% | 65.0% | 132.1% | 35.0% | 51.4% | 0.54 | 79% |
| Test Example | 36 | 56.0% | 56.0% | 61.0% | 205.0% | 39.0% | 51.3% | 0.64 | 84% |
| Test Example | 37 | 59.5% | 52.0% | 60.1% | 200.5% | 39.9% | 50.1% | 0.66 | 83% |
| Test Example | 38 | 56.8% | 56.0% | 61.0% | 205.0% | 38.0% | 51.3% | 0.64 | 84% |

[Table 6-3]

| Table 6 | | Swollen composition | | | | | Protein |
|---|---|---|---|---|---|---|---|
| | | Starch-related parameters | | | | | Protein content (dry mass basis) |
| | | AUC3 | AUC4 | Mass average Mw (log) | Low Mw fraction iodine stainability (ABS 660nm) | | |
| | | | | | Value after heating | Increase during heating | |
| | | % | % | | | | mass % |
| Test Example | 1 | 83.3% | 40.9% | 5.7 | 0.87 | 0.45 | 20.0% |
| Test Example | 2 | 92.3% | 31.2% | 6.0 | 0.99 | 0.44 | 20.0% |
| Test Example | 3 | 95.5% | 21.5% | 6.3 | 1.02 | 0.26 | 20.0% |
| Test Example | 4 | 96.7% | 19.5% | 6.7 | 1.08 | 0.07 | 20.0% |
| Comparative Example | 5 | 97.6% | 6.7% | 7.6 | 1.21 | 0.01 | 20.0% |
| Test Example | 6 | 97.1% | 13.0% | 7.2 | 1.25 | 0.05 | 20.0% |
| Comparative Example | 7 | 98.0% | 5.0% | 8.1 | 2.25 | 0.27 | 20.0% |
| Test Example | 8 | 93.8% | 29.8% | 5.9 | 0.87 | 0.45 | 10.0% |

(continued)

| Table 6 | | Swollen composition | | | | | Protein |
|---|---|---|---|---|---|---|---|
| | | Starch-related parameters | | | | | Protein |
| | | AUC3 | AUC4 | Mass average Mw (log) | Low Mw fraction iodine stainability (ABS 660nm) | | Protein content (dry mass basis) |
| | | | | | Value after heating | Increase during heating | |
| | | % | % | | | | mass % |
| Test Example | 9 | 100.0% | 42.5% | 5.5 | 0.87 | 0.45 | 20.0% |
| Test Example | 10 | 100.0% | 44.7% | 5.5 | 0.87 | 0.45 | 10.0% |
| Test Example | 11 | 83.3% | 36.8% | 5.7 | 0.80 | 0.38 | 20.0% |
| Test Example | 12 | 83.3% | 39.9% | 5.7 | 0.80 | 0.37 | 20.0% |
| Test Example | 13 | 83.3% | 36.3% | 5.7 | 0.87 | 0.45 | 20.0% |
| Test Example | 14 | 83.3% | 35.4% | 5.7 | 0.87 | 0.45 | 20.0% |
| Comparative Example | 15 | 83.3% | 28.9% | 5.7 | 0.95 | 0.53 | 20.0% |
| Test Example | 16 | 83.3% | 34.0% | 5.7 | 0.89 | 0.47 | 20.0% |
| Test Example | 17 | 25.9% | 12.4% | 5.7 | 2.98 | 0.63 | 8.4% |
| Test Example | 18 | 37.5% | 19.4% | 5.7 | 2.35 | 0.60 | 14.4% |
| Test Example | 19 | 54.5% | 22.5% | 5.7 | 1.97 | 0.59 | 20.1% |

[Table 6-4]

| Table 6 | | Swollen composition | | | | | Protein |
|---|---|---|---|---|---|---|---|
| | | Starch-related parameters | | | | | Protein |
| | | AUC3 | AUC4 | Mass average Mw (log) | Low Mw fraction iodine stainability (ABS 660nm) | | Protein content (dry mass basis) |
| | | | | | Value after heating | Increase during heating | |
| | | % | % | | | | mass % |
| Test Example | 20 | 71.4% | 29.0% | 5.7 | 1.39 | 0.50 | 26.1 % |
| Test Example | 21 | 95.0% | 20.5% | 5.7 | 1.02 | 0.88 | 15.0% |
| Test Example | 22 | 92.3% | 19.4% | 6.0 | 1.08 | 0.59 | 15.0% |
| Test Example | 23 | 93.5% | 18.5% | 6.3 | 1.11 | 0.38 | 15.0% |
| *Test* Example | *24* | 92.3% | *14.0%* | 6.7 | 1.23 | 0.13 | *15.0%* |
| Comparative Example | 25 | 91.3% | 9.8% | 7.6 | 1.83 | 0.02 | 15.0% |
| Comparative Example | 26 | 95.0% | 28.5% | 5.7 | 1.02 | 0.89 | 15.0% |
| Test Example | 27 | 95.0% | 29.1% | 5.7 | *1.02* | 0.89 | *15.0%* |
| Test Example | 28 | 95.0% | 30.2% | 5.7 | 1.02 | 0.89 | 15.0% |
| Test Example | 29 | 95.0% | 31.5% | 5.7 | 1.02 | 0.89 | 15.0% |
| Test Example | 30 | 100.0% | 8.0% | 5.7 | 0.75 | 0.21 | 14.4% |
| Test Example | 31 | 100.0% | 12.5% | 5.7 | 1.11 | 0.22 | 14.4% |
| Test Example | 32 | 100.0% | 31.5% | 5.7 | 0.82 | 0.06 | 14.4% |
| Test Example | 33 | 100.0% | 22.0% | 5.6 | 1.10 | 0.21 | 13.0% |
| Test Example | 34 | 100.0% | 32.0% | 55 | 1.00 | 0.08 | 11 6% |

(continued)

| Table 6 | | Swollen composition | | | | | Protein |
|---|---|---|---|---|---|---|---|
| | | Starch-related parameters | | | | | Protein content (dry mass basis) |
| | | AUC3 | AUC4 | Mass average Mw (log) | Low Mw fraction iodine stainability (ABS 660nm) | | |
| | | | | | Value after heating | Increase during heating | |
| | | % | % | | | | mass % |
| Test Example | 35 | 100.0% | 41.0% | 5.3 | 1.02 | 0.07 | 10.2% |
| Test Example | 36 | 100.0% | 50.0% | 5.1 | 1.05 | 0.04 | 8.8% |
| Test Example | 37 | 100.0% | 49.0% | 5.1 | 1.03 | 0.03 | 9.4% |
| Test Example | 38 | 100.0% | 50.0% | 5.1 | 1.05 | 0.04 | 8.8% |

[Table 6-5]

| Table 6 | | Swollen composition | | | | | Total oil **and** fat content |
|---|---|---|---|---|---|---|---|
| | | Soluble/insoluble dietary fiber | | | Dry mass basis moisture content | | |
| | | Dietary fiber content (dry mass basis) | Particle diameter d50 after starch & protein digestion (and disturbance) | Average longest diameter of CFW-stained sites | Value after heating | Decrease during heating | |
| | | mass % | μm | μm | mass % | mass % | mass % |
| Test Example | 1 | 16.0% | 70.0 | 56.0 | 15.0 | 85% | 30.0% |
| Test Example | 2 | 16.0% | 71.0 | 61.0 | 15.0 | 85% | 30.0% |
| Test Example | 3 | 16.0% | 73.0 | 63.5 | 15.0 | 85% | 30.0% |
| Test Example | 4 | 16.0% | 75.0 | 81.0 | 15.0 | 85% | 30.0% |
| Comparative Example | 5 | 16.0% | 76.0 | 105.5 | 15.0 | 85% | 30.0% |
| Test Example | 6 | 16.0% | 70.0 | 94.3 | 15.0 | 85% | 30.0% |
| Comparative Example | 7 | 16.0% | 85.0 | 125.1 | 15.0 | 85% | 30.0% |
| Test Example | 8 | 16.0% | 70.0 | 68.5 | 8.0 | 84% | 10.0% |
| Test Example | 9 | 26.0% | 70.0 | 52.8 | 8.0 | 96% | 10.0% |
| Test Example | 10 | 5.0% | 70.0 | 81.0 | 8.0 | 87% | 60.0% |
| Test Example | 11 | 10.0% | 6.0 | 3.2 | 15.0 | 90% | 10.0% |
| Test Example | 12 | 10.0% | 10.0 | 2.5 | 15.0 | 90% | 10.0% |
| Test Example | 13 | 10.0% | 145.0 | 223.2 | 15.0 | 90% | 10.0% |
| Test Example | 14 | 10.0% | 402.0 | 399.4 | 15.0 | 90% | 10.0% |
| Comparative Example | 15 | 10.0% | 525.0 | 489.9 | 15.0 | 90% | 10.0% |
| Test Example | 16 | 10.0% | 256.0 | 326.5 | 15.0 | 90% | 10.0% |
| Test Example | 17 | 26.0% | 15.0 | 30.1 | 15.0 | 85% | 10.0% |
| Test Example | 18 | 26.0% | 16.0 | 24.5 | 15.0 | 85% | 10.0% |

(continued)

| Table 6 | | Swollen composition | | | | | |
|---|---|---|---|---|---|---|---|
| | | Soluble/insoluble dietary fiber | | | Dry mass basis moisture content | | Total oil and fat content |
| | | Dietary fiber content (dry mass basis) | Particle diameter d50 after starch & protein digestion (and disturbance) | Average longest diameter of CFW -stained sites | Value after heating | Decrease during heating | |
| | | mass % | μm | μm | mass % | mass % | mass % |
| Test Example | 19 | 26.0% | 23.0 | 32.3 | 15.0 | 85% | 10.0% |

[Table 6-6]

| Table 6 | | Swollen composition | | | | | |
|---|---|---|---|---|---|---|---|
| | | Soluble/insoluble dietary fiber | | | Dry mass basis moisture content | | Total oil and fat content |
| | | Dietary fiber content (dry mass basis) | Particle diameter d50 after starch & protein digestion (and disturbance) | Average longest diameter of CFW -stained sites | Value after heating | Decrease during heating | |
| | | mass % | μm | μm | mass % | mass % | mass % |
| Test Example | 20 | 26.0% | 25.0 | 45.5 | 15.0 | 85% | 10.0% |
| Test Example | 21 | 30.0% | 15.0 | 21.1 | 25.0 | 64% | 20.0% |
| Test Example | 22 | 30.0% | 18.0 | 12.3 | 25.0 | 64% | 20.0% |
| Test Example | 23 | 30.0% | 20.0 | 28.8 | 25.0 | 64% | 20.0% |
| Test Example | 24 | 30.0% | 22.0 | 32.7 | 25.0 | 64% | 20.0% |
| Comparative Example | 25 | 30.0% | 28.0 | 47.1 | 25.0 | 64% | 20.0% |
| Comparative Example | 26 | 31.0% | 485.0 | 480.5 | 25.0 | 64% | 20.0% |
| Test Example | 27 | 31.0% | 245.0 | 368.3 | 25.0 | 64% | 20.0% |
| Test Example | 28 | 31.0% | 188.0 | 228.6 | 25.0 | 64% | 20.0% |
| Test Example | 29 | 31.0% | 131.0 | 158.5 | 25.0 | 64% | 20.0% |
| Test Example | 30 | 25.8% | 38.0 | 54.0 | 85.0 | 15% | 25.4% |
| Test Example | 31 | 25.8% | 41.0 | 53.0 | 85.0 | 15% | 25.4% |
| Test Example | 32 | 25.8% | 58.0 | 59.0 | 85.0 | 15% | 25.4% |
| Test Example | 33 | 22.6% | 52.0 | 62.0 | 128.0 | 9% | 24.2% |
| Test Example | 34 | 19.4% | 69.0 | 83.0 | 128.0 | 9% | 23.0% |
| Test Example | 35 | 16.2% | 82.0 | 89.0 | 128.0 | 9% | 21.8% |
| Test Example | 36 | 13.0% | 101.0 | 98.0 | 128.0 | 9% | 20.6% |
| Test Example | 37 | 8.5% | 112.0 | 110.0 | 128.0 | 9% | 21.0% |
| Test Example | 38 | 12.2% | 101.0 | 98.0 | 128.0 | 9% | 20.6% |

[Table 7-1]

| Table 7 | | Feature (c1) | | Feature (c2) | | |
|---|---|---|---|---|---|---|
| | | $AV_{66.88278}$ x $AV_{80.79346}$ | Increase ratio before and after baking (%) | Average luminance [66.88278] | Standard deviation (SD) 66.88278 | Increase ratio of SD before and after baking (%) |
| Test Example | 1 | 690 | 116.5 | 40.1 | 22.5 | 83.0 |
| Test Example | 4 | 272 | 83.1 | 34.9 | 18.6 | 11.5 |
| Comparative Example | 5 | 118 | 24.0 | 19.4 | 15.7 | 1.2 |
| Test Example | 21 | 1905 | 657.0 | 50.8 | 48.8 | 339.4 |
| Test Example | 23 | 1666 | 354.0 | 44.9 | 34.3 | 154.3 |
| Comparative Example | 25 | 105 | 15.5 | 13.1 | 17.8 | 3.0 |

[Table 7-2]

| Table 7 | | Feature (c3) | | | Sensory evaluation |
|---|---|---|---|---|---|
| | | Average luminance [80.79346] | Standard deviation (SD) 80.79346 | Increase ratio of SD before and after baking (%) | Hardness at eating |
| Test Example | 1 | 17.2 | 19.3 | 356.2 | Softened |
| Test Example | 4 | 7.8 | 9.9 | 87.0 | Slightly softened |
| Comparative Example | 5 | 6.1 | 4.1 | 4.0 | Too hard texture |
| Test Example | 21 | 37.5 | 36.4 | 786.1 | Softened |
| Test Example | 23 | 37.1 | 29.4 | 510.3 | Softened |
| Comparative Example | 25 | 8.0 | 3.7 | 4.5 | A little too hard texture |

[Sensory evaluation of swollen compositions]

The swollen compositions of the Test Examples and Comparative Examples were subjected to sensory evaluation by the following procedure. The sensory inspectors were selected from those who achieved excellent performance in the identification training described in A to C below, had experience in product development, had a lot of knowledge about food qualities such as taste and texture, and were capable of performing absolute evaluation for each sensory evaluation item.

A) Taste discrimination test: a total of seven samples were prepared, including five aqueous solutions prepared for five tastes (sweetness: taste of sugar; sourness: taste of tartaric acid; umami: taste of monosodium glutamate; saltiness; taste of sodium chloride; and bitterness: taste of caffeine), each with a concentration close to the threshold value of each component, and two sample solutions with distilled water, and the trainees were instructed to accurately identify the sample of each taste.

B) Concentration difference discrimination test: a series of five solutions with slightly different concentrations was prepared for each of salt and acetic acid, and the trainees were instructed to accurately distinguish the solutions of different concentrations for each component.

C) Three-point identification test to accurately identify from three soy sauce samples, two from Manufacturer A and one from Manufacturer B, the soy sauce sample from Manufacturer B.

In each of the evaluation items, an objective sensory examination was carried out by 10 inspectors, after standard samples were evaluated in advance by all the inspectors, and each score of the evaluation criteria was standardized. Specifically, ten trained sensory inspectors observed each composition during the production process and ingested each swollen composition, and evaluated it in terms of "swellability," "unique swollen-food texture," and "overall evaluation," on the criteria explained below. The arithmetic mean of the 10 sensory inspectors' scores was calculated and rounded off to one decimal place to give the final score.

## EP 4 176 723 B1

*Evaluation criteria for "swellability":

The swollen state of each composition after the heat treatment was evaluated on the following one-to-five scale.

5: Very favorable, with its swollen state completely maintained.
4: Favorable, with its swollen state almost completely maintained.
3: Rather favorable, with its swollen state slightly wilted.
2: Rather unfavorable, with its swollen state somewhat wilted.
1: Unfavorable, with its swollen state significantly wilted.

*Evaluation criteria for "unique swollen-food texture":

The unique swollen-food texture of each composition was evaluated on the following one-to-five scale.

5: Very favorable, with a unique swollen-food texture strongly felt.
4: Favorable, with a unique swollen-food texture felt.
3: Rather favorable, with a unique swollen-food texture slightly felt.
2: Rather unfavorable, with little unique swollen-food texture felt.
1: Unfavorable, with no unique swollen-food texture felt.

*Evaluation criteria for "overall evaluation":

The physical properties and eating quality of each composition was evaluated on the following one-to-five scale. Those with a rough texture when eaten are noted in the "smoothness" section.

5: Very favorable, with a very good balance between swellability during heating and retention of its swollen state after heating.
4: Favorable, with a good balance swellability during heating and retention of its swollen state after heating.
3: Rather favorable, with an acceptable balance swellability during heating and retention of its swollen state after heating.
2: Rather unfavorable, with a slightly bad balance between swellability during heating and retention of its swollen state after heating.
1: Unfavorable, with a bad balance between swellability during heating and retention of its swollen state after heating.

The results of the sensory evaluation of the swollen compositions of the Test Examples and Comparative Examples are shown in Table 8 below.

[Table 8-1]

| Table 8 | | Sensory evaluation | | |
|---|---|---|---|---|
| | | Swellability | Unique swollen-food texture | Overall evaluation |
| Test Example | 1 | 5 | 5 | 5 |
| Test Example | 2 | 5 | 5 | 5 |
| Test Example | 3 | 5 | 5 | 5 |
| Test Example | 4 | 5 | 5 | 4 |
| Comparative Example | 5 | 2 | 3 | 2 |
| Test Example | 6 | 4 | 4 | 4 |
| Comparative Example | 7 | 1 | 1 | 1 |
| Test Example | 8 | 4 | 5 | 4 |
| Test Example | 9 | 5 | 4 | 4 |
| Test Example | 10 | 5 | 4 | 4 |
| Test Example | 11 | 5 | 5 | 5 |
| Test Example | 12 | 5 | 5 | 5 |

(continued)

| Table 8 | | Sensory evaluation | | |
| --- | --- | --- | --- | --- |
| | | Swellability | Unique swollen-food texture | Overall evaluation |
| Test Example | 13 | 5 | 5 | 5 |
| Test Example | 14 | 4 | 5 | 4 |
| Comparative Example | 15 | 2 | 5 | 2 |
| Test Example | 16 | 5 | 5 | 4 |
| Test Example | 17 | 5 | 3 | 3 |
| Test Example | 18 | 5 | 4 | 4 |
| Test Example | 19 | 5 | 5 | 5 |

[Table 8-2]

| Table 8 | | Sensory evaluation | | |
| --- | --- | --- | --- | --- |
| | | Swellability | Unique swollen-food texture | Overall evaluation |
| Test Example | 20 | 5 | 5 | 5 |
| Test Example | 21 | 5 | 5 | 5 |
| Test Example | 22 | 5 | 5 | 5 |
| Test Example | 23 | 5 | 5 | 5 |
| Test Example | 24 | 5 | 5 | 4 |
| Comparative Example | 25 | 2 | 3 | 2 |
| Comparative Example | 26 | 1 | 1 | 1 |
| Test Example | 27 | 4 | 5 | 5 |
| Test Example | 28 | 5 | 5 | 5 |
| Test Example | 29 | 5 | 5 | 5 |
| Test Example | 30 | 4 | 4 | 4 |
| Test Example | 31 | 5 | 5 | 5 |
| Test Example | 32 | 5 | 5 | 5 |
| Test Example | 33 | 5 | 5 | 5 |
| Test Example | 34 | 5 | 5 | 5 |
| Test Example | 35 | 5 | 5 | 5 |
| Test Example | 36 | 5 | 5 | 5 |
| Test Example | 37 | 4 | 4 | 4 |
| Test Example | 38 | 5 | 4 | 5 |

[Evaluation of additional indexes of dough compositions and swollen compositions]

The dough compositions and the swollen compositions of the Test Examples and Comparative Examples were subjected to measurement in accordance with the following procedures. 6% suspension of a crushed product of the composition was observed to determine the number of starch grain structures. In addition, 14 mass % aqueous slurry of a crushed product of the composition is measured using rapid visco-analyzer with elevating the temperature from 50 °C to 140 °C at a rate of 12.5°C/min to determine the peak temperature of gelatinization, and the difference in the peak temperature of gelatinization between the dough composition and the swollen composition was calculated for each Example. The results are shown in Table 9 below.

The swollen compositions of the Test Examples and Comparative Examples were subjected to measurement for the weighted average perimeter $\alpha$ and the weighted average area $\beta$ of the pores inside the composition, and their ratio $\alpha/\beta$

was calculated. The results are shown in Table 9 below.

The swollen compositions of the Test Examples and Comparative Examples were subjected to sensory evaluation by sensory inspectors selected according to the criteria explained above, to evaluate the smoothness of the compositions when eaten. The results are shown in Table 9 below.

[Table 9-1]

| Table 9 | | Dough composition | | Swollen composition | | | | | Sensory evaluation |
|---|---|---|---|---|---|---|---|---|---|
| | | Starch grains | RVA peak temp. of gelatinization | Starch grains | Decrease in starch grains | RVA peak temp. of gelatinization | Decrease in RVA peak temp. of gelatinization | Ratio of weighted average perimeter to weighted average area of pores | Smoothness |
| | | /mm2 | °C | /mm$^2$ | /mm$^2$ | °C | % | % | |
| Test Example | 1 | >300 | 125 | 0 | - | 88 | 30% | 0.2% | |
| Test Example | 2 | >300 | 116 | 0 | - | 80 | 31% | 0.3% | |
| Test Example | 3 | 198 | 105 | 0 | 198 | 75 | 29% | 0.3% | |
| Test Example | 4 | 48 | 89 | 0 | 48 | 70 | 21% | 0.7% | |
| Comparative Example | 5 | 0 | 85 | 0 | 0 | 68 | 20% | 1.8% | Slightly rough texture |
| Test Example | 6 | 0 | 85 | 0 | 0 | 70 | 18% | 10% | |
| Comparative Example | 7 | 0 | 50 | 0 | 0 | 50 | 0% | 2.0% | Rough texture |
| Test Example | 8 | >300 | 125 | >300 | - | 88 | 30% | 1.0% | |
| Test Example | 9 | >300 | 125 | 0 | - | 55 | 56% | 0.05% | |
| Test Example | 10 | >300 | 108 | 220 | - | 85 | 21% | 0.3% | |
| Test **Example** | 11 | >300 | 103 | 0 | - | 55 | 47% | 0.2% | |
| Test Example | 12 | >300 | 105 | 0 | - | 56 | 47% | 0.3% | |
| Test Example | 13 | >300 | 119 | 0 | - | 61 | 49% | 0.5% | |
| Test Example | 14 | >300 | 121 | 0 | - | 72 | 40% | 1.1% | |
| Comparative Example | 15 | >300 | 135 | 0 | - | 80 | 41% | 1.8% | Slightly rough texture |
| Test Example | 16 | >300 | 130 | 0 | - | 61 | 53% | 1.3% | |
| Test Example | 17 | >300 | 78 | 0 | - | 50 | 36% | 1.8% | Slightly rough texture |
| Test Example | 18 | >300 | 92 | 0 | - | 53 | 42% | 1.2% | |
| Test Example | 19 | >300 | 96 | 0 | - | 55 | 43% | 1.1% | |

[Table 9-2]

| Table 9 | | Dough composition | | Swollen composition | | | | | Sensory evaluation |
|---|---|---|---|---|---|---|---|---|---|
| | | Starch grains | RVA peak temp. of gelatinization | Starch grains | Decrease in starch grains | RVA peak temp. of gelatinization | Decrease in RVA peak temp. of gelatinization | Ratio of weighted average perimeter to weighted average area of pores | Smoothness |
| | | /mm² | °C | /mm² | /mm² | °C | % | % | |
| Test Example | 20 | >300 | 98 | 0 | - | 58 | 41% | 0.9% | |
| Test Example | 21 | >300 | 108 | 10 | - | 61 | 44% | 0.3% | |
| Test Example | 22 | >300 | 116 | 30 | - | 80 | 31% | 0.4% | |
| Test Example | 23 | 198 | 105 | 20 | 178 | 75 | 29% | 0.4% | |
| Test Example | 24 | 48 | 89 | 5 | 43 | 70 | 21% | 0.8% | |
| Comparative Example | 25 | 0 | 85 | 0 | 0 | 68 | 20% | 1.8% | Slightly rough texture |
| Comparative Example | 26 | >300 | 135 | 0 | - | 80 | 41% | 2.1% | Rough texture |
| Test Example | 27 | >300 | 125 | 0 | - | 74 | 41% | 1.0% | |
| Test Example | 28 | >300 | 116 | 0 | - | 66 | 43% | 0.3% | |
| Test Example | 29 | >300 | 114 | 0 | - | 60 | 47% | 0.1% | |
| Test Example | 30 | 151 | 112 | 0 | 151 | 61 | 46% | 1.1% | |
| Test Example | 31 | >300 | 129 | 0 | - | 69 | 47% | 0.3% | |
| Test Example | 32 | >300 | 127 | 0 | - | 80 | 37% | 0.2% | |
| Test Example | 33 | >300 | 118 | 0 | - | 74 | 37% | 0.3% | |
| Test Example | 34 | >300 | 112 | 0 | - | 81 | 28% | 0.4% | |
| Test Example | 35 | >300 | 108 | 0 | - | 85 | 21% | 0.3% | |
| Test Example | 36 | >300 | 105 | 0 | - | 93 | 11% | 0.2% | |
| Test Example | 37 | >300 | 103 | 0 | - | 90 | 13% | 0.8% | |
| Test Example | 38 | >300 | 105 | 0 | - | 90 | 14% | 0.2% | |

**INDUSTRIAL APPLICABILITY**

The present invention provides a starch-based swollen composition that maintains its swollen state even after heat treatment and has a unique swollen-food texture, and is of great use value in the field of food products.

**Claims**

1.  A swollen composition comprising pulse and/or cereal except for rice, wheat and barley and satisfying the requirements (1) to (6) and (A) below.

    (1) The composition has a starch content of 15 mass % or more in terms of dry mass basis.
    (2) The composition has a dry mass basis moisture content of less than 150 mass %, wherein the dry mass basis moisture content is measured by the method described in the description.
    (3) The degree of gelatinization of starch in the composition is 50 mass % or more.
    (4) The composition has a dietary fiber content of 3.0 mass % or more in terms of dry mass basis.
    (5) When the composition is subjected to [Procedure a] below and the resulting product is subjected to measurement under [Condition A] below to obtain a molecular weight distribution curve in an interval with molecular weight logarithms of 3.5 or more but less than 8.0 (hereinafter referred to as "$MWDC_{3.5-8.0}$"), the ratio of the area under the curve in an interval with molecular weight logarithms of 3.5 or more but less than 6.5 to the area under the entire curve (hereinafter referred to as "AUC1") is more than 60%,

        [Procedure a] The composition is crushed, and an ethanol-insoluble and dimethyl sulfoxide-soluble component is obtained.
        [Condition A] The treated product from the [Procedure a] above is dissolved into 1M aqueous solution of sodium hydroxide at a concentration of 0.30 mass % and allowed to stand at 37 °C for 30 minutes, then combined with an equal volume of water and an equal volume of eluent and subjected to filtration with a 5-$\mu$m filter, and 5mL of the filtrate is then subjected to gel filtration chromatography, to thereby obtain a molecular weight distribution.

    (6) When the composition is subjected to starch and protein digestion treatment defined in [Procedure b] below followed by ultrasonication, and then subjected to measurement for particle diameter distribution, the particle diameter $d_{50}$ is less than 450$\mu$m.

        [Procedure b] 6 mass % aqueous suspension of the composition is treated with 0.4 volume % of protease and 0.02 mass % of $\alpha$-amylase at 20 °C for 3 days.

        (A) The composition has a density of less than 1.0 g/cm$^3$.

        Wherein the composition is obtainable by a method comprising the steps of:

        (i) preparing a dough composition comprising pulse and/or cereal, the dough composition having

            (1) a starch content of 8.0 mass % or more in terms of wet mass basis,
            (2) a dry mass basis moisture content of more than 40 mass %,
            (3) a dietary fiber content of 2.0 mass % or more in terms of wet mass basis,
            (4) a starch digestion enzyme activity of 0.2 U/g or more in terms of dry mass basis, and
            (5) according to a particle diameter distribution obtained by subjecting the dough composition to the starch and protein digestion treatment defined in the [Procedure b] above followed by ultrasonication, a particle diameter $d_{50}$ of less than 450$\mu$m; and

        (ii) swelling the dough composition from step (i) via heating treatment, wherein the AUC1 value of the composition increases by 5% or more and the dry mass basis moisture content of the composition increases by 5 mass % or more during the heating treatment.

2.  The composition according to claim 1, wherein

    in the molecular weight distribution curve ($MWDC_{3.5-8.0}$), the ratio of the area under the curve in an interval with molecular weight logarithms of 6.5 or more but less than 8.0 to the area under the entire curve (hereinafter referred to as "AUC2") is 40% or less,

optionally the molecular weight distribution curve ($MWDC_{3.5-8.0}$), the ratio of the ratio of the area under the curve in an interval with molecular weight logarithms 3.5 or more but less than 6.5 to the area under the entire curve (AUC1) to the ratio of the area under the curve in an interval with molecular weight logarithms of 6.5 or more but less than 8.0 to the area under the entire curve (AUC2) (hereinafter referred to as "[AUC2]/[AUC1] ratio") is less than 0.68,

optionally when the composition is subjected to the [Procedure a] above and the resulting product is subjected to measurement under the [Condition A] above to obtain a molecular weight distribution curve in an interval with molecular weight logarithms of 6.5 or more but less than 9.5 (hereinafter referred to as "$MWDC_{6.5-9.5}$"), the ratio of the area under the curve in an interval with molecular weight logarithms of 6.5 or more but less than 8.0 to the area under the entire curve (hereinafter referred to as "AUC3") is 30% or more,

optionally when the composition is subjected to the [Procedure a] above and the resulting product is subjected to measurement under the [Condition A] above to obtain a molecular weight distribution curve in an interval with molecular weight logarithms of 3.5 or more but less than 6.5 (hereinafter referred to as "$MWDC_{3.5-6.5}$"), the ratio of the area under the curve in an interval with molecular weight logarithms 3.5 or more but less than 5.0 to the area under the entire curve (hereinafter referred to as "AUC4") is 8% or more,

optionally when the composition is subjected to the [Procedure a] above and the resulting product is subjected to measurement under the [Condition A] above, the mass average molecular weight logarithm is less than 7.5,

optionally when the composition is subjected to the [Procedure a] above and the resulting product is subjected to separation under the [Condition A] above, and a sample is prepared from a separated fraction with molecular weight logarithms of 5.0 or more but less than 6.5 by adjusting the pH of the fraction to 7.0 and staining one mass part of the fraction with 9 mass parts of iodine solution (0.25mM), the absorbance of the stained product at 660 nm ($ABS_{5.0-6.5}$) is 0.10 or more,

optionally the requirement(s) (a) and/or (b) below is satisfied.

(a) When 6% suspension of a crushed product of the composition is observed, the number of starch grain structures observed is 300/mm$^2$ or less.

(b) When 14 mass % aqueous slurry of a crushed product of the composition is measured using rapid visco-analyzer with elevating the temperature from 50 °C to 140 °C at a rate of 12.5°C/min, the peak temperature of gelatinization is 95 °C or lower, and wherein optionally the composition is a non-fermented composition or a fermented composition.

3. The composition according to claim 1 or 2, wherein

the composition has a total porosity of more than 1%, and
optionally when the weighted average perimeter of the pores in the composition is α and the weighted average area of the pores in the composition is β, the ratio α/β is 1.5% or less.

4. The composition according to any one of claims 1 to 3, wherein

the composition has a protein content of 3.0 mass % or more in terms of dry mass basis,
optionally the composition has a total oil and fat content of 2.0 mass % or more in terms of dry mass basis,
optionally the ratio of the liquid oil and fat content to the total oil and fat content is 20 mass % or more.

5. The composition according to any one of claims 1 to 4, wherein

the pulse and/or cereal has a dry mass basis moisture content of less than 15 mass %,
optionally the pulse is matured pulse,
optionally the pulse is one or more species of pulse selected from Pisum, Phaseolus, Cajanus, Vigna, Vicia, Cicer, Glycine and Lens species,
optionally the cereal is one or more species of cereal selected from awa (foxtail millet), hie (Japanese millet), kibi (common millet), sorghum, rye, oat, hatomugi (job's tear), corn, buckwheat, amaranthus, and quinoa,
optionally the pulse and/or cereal is in the form of powder with a particle diameter $d_{90}$ of less than 500μm after ultrasonication,
optionally the total content of pulse and/or cereal is 10 mass % or more in terms of dry mass basis,
optionally the ratio of the starch content contained in pulse and/or cereal to the total starch content of the composition is 30 mass % or more, and

optionally the ratio of the protein content contained in pulse and/or cereal to the total protein content of the composition is 10 mass % or more.

6. The composition according to any one of claims 1 to 5, wherein

the composition has a wheat content of 50 mass % or less in terms of dry mass basis,
optionally the ratio of the protein content derived from wheat to the total protein content of the composition is 50 mass % or less, and
optionally the composition is substantially free of gluten.

7. The composition according to any one of claims 1 to 6, wherein

the composition contains dietary fiber-localized part of edible plant,
optionally the dietary fiber-localized part contains seed skin of pulse, and
optionally the dietary fiber-localized part of edible plant includes dietary fiber-localized part of psyllium.

8. The composition according to any one of claims 1 to 7, wherein

the total content of edible part of pulse and/or cereal and dietary fiber-localized part of edible plant is 10 mass % or more in terms of dry mass basis,
optionally the composition contains both edible part of pulse and dietary fiber-localized part of pulse.

9. The composition according to claim 7 or 8, wherein

the dietary fiber-localized part of edible plant includes dietary fiber-localized part having undergone enzyme treatment, and
optionally the enzyme treatment is xylanase and/or pectinase treatment.

10. A method for producing a composition according to any one of claims 1 to 6, comprising the steps of:

(i) preparing a dough composition comprising pulse and/or cereal except for rice, wheat and barley, the dough composition having

(1) a starch content of 8.0 mass % or more in terms of wet mass basis,
(2) a dry mass basis moisture content of more than 40 mass %,
(3) a dietary fiber content of 2.0 mass % or more in terms of wet mass basis,
(4) a starch digestion enzyme activity of 0.2 U/g or more in terms of dry mass basis, and
(5) according to a particle diameter distribution obtained by subjecting the dough composition to the starch and protein digestion treatment defined in the [Procedure b] above followed by ultrasonication, a particle diameter $d_{50}$ of less than 450$\mu$m; and

(ii) swelling the dough composition from step (i) via heating treatment, wherein the AUC1 value of the composition increases by 5% or more and the dry mass basis moisture content of the composition increases by 5 mass % or more during the heating treatment,

wherein
optionally the dough composition at step (i) further satisfies the requirement (6-1) and/or (6-2) below.

(6-1) The requirement(s) (c-1) and/or (d-1) is satisfied.
(c-1) When 6% suspension of a crushed product of the dough composition is observed, the number of starch grain structures is 40/mm$^2$ or more.
(d-1) When 14 mass % aqueous slurry of a crushed product of the dough composition is subjected to measurement using rapid visco-analyzer with elevating the temperature from 50 °C to 140 °C at a rate of 12.5°C/min, the peak temperature of gelatinization is higher than 95 °C.
(6-2) The requirement(s) (c-2) and/or (d-2) is satisfied.
(c-2) When 6% suspension of a crushed product of the composition is observed, the number of starch grain structures decreases by 10/mm$^2$ or more during step (ii).
(d-2) When 14 mass % aqueous slurry of a crushed product of the composition is subjected to measurement using rapid visco-analyzer with elevating the temperature from 50 °C to 140 °C at a rate of 12.5°C/min, the peak temperature of gelatinization decreases by 5% or more during step (ii).

11. The method according to claim 10, wherein

the pulse and/or cereal have undergone warming treatment in such a manner that the decrement difference of the peak temperature of gelatinization before and after the warming treatment is 50 °C or lower,
optionally the pulse and/or cereal used in the dough composition at step (i) is in the form of powder with a particle diameter $d_{90}$ of less than 500$\mu$m after ultrasonication, and
optionally 30% or more of the starch digestion enzyme activity of the dough composition at step (i) is derived from pulse and/or cereal.

12. The method according to claim 10 or 11, wherein

the AUC3 value of the dough composition at step (i) is 30% or more,
optionally the AUC2 value of the composition decreases by 5% or more through the heating treatment of step (ii),
optionally the [AUC2]/[AUC1] ratio decreases by 10% or more through the heating treatment of step (ii),
optionally the total porosity increases by 1% or more through the heating treatment of step (ii). and
optionally the absorbance at 660 nm ($ABS_{5.0-6.5}$) increases by 0.03 or more through the heating treatment of step (ii).

13. The method according to any one of claims 10 to 12, wherein

the dough composition prepared at step (i) comprises dietary fiber-localized part of edible plant,
optionally the content of the dietary fiber-localized part of edible plant in the dough composition prepared at step (i) is 0.1 mass % or more in terms of wet mass basis,
optionally the dietary fiber-localized part of edible plant comprises seed skin of pulse,
optionally the dough composition at step (i) comprises both edible part of pulse and dietary fiber-localized part of pulse, and
optionally the dietary fiber-localized part of edible plant comprises seed skin of psyllium.

14. The method according to claim 13, further including subjecting the dietary fiber-localized part of edible plant to enzyme treatment, wherein
optionally the enzyme treatment is xylanase and/or pectinase treatment.

15. The method according to claim 14, further including carrying out the enzyme treatment at step (i) and/or step (ii), wherein
optionally step (ii) includes:

(ii-a) yeast-fermenting the dough composition from step (i); and
(ii-b) baking the yeast-fermented composition from step (ii-a).

16. The method according to any one of claims 10 to 15, wherein step (ii) includes:

(ii-la) kneading the dough composition from step (i) under pressurized conditions with heating at a temperature of more than 100 °C 1; and
(ii-1b) subjecting the kneaded composition from step (ii-1a) to normal pressure at a temperature of more than 100 °C, or alternatively

step (ii) includes:

(ii-2a) mixing the dough composition from step (i) with air bubbles and/or expansion agent; and
(ii-2b) heating the mixed composition from step (ii-2a) at a certain temperature.

17. Pulse and/or cereal for use in step (i) of the method according to any one of claims 10 to 16, which satisfies the requirement(s) (c-3) and/or (d-3),

(c-3) When 6% suspension of a crushed product of the dough composition is observed, the number of starch grain

structures is 40/mm$^2$ or more.

(d-3) When 14 mass % aqueous slurry of a crushed product of the dough composition is measured using rapid visco-analyzer with elevating the temperature from 50 °C to 140 °C at a rate of 12.5°C/min, the peak temperature of gelatinization is more than 95 °C, wherein

optionally the pulse and/or cereal has undergone warming treatment gelatinization in such a manner that the decrease in the peak temperature of gelatinization is 50 °C or lower.

**Patentansprüche**

1. Gequollene Zusammensetzung, die Hülsenfrüchte und/oder Getreide mit Ausnahme von Reis, Weizen und Gerste umfasst und die nachstehenden Anforderungen (1) bis (6) und (A) erfüllt

(1) Die Zusammensetzung weist einen Stärkegehalt von 15 Massen-% oder mehr in Bezug auf die Trockenmassebasis auf

(2) Die Zusammensetzung weist einen Trockenmassebasis-Feuchtigkeitsgehalt von weniger als 150 Massen-% auf, wobei der Trockenmassebasis-Feuchtigkeitsgehalt von dem in der Beschreibung beschriebenen Verfahren gemessen wird

(3) Der Gelatinierungsgrad von Stärke in der Zusammensetzung beträgt 50 Massen-% oder mehr

(4) Die Zusammensetzung weist einen Ballaststoffgehalt von 3,0 Massen-% oder mehr in Bezug auf die Trockenmassebasis auf

(5) Wenn die Zusammensetzung dem Nachstehenden [Vorgang a] unterzogen wird und das resultierende Produkt einer Messung unter dem Nachstehenden [Bedingung A] unterzogen wird, um eine Molekulargewichtsverteilungskurve in einem Intervall mit Molekulargewichtslogarithmen von 3,5 oder mehr, aber weniger als 8,0 (im Folgenden als "MWDC$_{3,5-8,0}$" bezeichnet) zu erhalten, beträgt das Verhältnis der Fläche unter der Kurve in einem Intervall mit Molekulargewichtslogarithmen von 3,5 oder mehr, aber weniger als 6,5, zu der Fläche unter der gesamten Kurve (im Folgenden als "AUC1" bezeichnet) mehr als 60 %

[Vorgang a] Die Zusammensetzung wird zerkleinert und eine in Ethanol unlösliche und in Dimethylsulfoxid lösliche Komponente wird erhalten

[Bedingung A] Das behandelte Produkt aus dem Vorstehenden [Vorgang a] wird in 1M wässrige Lösung von Natriumhydroxid mit einer Konzentration von 0,30 Massen-% hinein gelöst und bei 37 °C für 30 Minuten stehen gelassen, dann mit einem gleichen Volumen an Wasser und einem gleichen Volumen an Elutionsmittel kombiniert und einer Filtration mit einem 5-$\mu$m-Filter unterzogen, und 5 ml des Filtrats werden dann einer Gelfiltrationschromatographie unterzogen, um dadurch eine Molekulargewichtsverteilung zu erhalten

(6) Wenn die Zusammensetzung einer Stärke- und Proteinverdauungsbehandlung unterzogen wird, die im Nachstehenden [Vorgang b] definiert ist, gefolgt von Ultrabeschallung, und dann einer Messung der Partikeldurchmesserverteilung unterzogen wird, beträgt der Partikeldurchmesser d$_{50}$ weniger als 450 $\mu$m

[Vorgang b] 6 Massen-% einer wässrigen Suspension der Zusammensetzung werden mit 0,4 Volumen-% einer Protease und 0,02 Massen-% einer $\alpha$-Amylase bei 20 °C für 3 Tage behandelt

(A) Die Zusammensetzung weist eine Dichte von weniger als 1,0 g/cm$^3$ auf

Wobei die Zusammensetzung durch ein Verfahren erhaltbar ist, das die folgenden Schritte umfasst:

(i) Präparieren einer Teigzusammensetzung, die Hülsenfrüchte und/oder Getreide umfasst, wobei die Teigzusammensetzung Folgendes aufweist:

(1) einen Stärkegehalt von 8,0 Massen-% oder mehr in Bezug auf die Feuchtmassebasis,
(2) einen Trockenmassebasis-Feuchtigkeitsgehalt von mehr als 40 Massen- %,
(3) einen Ballaststoffgehalt von 2,0 Massen-% oder mehr in Bezug auf die Feuchtmassebasis,
(4) eine Stärkeverdauungsenzymaktivität von 0,2 U/g oder mehr in Bezug auf die Trockenmassebasis, und
(5) gemäß einer Partikeldurchmesserverteilung, die erhalten wird, indem die Teigzusammensetzung der Stärke- und Proteinverdauungsbehandlung unterzogen wird, die im Vorstehenden [Vorgang b] definiert ist, gefolgt von Ultrabeschallung, einen Partikeldurchmesser $d_{50}$ von weniger als 450 $\mu$m; und

(ii) Quellenlassen der Teigzusammensetzung aus Schritt (i) mittels Erwärmungsbehandlung, wobei der AUC1-Wert der Zusammensetzung um 5 % oder mehr zunimmt und der Trockenmassebasis-Feuchtigkeitsgehalt der Zusammensetzung um 5 Massen-% oder mehr während der Erwärmungsbehandlung zunimmt.

**2.** Zusammensetzung gemäß Anspruch 1, wobei,

in der Molekulargewichtsverteilungskurve ($MWDC_{3,5-8,0}$), das Verhältnis der Fläche unter der Kurve in einem Intervall mit Molekulargewichtslogarithmen von 6,5 oder mehr, aber weniger als 8,0, zu der Fläche unter der gesamten Kurve (im Folgenden als "AUC2" bezeichnet) 40 % oder weniger beträgt, optional der Molekulargewichtsverteilungskurve ($MWDC_{3,5-8,0}$), das Verhältnis des Verhältnisses der Fläche unter der Kurve in einem Intervall mit Molekulargewichtslogarithmen von 3,5 oder mehr, aber weniger als 6,5, zu der Fläche unter der gesamten Kurve (AUC1) zu dem Verhältnis der Fläche unter der Kurve in einem Intervall mit Molekulargewichtslogarithmen von 6,5 oder mehr, aber weniger als 8,0, zu der Fläche unter der gesamten Kurve (AUC2) (im Folgenden als "[AUC2]/[AUC1]-Verhältnis" bezeichnet) weniger als 0,68 beträgt, optional, wenn die Zusammensetzung dem Vorstehenden [Vorgang a] unterzogen wird und das resultierende Produkt einer Messung unter dem Vorstehenden [Bedingung A] unterzogen wird, um eine Molekulargewichtsverteilungskurve in einem Intervall mit Molekulargewichtslogarithmen von 6,5 oder mehr, aber weniger als 9,5 (im Folgenden als "$MWDC_{6,5-9,5}$" bezeichnet) zu erhalten, das Verhältnis der Fläche unter der Kurve in einem Intervall mit Molekulargewichtslogarithmen von 6,5 oder mehr, aber weniger als 8,0, zu der Fläche unter der gesamten Kurve (im Folgenden als "AUC3" bezeichnet) 30 % oder mehr beträgt, optional, wenn die Zusammensetzung dem Vorstehenden [Vorgang a] unterzogen wird und das resultierende Produkt einer Messung unter dem Vorstehenden [Bedingung A] unterzogen wird, um eine Molekulargewichtsverteilungskurve in einem Intervall mit Molekulargewichtslogarithmen von 3,5 oder mehr, aber weniger als 6,5 (im Folgenden als "$MWDC_{3,5-6,5}$" bezeichnet) zu erhalten, das Verhältnis der Fläche unter der Kurve in einem Intervall mit Molekulargewichtslogarithmen von 3,5 oder mehr, aber weniger als 5,0, zu der Fläche unter der gesamten Kurve (im Folgenden als "AUC4" bezeichnet) 8 % oder mehr beträgt, optional, wenn die Zusammensetzung dem Vorstehenden [Vorgang a] unterzogen wird und das resultierende Produkt einer Messung unter dem Vorstehenden [Bedingung A] unterzogen wird, der massengemittelte Molekulargewichtslogarithmus weniger als 7,5 beträgt, optional, wenn die Zusammensetzung dem Vorstehenden [Vorgang a] unterzogen wird und das resultierende Produkt einer Trennung unter dem Vorstehenden [Bedingung A] unterzogen wird und eine Probe aus einer abgetrennten Fraktion mit Molekulargewichtslogarithmen von 5,0 oder mehr, aber weniger als 6,5, durch Einstellen des pH der Fraktion auf 7,0 und Färben eines Massenteils der Fraktion mit 9 Massenteilen einer Jodlösung (0,25 mM) präpariert wird, die Absorbanz des gefärbten Produkts bei 660 nm ($Abs_{5,0-6,5}$) 0,10 oder mehr beträgt, optional die nachstehende(n) Anforderung(en) (a) und/oder (b) erfüllt ist/sind (a) (a) Wenn 6 % Suspension eines zerkleinerten Produkts der Zusammensetzung beobachtet werden, beträgt die Anzahl der beobachteten Stärkekornstrukturen 300/mm$^2$ oder weniger (b) Wenn 14 Massen-% einer wässrigen Schlacke eines zerkleinerten Produkts der Zusammensetzung unter Verwendung eines schnellen Viskositätsanalysators gemessen werden, wobei die Temperatur mit einer Rate von 12,5 °C/min von 50 °C auf 140 °C erhöht wird, beträgt die Spitzentemperatur der Gelatinierung 95 °C oder niedriger, und wobei optional die Zusammensetzung eine nicht-fermentierte Zusammensetzung oder eine fermentierte Zusammensetzung ist.

**3.** Zusammensetzung gemäß Anspruch 1 oder 2, wobei

die Zusammensetzung eine Gesamtporosität von mehr als 1 % aufweist, und optional, wenn der gewichtete durchschnittliche Umfang der Poren in der Zusammensetzung $\alpha$ beträgt und die gewichtete durchschnittliche Fläche der Poren in der Zusammensetzung $\beta$ beträgt, das Verhältnis $\alpha/\beta$ 1,5 % oder weniger beträgt.

**4.** Zusammensetzung gemäß einem der Ansprüche 1 bis 3, wobei

die Zusammensetzung einen Proteingehalt von 3,0 Massen-% oder mehr in Bezug auf die Trockenmassebasis aufweist,

optional die Zusammensetzung einen insgesamten Öl- und Fettgehalt von 2,0 Massen-% oder mehr in Bezug auf die Trockenmassebasis aufweist,

optional das Verhältnis des flüssigen Öl- und Fettgehalts zu dem insgesamten Öl- und Fettgehalt 20 Massen-% oder mehr beträgt.

5.  Zusammensetzung gemäß einem der Ansprüche 1 bis 4, wobei

die Hülsenfrucht und/oder das Getreide einen Trockenmassebasis-Feuchtigkeitsgehalt von weniger als 15 Massen-% aufweist,

optional die Hülsenfrucht eine gereifte Hülsenfrucht ist,

optional die Hülsenfrucht eine oder mehrere Hülsenfruchtspezies ausgewählt aus den Spezies Pisum, Phaseolus, Cajanus, Vigna, Vicia, Cicer, Glycine und Lens ist,

optional das Getreide eine oder mehrere Getreidespezies ausgewählt aus Awa (Kolbenhirse), Hie (japanischer Hirse), Kibi (gemeiner Hirse), Sorghum, Roggen, Hafer, Hatomugi (Hiobsträne), Mais, Buchweizen, Amaranthus und Quinoa ist,

optional die Hülsenfrucht und/oder das Getreide in Form von Pulver mit einem Partikeldurchmesser $d_{90}$ von weniger als 500 µm nach Ultrabeschallung vorliegt,

optional der Gesamtgehalt von Hülsenfrüchten und/oder Getreide 10 Massen-% oder mehr in Bezug auf die Trockenmassebasis beträgt,

optional das Verhältnis des Stärkegehalts, der in der Hülsenfrucht und/oder in dem Getreide enthalten ist, zu dem Gesamtstärkegehalt der Zusammensetzung 30 Massen-% oder mehr beträgt und

optional das Verhältnis des Proteingehalts, der in der Hülsenfrucht und/oder dem Getreide enthalten ist, zu dem Gesamtproteingehalt der Zusammensetzung 10 Massen-% oder mehr beträgt.

6.  Zusammensetzung gemäß einem der Ansprüche 1 bis 5, wobei

die Zusammensetzung einen Weizengehalt von 50 Massen-% oder weniger in Bezug auf die Trockenmassenbasis aufweist,

optional das Verhältnis des aus Weizen abgeleiteten Proteingehalts zu dem Gesamtproteingehalt der Zusammensetzung 50 Massen-% oder weniger beträgt, und

optional die Zusammensetzung im Wesentlichen frei von Gluten ist.

7.  Zusammensetzung gemäß einem der Ansprüche 1 bis 6,

wobei die Zusammensetzung den ballaststoffreichen Teil einer essbaren Pflanze enthält, optional der ballaststoffreiche Teil eine Hülsenfrucht-Samenhaut enthält und

optional der ballaststoffreiche Teil einer essbaren Pflanze den ballaststoffreichen Teil von Psyllium beinhaltet.

8.  Zusammensetzung gemäß einem der Ansprüche 1 bis 7, wobei

der Gesamtgehalt des essbaren Teils einer Hülsenfrucht und/oder eines Getreides und des ballaststoffreichen Teils einer essbaren Pflanze 10 Massen-% oder mehr in Bezug auf die Trockenmassebasis beträgt,

optional die Zusammensetzung sowohl den essbaren Teil einer Hülsenfrucht als auch den ballaststoffreichen Teil einer Hülsenfrucht enthält.

9.  Zusammensetzung gemäß Anspruch 7 oder 8, wobei

der ballaststoffreiche Teil einer essbaren Pflanze den ballaststoffreichen Teil beinhaltet, der einer Enzymbehandlung unterzogen wurde, und

optional die Enzymbehandlung eine Xylanase- und/oder Pektinasebehandlung ist.

10. Verfahren zur Herstellung einer Zusammensetzung gemäß einem der Ansprüche 1 bis 6, umfassend die folgenden Schritte:

(i) Präparieren einer Teigzusammensetzung, die Hülsenfrüchte und/oder Getreide mit Ausnahme von Reis, Weizen und Gerste umfasst, wobei die Teigzusammensetzung Folgendes aufweist:

(1) einen Stärkegehalt von 8,0 Massen-% oder mehr in Bezug auf die Feuchtmassebasis,

(2) einen Trockenmassebasis-Feuchtigkeitsgehalt von mehr als 40 Massen- %,

(3) einen Ballaststoffgehalt von 2,0 Massen-% oder mehr in Bezug auf die Feuchtmassebasis,

(4) eine Stärkeverdauungsenzymaktivität von 0,2 U/g oder mehr in Bezug auf die Trockenmassebasis und

(5) gemäß einer Partikeldurchmesserverteilung, die erhalten wird, indem die Teigzusammensetzung der Stärke- und Proteinverdauungsbehandlung unterzogen wird, die im Vorstehenden [Vorgang b] definiert ist, gefolgt von Ultrabeschallung, einen Partikeldurchmesser $d_{50}$ von weniger als 450 $\mu$m; und

(ii) Quellenlassen der Teigzusammensetzung aus Schritt (i) mittels Erwärmungsbehandlung, wobei der AUC1-Wert der Zusammensetzung um 5 % oder mehr zunimmt und der Trockenmassebasis-Feuchtigkeitsgehalt der Zusammensetzung um 5 Massen-% oder mehr während der Erwärmungsbehandlung zunimmt, wobei

optional die Teigzusammensetzung in Schritt (i) ferner die nachstehende Anforderung (6-1) und/oder (6-2) erfüllt

(6-1) Die Anforderung(en) (c-1) und/oder (d-1) ist/sind erfüllt

(c-1) Wenn 6 % Suspension eines zerkleinerten Produkts der Teigzusammensetzung beobachtet werden, beträgt die Anzahl der Stärkekornstrukturen 40/mm$^2$ oder mehr

(d-1) Wenn 14 Massen-% einer wässrigen Schlacke eines zerkleinerten Produkts der Teigzusammensetzung einer Messung unter Verwendung eines schnellen Viskositätsanalysators unterzogen werden, wobei die Temperatur mit einer Rate von 12,5 °C/min von 50 °C auf 140 °C erhöht wird, ist die Spitzentemperatur der Gelatinierung höher als 95 °C

(6-2) Die Anforderung(en) (c-2) und/oder (d-2) ist/sind erfüllt

(c-2) Wenn 6 % Suspension eines zerkleinerten Produkts der Zusammensetzung beobachtet werden, nimmt die Anzahl der Stärkekornstrukturen um 10/mm$^2$ oder mehr während Schritt (ii) ab

(d-2) Wenn 14 Massen-% einer wässrigen Schlacke eines zerkleinerten Produkts der Zusammensetzung einer Messung unter Verwendung eines schnellen Viskositätsanalysators unterzogen werden, wobei die Temperatur mit einer Rate von 12,5 °C/min von 50 °C auf 140 °C erhöht wird, nimmt die Spitzentemperatur der Gelatinierung um 5% oder mehr während Schritt (ii) ab.

**11.** Verfahren gemäß Anspruch 10, wobei

die Hülsenfrucht und/oder das Getreide einer Erwärmungsbehandlung derart unterzogen wurde(n), dass die Dekrementdifferenz der Spitzentemperatur der Gelatinierung vor und nach der Erwärmungsbehandlung 50 °C oder niedriger beträgt,

optional die/das in der Teigzusammensetzung in Schritt (i) verwendete Hülsenfrucht und/oder Getreide in Form von Pulver mit einem Partikeldurchmesser $d_{90}$ von weniger als 500 $\mu$m nach Ultrabeschallung vorliegt und

optional 30 % oder mehr der Stärkeverdauungsenzymaktivität der Teigzusammensetzung in Schritt (i) von Hülsenfrüchten und/oder Getreide abgeleitet sind.

**12.** Verfahren gemäß Anspruch 10 oder 11, wobei

der AUC3-Wert der Teigzusammensetzung in Schritt (i) 30 % oder mehr ist,

optional der AUC2-Wert der Zusammensetzung um 5 % oder mehr durch die Erwärmungsbehandlung von Schritt (ii) abnimmt,

optional das [AUC2]/[AUC1]-Verhältnis um 10 % oder mehr durch die Erwärmungsbehandlung von Schritt (ii) abnimmt,

optional die Gesamtporosität um 1 % oder mehr durch die Erwärmungsbehandlung von Schritt (ii) zunimmt, und

optional die Absorbanz bei 660 nm (Abs$_{5,0-6,5}$) um 0,03 oder mehr durch die Erwärmungsbehandlung von Schritt (ii) zunimmt.

**13.** Verfahren gemäß einem der Ansprüche 10 bis 12, wobei

die in Schritt (i) präparierte Teigzusammensetzung den ballaststoffreichen Teil einer essbaren Pflanze umfasst,

optional der Gehalt des ballaststoffreichen Teils der essbaren Pflanze in der in Schritt (i) präparierten Teigzusammensetzung 0,1 Massen-% oder mehr in Bezug auf die Feuchtmassenbasis beträgt,

optional der ballaststoffreiche Teil einer essbaren Pflanze die Hülsenfrucht-Samenhaut umfasst, optional die Teigzusammensetzung in Schritt (i) sowohl den essbaren Teil einer Hülsenfrucht als auch den ballaststoffreichen Teil einer Hülsenfrucht umfasst und

optional der ballaststoffreiche Teil einer essbaren Pflanze die Samenhaut von Psyllium umfasst.

**14.** Verfahren gemäß Anspruch 13, ferner beinhaltend, dass der ballaststoffreiche Teil der essbaren Pflanze einer Enzymbehandlung unterzogen wird, wobei

optional die Enzymbehandlung eine Xylanase- und/oder Pektinasebehandlung ist.

**15.** Verfahren gemäß Anspruch 14, ferner beinhaltend das Durchführen der Enzymbehandlung in Schritt (i) und/oder Schritt (ii), wobei

optional Schritt (ii) Folgendes beinhaltet:

(ii-a) Hefefermentieren der Teigzusammensetzung aus Schritt (i); und
(ii-b) Backen der hefefermentierten Zusammensetzung aus Schritt (ii-a).

**16.** Verfahren gemäß einem der Ansprüche 10 bis 15, wobei Schritt (ii) beinhaltet:

(ii-1a) Kneten der Teigzusammensetzung aus Schritt (i) unter Druckbedingungen unter Erwärmung auf eine Temperatur von mehr als 100 °C1; und
(ii-1b) Aussetzen der gekneteten Zusammensetzung aus Schritt (ii-1a) an einen Normaldruck bei einer Temperatur von mehr als 100 °C oder alternativ
Schritt (ii) Folgendes beinhaltet:

(ii-2a) Mischen der Teigzusammensetzung aus Schritt (i) mit Luftblasen und/oder einem Treibmittel; und
(ii-2b) Erwärmen der gemischten Zusammensetzung aus Schritt (ii-2a) bei einer gewissen Temperatur.

**17.** Hülsenfrüchte und/oder Getreide zur Verwendung in Schritt (i) des Verfahrens gemäß einem der Ansprüche 10 bis 16, das die Anforderung(en) (c-3) und/oder (d-3) erfüllt

(c-3) Wenn 6 % Suspension eines zerkleinerten Produkts der Teigzusammensetzung beobachtet werden, beträgt die Anzahl der Stärkekornstrukturen 40/mm$^2$ oder mehr
(d-3) Wenn 14 Massen-% einer wässrigen Schlacke eines zerkleinerten Produkts der Teigzusammensetzung unter Verwendung eines schnellen Viskositätsanalysators gemessen werden, wobei die Temperatur mit einer Rate von 12,5 °C/min von 50 °C auf 140 °C erhöht wird, beträgt die Spitzentemperatur der Gelatinierung mehr als 95 °C, wobei
optional die Hülsenfrucht und/oder das Getreide einer Erwärmungsbehandlungsgelatinierung derart unterzogen wurde(n), dass die Abnahme der Spitzentemperatur der Gelatinierung 50 °C oder niedriger beträgt.

**Revendications**

**1.** Composition gonflée comprenant une légumineuse et/ou une céréale à l'exception du riz, du blé et de l'orge et satisfaisant les exigences (1) à (6) et (A) ci-dessous,

(1) la composition présente une teneur en amidon supérieure ou égale à 15 % en masse en termes de base de masse sèche,
(2) la composition présente une teneur en humidité sur une base de masse sèche inférieure à 150 % en masse, ladite teneur en humidité sur une base de masse sèche étant mesurée par le procédé décrit dans la description,
(3) le degré de gélatinisation de l'amidon dans la composition est supérieur ou égal à 50 % en masse,
(4) la composition présente une teneur en fibres alimentaires supérieure ou égale à 3,0 % en masse en terme de base de masse sèche,
(5) lorsque la composition est soumise à la [Procédure a] ci-dessous et que le produit résultant est soumis à une mesure sous la [Condition A] ci-dessous pour obtenir une courbe de distribution de poids moléculaire dans un intervalle avec des logarithmes de poids moléculaire supérieurs ou égaux à 3,5 mais inférieurs à 8,0 (ci-après dénommée « MWDC$_{3,5-8,0}$ »), le rapport de l'aire sous la courbe dans un intervalle avec des logarithmes de poids moléculaire supérieurs ou égaux à 3,5 mais inférieurs à 6,5 sur l'aire sous la courbe entière (ci-après dénommée « ASC1 ») est supérieur à 60 %,

[Procédure a] la composition est broyée et un composant insoluble dans l'éthanol et soluble dans le diméthylsulfoxyde est obtenu,
[Condition A] le produit traité provenant de la [Procédure a] ci-dessus est dissous dans une solution aqueuse d'hydroxyde de sodium 1M à une concentration de 0,30 % en masse et laissé reposer à 37°C pendant 30 minutes, puis combiné avec un volume égal d'eau et un volume égal d'éluant et soumis à une filtration avec un filtre de 5 μm, et 5 ml du filtrat est ensuite soumis à une chromatographie de filtration sur gel, pour obtenir ainsi une distribution de poids moléculaire,

(6) lorsque la composition est soumise à un traitement de digestion de l'amidon et des protéines défini dans la [Procédure b] ci-dessous suivi d'ultrasonication, et puis soumise à une mesure de distribution de diamètre de particules, le diamètre de particules $d_{50}$ est inférieur à 450 μm,

[Procédure b] une suspension aqueuse à 6 % en masse de la composition est traitée avec 0,4 % en volume de protéase et 0,02 % en masse d'α-amylase à 20°C pendant 3 jours,

(A) la composition possède une densité inférieure à 1,0 g/cm³,

ladite composition pouvant être obtenue par un procédé comprenant les étapes de :

(i) préparation d'une composition de pâte comprenant une légumineuse et/ou une céréale, la composition de pâte possédant

(1) une teneur en amidon supérieure ou égale à 8,0 % en masse, en terme de base de masse humide,
(2) une teneur en humidité sur une base de masse sèche supérieure à 40 % en masse,
(3) une teneur en fibres alimentaires supérieure ou égale à 2,0 % en masse en termes de base de masse humide,
(4) une activité enzymatique de digestion de l'amidon supérieure ou égale à 0,2 U/g en termes de base de masse sèche, et
(5) selon une distribution de diamètre de particules obtenue en soumettant la composition de pâte au traitement de digestion d'amidon et de protéines défini dans la [Procédure b] ci-dessus, suivi d'une ultrasonication, un diamètre de particules $d_{50}$ inférieur à 450 μm ; et

(ii) le gonflement de la composition de pâte de l'étape (i) par traitement thermique, ladite valeur de l'ASC1 de la composition augmentant de 5 % ou plus et ladite teneur en humidité sur une base de masse sèche de la composition augmentant de 5 % en masse ou plus durant le traitement thermique.

2. Composition selon la revendication 1,

dans la courbe de distribution de poids moléculaire ($MWDC_{3,5-8,0}$), ledit rapport de l'aire sous la courbe dans un intervalle avec des logarithmes de poids moléculaire supérieurs ou égaux à 6,5 mais inférieurs à 8,0 sur l'aire sous la courbe entière (ci-après dénommée « ASC2 ») étant inférieur ou égal à 40 %,
éventuellement la courbe de distribution de poids moléculaire ($MWDC_{3,5-8,0}$), ledit rapport du rapport de l'aire sous la courbe dans un intervalle avec des logarithmes de poids moléculaire supérieurs ou égaux à 3,5 mais inférieurs à 6,5 sur l'aire sous la courbe entière (ASC1) sur le rapport de l'aire sous la courbe dans un intervalle avec des logarithmes de poids moléculaire supérieurs ou égaux à 6,5 mais inférieurs à 8,0 sur l'aire sous la courbe entière (ASC2) (ci-après dénommée « rapport [ASC2]/[ASC1] ») étant inférieur à 0,68,
éventuellement, lorsque la composition est soumise à la [Procédure a] ci-dessus et que le produit résultant est soumis à une mesure sous la [Condition A] ci-dessus pour obtenir une courbe de distribution de poids moléculaire dans un intervalle avec des logarithmes de poids moléculaires supérieurs ou égaux à 6,5 mais inférieurs à 9,5 (ci-après dénommée « $MWDC_{6,5-9,5}$ »), ledit rapport de l'aire sous la courbe dans un intervalle avec des logarithmes de poids moléculaires supérieurs ou égaux à 6,5 mais inférieurs à 8,0 sur l'aire sous la courbe entière (ci-après dénommée « ASC3 ») étant supérieur ou égal à 30 %,
éventuellement lorsque la composition est soumise à la [Procédure a] ci-dessus et que le produit résultant est soumis à une mesure sous la [Condition A] ci-dessus pour obtenir une courbe de distribution de poids moléculaire dans un intervalle avec des logarithmes de poids moléculaires supérieurs ou égaux à 3,5 mais inférieurs à 6,5 (ci-après dénommée « $MWDC_{3,5-6,5}$ »), ledit rapport de l'aire sous la courbe dans un intervalle avec des logarithmes de poids moléculaires supérieurs ou égaux à 3,5 mais inférieurs à 5,0 sur l'aire sous la courbe entière (ci-après dénommée « ASC4 ») étant supérieur ou égal à 8 %,
éventuellement lorsque la composition est soumise à la [Procédure a] ci-dessus et que le produit résultant est soumis à une mesure sous la [Condition A] ci-dessus, ledit logarithme de poids moléculaire moyen en masse étant inférieur à 7,5,

éventuellement lorsque la composition est soumise à la [Procédure a] ci-dessus et que le produit résultant est soumis à une séparation sous la [Condition A] ci-dessus, et qu'un échantillon est préparé à partir d'une fraction séparée avec des logarithmes de poids moléculaire supérieurs ou égaux à 5,0 mais inférieurs à 6,5 en réglant le pH de la fraction à 7,0 et en colorant une partie en masse de la fraction avec 9 parties en masse de solution d'iode (0,25 mM), l'absorbance du produit coloré à 660 nm ($ABS_{5,0-6,5}$) étant supérieure ou égale à 0,10, éventuellement, ladite ou lesdites exigences (a) et/ou (b) ci-dessous étant satisfaites,

> (a) lorsqu'une suspension à 6 % d'un produit broyé de la composition est observée, le nombre de structures de grains d'amidon observées étant inférieur ou égal à 300/mm$^2$,
> (b) lorsqu'une suspension aqueuse à 14 % en masse d'un produit écrasé de la composition est mesurée à l'aide d'un visco-analyseur rapide avec élévation de la température de 50°C à 140°C à un taux de 12,5°C/min, la température de pointe de gélatinisation étant inférieure ou égale à 95°C, et

éventuellement ladite composition étant une composition non fermentée ou une composition fermentée.

3.  Composition selon l'une des revendications 1 ou 2,

> ladite composition présentant une porosité totale supérieure à 1 %, et
> éventuellement lorsque le périmètre moyen pondéré des pores dans la composition est $\alpha$ et l'aire moyenne pondérée des pores dans la composition est $\beta$, le rapport $\alpha/\beta$ étant inférieur ou égal à 1,5 %.

4.  Composition selon l'une quelconque des revendications 1 à 3,

> ladite composition présentant une teneur en protéines supérieure ou égale à 3,0 % en masse en termes de base de masse sèche,
> éventuellement, ladite composition présentant une teneur totale en huile et en matières grasses supérieure ou égale à 2,0 % en masse en termes de base de masse sèche,
> éventuellement le rapport de la teneur en huile et en matières grasses liquides sur la teneur en huile et en matières grasses totale étant supérieur ou égal à 20 % en masse.

5.  Composition selon l'une quelconque des revendications 1 à 4,

> ladite légumineuse et/ou ladite céréale possédant une teneur en humidité sur base de masse sèche inférieure à 15 % en masse,
> éventuellement ladite légumineuse étant une légumineuse mûre,
> éventuellement ladite légumineuse étant une ou plusieurs espèces de légumineuses choisies parmi les espèces Pisum, Phaseolus, Cajanus, Vigna, Vicia, Cicer, Glycine et Lens, éventuellement, ladite céréale étant une ou plusieurs espèces de céréales sélectionnées parmi le awa (millet des oiseaux), le hie (millet du Japon), le kibi (millet commun), le sorgho, le seigle, l'avoine, le hatomugi (grain de Job), le maïs, le sarrasin, l'amarante et le quinoa,
> éventuellement ladite légumineuse et/ou ladite céréale se présentant sous forme de poudre possédant un diamètre de particules $d_{90}$ inférieur à 500 $\mu$m après ultrasonication, éventuellement, ladite teneur totale en légumineuse et/ou en céréale étant supérieure ou égale à 10 % en masse, en termes de base de masse sèche, éventuellement, ledit rapport de la teneur en amidon contenue dans la légumineuse et/ou la céréale sur la teneur totale en amidon de la composition étant supérieur ou égal à 30 % en masse, et éventuellement, ledit rapport de la teneur en protéines contenue dans la légumineuse et/ou la céréale sur la teneur totale en protéines de la composition étant supérieur ou égal à 10 % en masse.

6.  Composition selon l'une quelconque des revendications 1 à 5,

> ladite composition possédant une teneur en blé inférieure ou égale à 50 % en masse en termes de base de masse sèche,
> éventuellement, ledit rapport de la teneur en protéines dérivée du blé sur la teneur totale en protéines de la composition étant inférieur ou égal à 50 % en masse, et
> éventuellement ladite composition étant sensiblement exempte de gluten.

7.  Composition selon l'une quelconque des revendications 1 à 6,

ladite composition contenant une partie localisée dans des fibres alimentaires de plante comestible, éventuellement ladite partie localisée dans des fibres alimentaires contenant une peau de graine de légumineuse, et éventuellement ladite partie localisée dans des fibres alimentaires de plante comestible comprenant une partie localisée dans des fibres alimentaires de psyllium.

8. Composition selon l'une quelconque des revendications 1 à 7,

ladite teneur totale en partie comestible de légumineuse et/ou de céréale et en partie localisée dans des fibres alimentaires de plantes comestibles étant supérieure ou égale à 10 % en masse, en termes de base de masse sèche, éventuellement, ladite composition contenant à la fois une partie comestible de légumineuse et une partie localisée dans des fibres alimentaires de légumineuse.

9. Composition selon la revendication 7 ou 8,

ladite partie localisée dans des fibres alimentaires de la plante comestible comprenant une partie localisée dans des fibres alimentaires ayant subi un traitement enzymatique, et éventuellement ledit traitement enzymatique étant un traitement par xylanase et/ou pectinase.

10. Procédé permettant la production d'une composition selon l'une quelconque des revendications 1 à 6, comprenant les étapes de :

(i) préparation d'une composition de pâte comprenant une légumineuse et/ou une céréale à l'exception du riz, du blé et de l'orge, la composition de pâte possédant

(1) une teneur en amidon supérieure ou égale à 8,0 % en masse, en terme de base de masse humide,
(2) une teneur en humidité sur une base de masse sèche supérieure à 40 % en masse,
(3) une teneur en fibres alimentaires supérieure ou égale à 2,0 % en masse en termes de base de masse humide,
(4) une activité enzymatique de digestion d'amidon supérieure ou égale à 0,2 U/g en termes de base de masse sèche, et
(5) selon une distribution de diamètre de particules obtenue en soumettant la composition de pâte au traitement de digestion d'amidon et de protéines défini dans la [Procédure b] ci-dessus suivi de l'ultrasonication, un diamètre de particules $d_{50}$ inférieur à 450 $\mu$m ; et

(ii) le gonflement de la composition de pâte de l'étape (i) par traitement thermique, ladite valeur de l'ASC1 de la composition augmentant de 5 % ou plus et ladite teneur en humidité sur une base de masse sèche, de la composition augmentant de 5 % en masse ou plus durant le traitement thermique,

éventuellement, ladite composition de pâte à l'étape (i) satisfaisant en outre les exigences (6-1) et/ou (6-2) ci-dessous,

(6-1) la ou les exigences (c-1) et/ou (d-1) étant satisfaites,
(c-1) lorsqu'une suspension à 6 % d'un produit broyé de la composition de pâte est observée, le nombre de structures de grains d'amidon étant supérieur ou égal à 40/mm$^2$,
(d-1) lorsque la suspension aqueuse à 14 % en masse d'un produit broyé de la composition de pâte est soumise à une mesure à l'aide d'un visco-analyseur rapide avec élévation de la température de 50°C à 140°C à un taux de 12,5°C/min, ladite température de pointe de gélatinisation étant supérieure à 95°C,
(6-2) la ou les exigences (c-2) et/ou (d-2) étant satisfaites,
(c-2) lorsqu'une suspension à 6 % d'un produit broyé de la composition est observée, ledit nombre de structures de grains d'amidon diminuant de 10/mm$^2$ ou plus durant l'étape (ii),
(d-2) lorsque la suspension aqueuse à 14 % en masse d'un produit broyé de la composition est soumise à une mesure à l'aide d'un visco-analyseur rapide avec élévation de la température de 50°C à 140°C à un taux de 12,5°C/min, ladite température de pointe de gélatinisation diminuant de 5 % ou plus durant l'étape (ii).

11. Procédé selon la revendication 10,

ladite légumineuse et/ou ladite céréale ayant subi un traitement de réchauffement d'une façon telle que la différence de décrémentation de la température de pointe de gélatinisation avant et après le traitement de réchauffement soit inférieure ou égale à 50°C,

éventuellement ladite légumineuse et/ou ladite céréale utilisées dans la composition de pâte à l'étape (i) se présentant sous forme de poudre avec un diamètre de particules $d_{90}$ inférieur à 500 $\mu$m après ultrasons, et éventuellement 30 % ou plus de l'activité enzymatique de digestion de l'amidon de la composition de pâte à l'étape (i) étant dérivée de la légumineuse et/ou de la céréale.

**12.** Procédé selon la revendication 10 ou 11,

ladite valeur d'ASC3 de la composition de pâte à l'étape (i) étant supérieure ou égale à 30 %, éventuellement, ladite valeur d'ASC2 de la composition diminuant de 5 % ou plus par le traitement thermique de l'étape (ii), éventuellement, ledit rapport [ASC2]/[ASC1] diminuant de 10 % ou plus par le traitement thermique de l'étape (ii), éventuellement, ladite porosité totale augmentant de 1 % ou plus par le traitement thermique de l'étape (ii), et éventuellement, ladite absorbance à 660 nm ($ABS_{5,0-6,5}$) augmentant de 0,03 ou plus par le traitement thermique de l'étape (ii).

**13.** Procédé selon l'une quelconque des revendications 10 à 12,

ladite composition de pâte préparée à l'étape (i) comprenant une partie localisée dans des fibres alimentaires de plante comestible,

éventuellement, ladite teneur en partie localisée dans des fibres alimentaires de plante comestible dans la composition de pâte préparée à l'étape (i) étant supérieure ou égale à 0,1 % en masse en termes de base de masse humide,

éventuellement, ladite partie localisée dans des fibres alimentaires de la plante comestible comprenant une peau de graine de légumineuse,

éventuellement, ladite composition de pâte à l'étape (i) comprenant à la fois une partie comestible de légumineuse et une partie localisée dans des fibres alimentaires de légumineuse, et éventuellement, ladite partie localisée par des fibres alimentaires de plante comestible comprenant une peau de graine de psyllium.

**14.** Procédé selon la revendication 13, comprenant en outre la soumission de la partie localisée par des fibres alimentaires de plante comestible à un traitement enzymatique,
éventuellement ledit traitement enzymatique étant un traitement par xylanase et/ou pectinase.

**15.** Procédé selon la revendication 14, comprenant en outre la réalisation du traitement enzymatique à l'étape (i) et/ou à l'étape (ii),
éventuellement, ladite étape (ii) comprenant :

(ii-a) la fermentation à la levure de la composition de pâte de l'étape (i) ; et
(ii-b) la cuisson de la composition fermentée à la levure de l'étape (ii-a).

**16.** Procédé selon l'une quelconque des revendications 10 à 15, ladite étape (ii) comprenant :

(ii-1a) le malaxage de la composition de pâte de l'étape (i) dans des conditions sous pression avec chauffage à une température supérieure à 100°C 1 ; et
(ii-1b) la soumission de la composition malaxée de l'étape (ii-1a) à une pression normale à une température supérieure à 100°C, ou alternativement
ladite étape (ii) comprenant :

(ii-2a) le mélange de la composition de pâte de l'étape (i) avec des bulles d'air et/ou un agent d'expansion ; et
(ii-2b) le chauffage de la composition mélangée de l'étape ii-2a) à une certaine température.

**17.** Légumineuse et/ou céréale destinées à être utilisées dans l'étape (i) du procédé selon l'une quelconque des revendications 10 à 16, qui satisfait la ou les exigences (c-3) et/ou (d-3),

(c-3) lorsqu'une suspension à 6 % d'un produit broyé de la composition de pâte est observée, ledit nombre de structures de grains d'amidon étant supérieur ou égal à 40/mm$^2$,
(d-3) lorsque la suspension aqueuse à 14 % en masse d'un produit broyé de la composition de pâte est mesurée à l'aide d'un visco-analyseur rapide avec élévation de la température de 50°C à 140°C à un taux de 12,5°C/min, ladite température de pointe de gélatinisation étant supérieure à 95°C, éventuellement ladite impulsion et/ou ladite céréale ayant subi un traitement de gélatinisation par réchauffement d'une façon telle que la diminution de ladite température de pointe de gélatinisation soit inférieure ou égale à 50°C.

## REFERENCES CITED IN THE DESCRIPTION

### Patent documents cited in the description

- JP 2008061480 A
- JP 2008099096 A
- JP 2018061480 A
- JP 2018099096 A

### Non-patent literature cited in the description

- *CHEMICAL ABSTRACTS*, 110-54-3
- *CHEMICAL ABSTRACTS*, 67-68-5
- Use of a new adhesive film for the preparation of multipurpose fresh-frozen sections from hard tissues, whole-animals, insects and plants. *Arch. Histol. Cytol.*, 2003, vol. 66 (2), 123-43
- **SHU TAIRA. et al.** Nanoparticle-Assisted Laser Desorption/Ionization Based Mass Imaging with Cellular Resolution. *Anal. Chem.*, 2008, vol. 80, 4761-4766
- *CHEMICAL ABSTRACTS*, 290-37-9